# EUROPÄISCHE PATENTANMELDUNG

(11) **EP 4 796 292 A1**
(43) Veröffentlichungstag der Anmeldung: **26.08.2026**
(21) Anmeldenummer: 25159545.0
(22) Anmeldetag: 23.02.2025
(51) Int. Cl.: B29C 64/141, B22F 12/67, B22F 12/90, B29C 64/214, B29C 64/232, B29C 64/236, B29C 64/241, B29C 64/393, B33Y 10/00, B33Y 30/00, B33Y 50/02

(54) **VORRICHTUNG ZUR HERSTELLUNG VON DREIDIMENSIONALEN SIEBDRUCKWERKSTÜCKEN**

(71) Anmelder: Exentis Knowledge GmbH, 5608 Stetten AG (CH)
(72) Erfinder: REICHENBACH, Michael, 79183 Waldkirch (DE); RUBIN, Roland, 79336 Herbholzheim (DE); CLOOTS, Michael, 9008 St.Gallen (CH); MATTMÜLLER, Mark, 79241 Ihringen (DE); WEINGART, Andreas, 79576 Weil am Rhein (DE)
(74) Vertreter: Wenzel Nemetzade Warthmüller Patentanwälte Part mbB

(57) **Zusammenfassung**

Vorrichtung zur Herstellung von dreidimensionalen Siebdruckwerkstücken, insbesondere 3D-Siebdruckanlage, mit einem Drucksieb und mit einer Rakelvorrichtung (14) zum Fluten des Drucksiebs mit einer Druckmasse und/oder zum Pressen von Druckmasse durch das Drucksieb, wobei die Rakelvorrichtung wenigstens ein Rakelwerkzeug (16) und eine Rakellagerung (34) zur Lagerung des Rakelwerkzeugs aufweist, wobei die Rakellagerung eine Justiereinrichtung (28) zur Ausrichtung des Rakelwerkzeugs aufweist, wobei die Justiereinrichtung zur selbsttätigen Ausrichtung des Rakelwerkzeugs durch eigengewichtsbasierte Auflage des Rakelwerkzeugs auf einem Untergrund ausgebildet ist.

## Beschreibung

Die vorliegende Erfindung betrifft eine Vorrichtung zur Herstellung von Siebdruckwerkstücken, insbesondere von dreidimensionalen Siebdruckwerkstücken. Ferner betrifft die vorliegende Erfindung eine Rakelvorrichtung, insbesondere für eine solche Vorrichtung. Zudem betrifft die vorliegende Erfindung eine Justiereinrichtung für eine Vorrichtung zur Herstellung von dreidimensionalen Siebdruckwerkstücken. Ferner betrifft die Erfindung ein Verfahren zum Ausrichten eines Rakelwerkzeugs einer Vorrichtung zur Herstellung von dreidimensionalen Siebdruckwerkstücken sowie auch ein Verfahren zum Ausrichten eines Drucksiebs einer Vorrichtung zur Herstellung von dreidimensionalen Siebdruckwerkstücken.

Aus dem deutschen Gebrauchsmuster DE 20 2019 101 066 U1 ist eine Vorrichtung zum Bewegen eines Rakels bekannt. Die Vorrichtung weist einen Rakelträger auf, an welchem das Rakel angeordnet ist. Der Rakelträger ist um eine Schwenkachse schwenkbar mit einer Rakelversatzplatte der Vorrichtung verbunden. Die Schwenkachse ist dabei senkrecht zur Längsrichtung und im Wesentlichen parallel zu einer Rakelbewegungsrichtung des Rakels während eines Rakelvorgangs ausgerichtet. Wirkt eine Kraft auf das Rakel, läuft diese von dem Rakel über die Schwenkachse hin zur Rakelversatzplatte, wodurch das Rakel bei Kontakt mit einem Untergrund relativ zu diesem ausgerichtet werden kann.

Zwischen dem Rakel und der Rakelversatzplatte beziehungsweise an der Schwenkachse ist eine Kraftmesszelle angeordnet, um eine Zug- sowie eine Druckkraft und somit eine Anpresskraft der Rakel auf ein Siebdruckgewebe zu messen. Mittels der Kraftmesszelle kann eine auf das Rakel und damit auch auf die Schwenkachse wirkende Kraft erfasst werden. Die hierdurch gewonnen Informationen haben jedoch eine nur begrenzte Aussagekraft. Trotz einer solchen Kraftmessung kann es während der Durchführung von Druckvorgängen beziehungsweise Rakelbewegungen zu unzureichenden Druckergebnissen beziehungsweise auch zu Beschädigungen des Drucksiebs und/oder der jeweiligen Siebdruckwerkstücke und/oder des jeweiligen Rakels kommen. Bei ungünstigen Rakelbewegungen beziehungsweise bei wiederholt ungünstiger Kontaktierung des Drucksiebs durch das Rakel kann sich auch ein hoher Verschleiß der jeweiligen Vorrichtungskomponenten einstellen, insbesondere des Drucksiebs. Trotz der Schwenkachse zwischen dem Rakelträger und der Rakelversatzplatte kann es mithin zu einer ungünstigen Ausrichtung des Rakels beziehungsweise einer unvorteilhaften Kontaktierung des Drucksiebs durch das Rakel kommen.

Eine ungünstige Ausrichtung des Rakels relativ zu einem Siebdruckwerkstück oder einem Werkstückträger und/oder relativ zu einem Drucksieb kann ferner zu einem ungleichmäßigen Schichtaufbau und/oder zur Ausbildung ungleichmäßiger und/oder nicht parallel zueinander ausgerichteter Schichten führen.

Vor dem oben dargelegten Hintergrund bestand die Aufgabe der vorliegenden Erfindung darin, eine Vorrichtung zur Herstellung von dreidimensionalen Siebdruckwerkstücken anzugeben, die eine erhöhte Druckqualität bei einer hohen Betriebssicherheit sicherstellt und gleichzeitig eine verbesserte Überwachung und Einstellbarkeit von Druck- und/oder Rakelprozessen gewährleistet.

In Bezug auf die Vorrichtung ist diese Aufgabe durch den Gegenstand des Anspruchs 1 gelöst worden. Ebenso ist diese Aufgabe durch die Gegenstände der Ansprüche 114, 119 und 120 gelöst worden. Eine erfindungsgemäße Rakelvorrichtung ist in den Ansprüchen 121, 122 und 123 angegeben. Eine erfindungsgemäße Justiereinrichtung ist in Anspruch 126 angegeben. In Bezug auf das Verfahren ist die Aufgabe jeweils durch den Gegenstand des Anspruchs 127, 128, 129 sowie auch 143 gelöst worden. Vorteilhafte Ausgestaltungen sind Gegenstand der abhängigen Ansprüche und werden nachfolgend erläutert.

Erfindungsgemäß ist eine Vorrichtung zur Herstellung von dreidimensionalen Siebdruckwerkstücken vorgesehen. Bei einer derartigen Vorrichtung kann es sich beispielsweise um eine 3D-Siebdruckanlage, bevorzugt um eine automatisierte 3D-Siebdruckanlage, handeln.

Die erfindungsgemäße Vorrichtung ist mit einem Drucksieb und mit einer Rakelvorrichtung zum Fluten des Drucksiebs mit einer Druckmasse und/oder zum Pressen von Druckmasse durch das Drucksieb ausgestattet. Dabei weist die Rakelvorrichtung wenigstens ein Rakelwerkzeug und eine Rakellagerung zur Lagerung des Rakelwerkzeugs auf. Die Rakellagerung weist eine Justiereinrichtung zur Ausrichtung des Rakelwerkzeugs auf. Die Justiereinrichtung ist zur selbsttätigen Ausrichtung des Rakelwerkzeugs durch eigengewichtsbasierte Auflage des Rakelwerk-zeugs auf einem Untergrund ausgebildet.

Mithilfe der Justiereinrichtung kann das Rakelwerkzeug relativ zu einem Untergrund ausgerichtet werden. Durch die Ausrichtung des Rakelwerkzeugs kann gleichzeitig die Kraftverteilung, mit welcher das Rakelwerkzeug zum Beispiel entlang seiner Aufstandslinie oder beispielsweise entlang der Längserstreckung auf das Drucksieb oder auf den Drucktisch einwirkt, eingestellt werden. Somit kann mithilfe einer erfindungsgemäßen Justiereinrichtung eine gleichmäßige beziehungsweise angepasste auf das Drucksieb und/oder die jeweilige Druckunterlage einwirkende Kraftverteilung erreicht werden.

Einer gegebenenfalls ungünstigen Zentrierung des Rakelwerkzeugs kann durch eine Justierung damit zuvorgekommen werden. Insbesondere kann mittels der Ausrichtung ein Auftragen von gleichmäßigen, parallel zueinander angeordneten Schichten sichergestellt werden. Die Herstellung von hochpräzisen Siebdruckwerkstücken kann auf diese Weise sichergestellt werden. Gleichzeitig kann die Qualität von Siebdruckwerkstücken in besonderem Maße erhöht werden.

Fernern kann die Ausrichtung selbsttätig und/oder vollautomatisch, insbesondere ohne manuelle Schritte nach dem Einleiten eines Ausrichtvorgangs, erfolgen. Die Ausrichtung des Rakelwerkzeugs kann durch eine eigengewichtsbasierte Auflage auf einem Untergrund erfolgen.

Somit ist es möglich, das Rakelwerkzeug - abgesehen vom jeweiligen Untergrund - unabhängig von anderen Baugruppen und/oder aktiven Stelleinrichtungen, wie beispielsweise Motoren und/oder Aktoren, in einfacher, schneller und automatischer beziehungsweise selbsttätiger Weise auszurichten. Eine Ausrichtung des Rakelwerkzeugs kann hierdurch auf besonders schnelle und sichere sowie gleichzeitig präzise Weise mit einem besonders geringen Handhabungsaufwand vorgenommen werden.

Ungenauigkeiten aufgrund von Antrieben lassen sich durch eine eigengewichtsbasierte Auflage auf einem Untergrund zudem vermeiden. Die Selbsttätigkeit in der eigengewichtsbasierten Auflage erlaubt insbesondere eine besonders genaue Einstellung ohne Messungen oder messungsbasierten Stellvorgängen.

Die Angabe eigengewichtsbasiert beziehungsweise eigengewichtsbasierte Auflage kann vorliegend insbesondere das Eigengewicht des Rakelwerkzeugs und/oder das Eigengewicht des Rakelwerkzeugs beziehungsweise des Rakelwerkzeugs und der mit dem Rakelwerkzeug fest beziehungsweise unbeweglich verbundenen Komponenten oder Baugruppen betreffen. Es kann sich beispielsweise um ein Eigengewicht des Rakelwerkzeugs und einer mit dem Rakelwerkzeug fest verbundenen Tragstruktur - wie nachfolgend noch näher beschrieben wird - handeln.

Eine Ausrichtung durch eigengewichtsbasierte Auflage auf einem Untergrund kann vorliegend ferner so verstanden werden, dass die zur Ausrichtung aufgebrachten und auf das Rakelwerkzeug wirkenden Stellkräfte zumindest teilweise und/oder nur teilweise und/oder ausschließlich und/oder maximal durch das jeweilige Eigengewicht des Rakelwerkzeugs beziehungsweise des Rakelwerkzeugs und der mit dem Rakelwerkzeug fest beziehungsweise unbeweglich verbundenen Komponenten oder Baugruppen erzeugt werden. Die Justiereinrichtung kann mithin zur selbsttätigen Ausrichtung des Rakelwerkzeugs zumindest teilweise und/oder ausschließlich und/oder maximal durch eigengewichtsbasierte Auflage des Rakelwerkzeugs auf einem Untergrund ausgebildet sein.

Ebenso ist es möglich, dass bei einer Ausrichtung durch eigengewichtsbasierte Auflage auf einem Untergrund zusätzlich zum jeweiligen Eigengewicht des Rakelwerkzeugs beziehungsweise des Rakelwerkzeugs und der mit dem Rakelwerkzeug fest beziehungsweise unbeweglich verbundenen Komponenten oder Baugruppen die jeweils zur Ausrichtung aufgebrachten und auf das Rakelwerkzeug wirkenden Stellkräfte durch Federkräfte überlagert werden, insbesondere durch Federkräfte, die dem jeweiligen Eigengewicht entgegenwirken und/oder in Richtung des Eigengewichtskraft wirken. Die Justiereinrichtung kann mithin zur selbsttätigen Ausrichtung des Rakelwerkzeugs durch eigengewichtsbasierte Auflage des Rakelwerkzeugs auf einem Untergrund bei Überlagerung mit Federkräften, insbesondere mit Federkräften, die dem jeweiligen Eigengewicht entgegenwirken und/oder in Richtung der Eigengewichtskraft wirken, ausgebildet sein.

Eine Ausrichtung durch eigengewichtsbasierte Auflage auf einem Untergrund kann vorliegend ferner so verstanden werden, dass die zur Ausrichtung aufgebrachten und auf das Rakelwerkzeug wirkenden Stellkräfte frei von auf das Rakelwerkzeug wirkenden Federkräften erzeugt werden. Die Justiereinrichtung kann mithin zur selbsttätigen Ausrichtung des Rakelwerkzeugs durch eigengewichtsbasierte Auflage des Rakelwerkzeugs auf einem Untergrund, frei von auf das Rakelwerkzeug wirkenden Federkräften, ausgebildet sein.

Unter dreidimensionalem Siebdruck kann vorliegend in besonders bevorzugter Weise ein additives Fertigungsverfahren verstanden werden, bei dem eine pulverbasierte Suspension mithilfe eines Rakels durch eine feste Druckmaske beziehungsweise ein Drucksieb auf ein Substrat, wie zum Beispiel auf einen Drucktisch oder auf einen Werkstückträger oder eine vorher aufgebrachte Schicht eines Siebdruckwerkstücks übertragen und getrocknet wird. Diese Vorgehensweise kann mehrmals wiederholt werden, bis die jeweils gewünschte Bauteilhöhe oder Bauteilform erreicht wird. Insbesondere können bei dreidimensionalem Siebdruck mindestens zwei oder mindestens drei Druckschichten aufeinander erzeugt werden. **In** einem abschließenden Prozessschritt kann das so erzeugte Bauteil gesintert werden. Hierdurch kann ein Siebdruckwerkstück entstehen.

Ebenso kann unter dreidimensionalem Siebdruck vorliegend in besonders bevorzugter Weise ein additives Fertigungsverfahren verstanden werden, bei dem eine pulverbasierte Suspension mithilfe eines Rakels durch eine feste Druckmaske beziehungsweise ein Drucksieb auf ein Substrat übertragen und getrocknet wird, wobei bereits durch einen einmaligen Druck die jeweils gewünschte Bauteilhöhe oder Bauteilform erreicht wird. **In** einem abschließenden Prozessschritt kann ein auf diese Weise erzeugtes Bauteil gesintert werden und ein Siebdruckwerkstück entstehen. Soweit vorliegend von mehreren Druckvorgängen die Rede ist, kann anstelle dessen bereits ein Druckvorgang ausreichend und geeignet sein.

Unter Siebdruckwerkstück kann vorliegend in bevorzugter Weise ein Werkstück beziehungsweise ein dreidimensionales Druckerzeugnis verstanden werden, das einem Sinterschritt zu unterziehen ist beziehungsweise unterzogen worden ist. Dies betrifft insbesondere Siebdruckwerkstücke aus einem Metall, einer Keramik, einem Glasmaterial und/oder einem Kunststoffmaterial. Insbesondere kommen hierzu Legierungen aus Stahl, Nickel, Kupfer, Titan und/oder Keramiklegierungen in Betracht.

Druckerzeugnisse aus Kunststoffmaterialien können durch die Bezeichnung "dreidimensionales Siebdruckwerkstück" ausgeschlossen oder mitumfasst sein. Insbesondere besteht auch die Möglichkeit, gedruckte Werkstücklagen aus Kunststoffmaterial einem Sinterschritt zu unterziehen.

Unter Siebdruckwerkstück kann vorliegend ebenfalls ein Werkstück beziehungsweise ein dreidimensionales Druckerzeugnis verstanden werden, das frei von einem Sinterschritt hergestellt worden ist beziehungsweise frei von einem Sinterschritt fertigstellbar ist oder fertiggestellt wird. Mithin kann eine abschließende Aushärtung von Druckschichten auch frei von Sinterschritten erfolgen. Die Aushärtung eines Siebdruckwerkstücks kann in vorteilhafter Weise auch durch UV-Härtung und/oder durch eine Polymerisationsreaktion und/oder durch Trocknung, insbesondere durch Konvektionstrocknung, erfolgen. Eine derartige Aushärtung kann insbesondere dann bevorzugt vorgenommen werden, wenn eine abschließende Aushärtung von Druckschichten frei von Sinterschritten erfolgen soll.

Unter Siebdruckwerkstück kann vorliegend zusätzlich oder alternativ ein Werkstück beziehungsweise ein dreidimensionales Druckerzeugnis verstanden werden, dass vollständig durch dreidimensionalen Siebdruck erzeugt worden ist.

Unter Siebdruckwerkstück kann vorliegend ebenso ein Werkstück beziehungsweise ein dreidimensionales Druckerzeugnis verstanden werden, dass zumindest teilweise oder abschnittsweise durch dreidimensionalen Siebdruck erzeugt worden ist. Mithin kann ein Siebdruckwerkstück durch Auftragen mindestens einer Druckschicht oder auch einer Mehrzahl von Druckschichten auf ein anderweitig bereitgestelltes Substrat erzeugt werden, wobei das Substrat einen Teil des fertigen Werkstücks bildet.

Bei einem Siebdruckwerkstück im Sinne der vorliegenden Erfindung kann es sich ferner um ein pharmazeutisches Erzeugnis und/oder um ein biologisches Erzeugnis und/oder ein optoelektronisches Erzeugnis handeln. Solche Siebdruckwerkstücke können unter anderem aus pharmazeutischen Pulvermaterialien und/oder Pulvergemischen und/oder Granulaten und/oder aus biologischen Materialien und/oder Halbmetallen hergestellt sein. Insbesondere können pharmazeutische Erzeugnisse und/oder biologische Erzeugnisse frei von Sinterschritten fertiggestellt beziehungsweise für die jeweilige Anwendung ausreichend ausgehärtet werden.

Siebdruckwerkstücke hergestellt aus pharmazeutischen Pulvermaterialien und/oder Pulvergemischen und/oder Granulaten können Arzneistoffe, Wirkstoffe, Hilfsstoffe, insbesondere Füllmittel und/oder Bindemittel und/oder Sprengmittel und/oder Gleitmittel, aufweisen.

Gemäß einer bevorzugten Ausgestaltung der vorliegenden Erfindung kann die Vorrichtung zur Herstellung von dreidimensionalen Siebdruckwerkstücken für die Produktion unter Reinraumbedingungen ausgebildet und/oder eingerichtet sein. Insbesondere kann die Vorrichtung für die Produktion unter Reinraumbedingungen gemäß Reinraumklassen den A, B, C und/oder D nach EU-GMP ausgebildet und/oder eingerichtet sein.

Weiter bevorzugt kann eine erfindungsgemäße Vorrichtung zur Herstellung von dreidimensionalen Siebdruckwerkstücken für die Anwendung in der Medizintechnik, in der Optik- und/oder Lasertechnologie, in der Luft- und Raumfahrtechnik, in der Halbleitertechnik, in der Biotechnologie und/oder in der medizinischen und/oder in der pharmakologischen und/oder in der optoelektronisches Forschung ausgebildet und/oder eingerichtet sein.

Ebenso kann die erfindungsgemäße Vorrichtung zur Herstellung von dreidimensionalen Siebdruckwerkstücken für den Einsatz und/die Anwendung als medizinische und/oder pharmazeutische und/oder optoelektronisches Produkte, Implantate und/oder sterile Produkte und/oder Medikamente und/oder für den Einsatz und/die Anwendung als Tabletten zur Wirkstoffverabreichung ausgebildet und/oder eingerichtet sein.

Bei einem Siebdruckwerkstück kann es sich gemäß der vorliegenden Erfindung um ein Werkstück handeln, das durch dreidimensionalen Siebdruck in einem oder in mehreren Druckvorgängen auf einem Werkstückträger aufgebaut wird. Dabei handelt es sich bei dem Siebdruckwerkstück insbesondere um ein Werkstück, welches nach Abschluss des Druckvorgangs und/oder nach Abschluss eines sich an den Druckvorgang anschließenden Sintervorgangs wieder von dem jeweiligen Werkstückträger lösbar ist, insbesondere zerstörungsfrei lösbar ist.

Zwischen etwaigen Druckvorgängen für ein Siebdruckwerkstück kann der jeweilige Werkstückträger von dem Drucktisch beziehungsweise von der Drucktischplatte gelöst werden beziehungsweise von dieser lösbar sein. Die einzelnen Schichten eines Siebdruckwerkstücks - bei mehrschichtigem Aufbau - können zwischen zwei aufeinanderfolgenden Druckvorgängen in einer von dem Drucktisch beziehungsweise von der Drucktischplatte entfernten Stellung getrocknet werden.

Gemäß einer bevorzugten Ausgestaltung kann die Vorrichtung zur Herstellung von dreidimensionalen Siebdruckwerkstücken eine zumindest das Drucksieb und/oder die Rakelvorrichtung aufweisende Druckeinrichtung für die schichtweise Erzeugung zumindest eines Siebdruckwerkstücks in mehreren Siebdruckvorgängen aufweisen. Ergänzend oder alternativ kann die Vorrichtung zur Herstellung von dreidimensionalen Siebdruckwerkstücken eine zumindest das Drucksieb und/oder die Rakelvorrichtung aufweisende Druckeinrichtung für den Schichtauftrag auf ein Werkstück in zumindest einem Siebdruckvorgang aufweisen. Mithilfe der Druckeinrichtung ist also ein Siebdruckwerkstück erzeugbar, nämlich auf besonders zuverlässige Weise und mit hoher Produktivität. Bei einem solchen Siebdruckwerkstück kann es sich beispielsweise um ein Bauteil aus dem Fahrzeugbau oder um personalisierte Medikamente, in Form von Tabletten, handeln.

Dabei kann die Druckeinrichtung zumindest einen Drucktisch für die Positionierung eines Werkstückträgers und/oder eines Werkstücks unterhalb des Drucksiebs und/oder unterhalb der Rakelvorrichtung aufweisen. Dies gewährleistet in vorteilhafter Weise eine sichere und stabile Positionierung des jeweiligen Werkstückträgers und/oder des jeweiligen Werkstücks und ermöglicht damit einen sicheren und präzisen Druckprozess.

Weiter bevorzugt kann die Justiereinrichtung zur selbsttätigen Ausrichtung des Rakelwerkzeugs in Bezug auf wenigstens zwei Freiheitsgerade ausgebildet sein. Hierdurch kann in vorteilhafter Weise eine besonders sichere und weiter präzisierte Ausrichtung des Rakelwerkzeugs zur Sicherstellung von gleichmäßig aufgebrachten Schichten gewährleistet werden.

Gemäß einer bevorzugten Ausgestaltung weist die Justiereinrichtung eine Luftlagereinrichtung auf, die in einem Luftlagerbetrieb eine Ausrichtung des Rakelwerkzeugs erlaubt. Insbesondere erlaubt die Luftlagereinrichtung eine selbsttätige Ausrichtung und/oder eine Ausrichtung durch eigengewichtsbasierte Auflage des Rakelwerkzeugs auf einem Untergrund mit nur geringem Aufwand. Die Luftlagereinrichtung ermöglicht aufgrund der reibungsarmen und/oder reibungsfreien Verstellbarkeit eine sehr genaue Positionierung und/oder Ausrichtung des Rakelwerkzeugs bei besonders geringem Kraftaufwand und Verschleiß.

Die Justiereinrichtung weist vorzugsweise eine Luftlagereinrichtung auf, die in einem Luftlagerbetrieb eine Neigungsjustierung des Rakelwerkzeugs um eine Neigungsachse erlaubt. Im Ergebnis kann die Justiereinrichtung in der Lage sein, die Rakelunterkante entlang seiner Längserstreckung relativ zum Drucksieb und/oder relativ zu einem Drucktisch und/oder relativ zu einer Horizontalebene auszurichten beziehungsweise zu neigen und hierdurch kann gezielt Einfluss auf die daraus resultierenden Prozessparameter genommen werden. Insbesondere kann eine gleichmäßige oder auch ungleichmäßige Kraftverteilung zwischen der Rakelunterkante und dem Drucksieb und/oder der jeweiligen Druckunterlagen entlang der Werkzeuglängsachse erreicht werden. Folglich kann die Qualität der zu erstellenden Siebdrucke mit weiter erhöhter Sicherheit verbessert werden. Es können hierdurch auch gezielt Anpassungen beziehungsweise Einstellungen der Rakelvorrichtung im Hinblick auf den jeweils vorliegenden Verschleiß des Drucksiebs vorgenommen werden.

Ferner kann die Justiereinrichtung und/oder die Luftlagereinrichtung zur Neigungsjustierung einer entlang der Längserstreckung des Rakelwerkzeugs verlaufenden Werkzeuglängsachse relativ zum Drucksieb und/oder relativ zu einem Drucktisch und/oder relativ zu einer Horizontalebene ausgebildet sein. Hierdurch kann das Rakelwerkzeug besonders günstig für nachfolgende Rakelprozesse eingestellt und eine gleichmäßige Kraftverteilung zwischen der jeweiligen Rakelunterkante und dem Drucksieb und/oder der jeweiligen Druckunterlagen erreicht werden.

Weiterhin kann die Justiereinrichtung und/oder die Luftlagereinrichtung zur Neigungsjustierung einer Rakelunterkante relativ zum Drucksieb und/oder relativ zu einem Drucktisch und/oder relativ zu einer Horizontalebene ausgebildet sein. Im Ergebnis kann die Luftlagereinrichtung in der Lage sein, die Rakelunterkante entlang seiner Längserstreckung relativ zum Drucksieb und/oder relativ zu einem Drucktisch und/oder relativ zu einer Horizontalebene auszurichten beziehungsweise zu neigen und hierdurch kann gezielt Einfluss auf die daraus resultierenden Prozessparameter genommen werden. Insbesondere kann eine gleichmäßige Kraftverteilung zwischen der Rakelunterkante und dem Drucksieb und/oder der jeweiligen Druckunterlagen entlang der Werkzeuglängsachse erreicht werden. Folglich kann die Qualität der zu erstellenden Siebdrucke mit weiter erhöhter Sicherheit verbessert werden. Es können hierdurch auch gezielt Anpassungen beziehungsweise Einstellungen der Rakelvorrichtung im Hinblick auf den jeweils vorliegenden Verschleiß des Drucksiebs vorgenommen werden.

Ferner kann die Justiereinrichtung und/oder die Luftlagereinrichtung zur Neigungsjustierung des Rakelwerkzeugs um eine Neigungsachse ausgebildet sein. Hierbei kann sich die Neigungsachse entlang einer Rakelbewegungsrichtung und/oder unter einem, insbesondere senkrechten, Winkel zu einer durch eine Rakelunterkante verlaufende Vertikalebene erstrecken. Diese Ausbildung erlaubt es in vorteilhafter Weise, zwischen dem Rakelwerkzeug und einem Drucksieb beziehungsweise der jeweiligen Druckunterlage entlang der gesamten Länge des Rakelwerkzeugs eine konstante Kraft sicherzustellen oder - je nach gewünschter Prozessführung - auch ungleiche Kräfte beziehungsweise entlang der Länge des Rakelwerkzeugs konstant zunehmende oder konstant abnehmende Kräfte zu erzeugen. Verschleißbedingte Ungenauigkeiten oder Abweichungen der Siebspannungen entlang des Drucklayouts lassen sich hierdurch gezielt ausgleichen.

Des Weiteren kann die Luftlagereinrichtung zumindest eine Luftdüse oder mehrere Luftdüsen zur Ausbildung eines reibungsfreien Luftlagers des Rakelwerkzeugs im Luftlagerbetrieb aufweisen. Das Rakelwerkzeug kann somit in besonders genauer Weise verschleißarm ausgerichtet werden. Aufgrund des ausgebildeten Luftlagers ist eine genaue Ausrichtung des Rakelwerkzeugs mit besonders geringen Kräften beziehungsweise geringer oder keiner Haftreibung möglich, wodurch der Handhabungsaufwand und/oder Verschleiß der jeweiligen Komponenten verringert werden kann und gleichzeitig eine hohe Einstellpräzision erreicht werden kann.

Darüber hinaus kann die Luftlagereinrichtung in einem Reiblagerbetrieb ein kraftschlüssiges Fixieren des Rakelwerkzeugs relativ zur Neigungsachse erlauben. Das Rakelwerkzeug kann somit zuverlässig in einer ausgerichteten Position fixiert werden. Unter dem Begriff fixiert beziehungsweise Fixierung kann vorliegend das Festhalten des Rakelwerkzeugs in einer, insbesondere relativen, Position oder Lage zu verstehen sein. Das Rakelwerkzeug ist dann insbesondere relativ zur Neigungsachse fixiert und somit um die Neigungsachse unverstellbar.

Des Weiteren kann die Rakelvorrichtung eine Justierhalterung und eine mit der Justierhalterung gekoppelte und/oder koppelbare Tragstruktur aufweisen. Dabei kann die Relativposition der Tragstruktur zur Justierhalterung und/oder die Relativausrichtung zwischen der Justierhalterung und der Tragstruktur mittels der Luftlagereinrichtung veränderbar sein. Das Rakelwerkzeug kann an der Tragstruktur angeordnet oder befestigt sein. Somit kann also die Justiereinrichtung ermöglichen, die relative Position und/oder die relative Ausrichtung zwischen der Justierhalterung und der Tragstruktur einzustellen.

Bei der Justierhalterung kann es sich insbesondere um eine Druckrakelaufnahme handeln, insbesondere um eine Druckrakelaufnahme zur Aufnahme der Rakelvorrichtung beziehungsweise einer Tragstruktur der Rakelvorrichtung.

Gemäß einer weiter bevorzugten Ausgestaltung kann die Rakellagerung pendellagerfrei und/oder achslagerfrei ausgebildet sein. Mithin kann das Rakelwerkzeug pendellagerfrei und/oder achslagerfrei gelagert sein. Auf diese Weise ergibt sich, insbesondere in einem Luftlagerbetrieb und/oder in unfixierter Stellung des Rakelwerkzeugs, eine besonders freie Beweglichkeit des Rakelwerkzeugs. Es kann auf diese Weise eine besonders gute Ausrichtung mit nur geringen oder keinen geometrischen Restriktionen der Ausrichtbewegung bewerkstelligt werden. Insbesondere kann das Rakelwerkzeug über die Tragstruktur pendellagerfrei und/oder achslagerfrei an der Justierhalterung gelagert sein. Die zwischen der Justierhalterung und der Tragstruktur ausgebildete Rakellagerung kann mithin pendellagerfrei und/oder achslagerfrei ausgebildet sein.

Des Weiteren kann die Rakellagerung zwischen der Justierhalterung und der Tragstruktur ausgebildet sein. Somit kann also die Justierhalterung über die Rakellagerung an der Tragstruktur angeordnet beziehungsweise mit dieser gekoppelt sein. Alternativ oder ergänzend kann die Luftlagereinrichtung zwischen der Justierhalterung und der Tragstruktur ausgebildet sein. Alternativ oder ergänzend kann die Luftlagereinrichtung zur Ausbildung eines Luftlagers zwischen der Justierhalterung und der Tragstruktur ausgebildet sein. Die Luftlagereinrichtung kann somit eine Luftlagerung zwischen der Justierhalterung und der Tragstruktur zur einfachen und verschleißfreien Ausrichtung des Rakelwerkzeugs ausbilden. Hierdurch kann die Ausrichtung des Rakelwerkzeugs durch eine Relativbewegung zwischen der Justierhalterung und der Tragstruktur erfolgen.

Vorzugsweise ist die Luftlagereinrichtung und/oder die zumindest eine Luftdüse der Luftlagereinrichtung an der Justierhalterung angeordnet. Alternativ oder ergänzend steht die Luftlagereinrichtung und/oder die zumindest eine Luftdüse der Luftlagereinrichtung in Wirkkontakt mit der Tragstruktur und/oder ist in Wirkkontakt mit der Tragstruktur bringbar. Alternativ oder ergänzend kann die Luftlagereinrichtung eine Relativbewegung zwischen der Justierhalterung und der Tragstruktur erlauben, insbesondere in einem Luftlagerbetrieb. Auf diese Weise kann eine reibungsfreie und verschleißarme Bewegung zwischen der Justierhalterung und der Tragstruktur zur Ausrichtung des Rakelwerkzeugs sichergestellt werden.

Gemäß einer bevorzugten Ausgestaltung kann die Rakelvorrichtung und/oder die Rakellagerung und/oder die Justiereinrichtung und/oder die Luftlagereinrichtung einen Permanentmagneten oder eine Mehrzahl an Permanentmagneten zum magnetischen Halten des Rakelwerkzeugs und/oder der Tragstruktur aufweisen.

Unter dem Begriff "Halten" kann vorliegend das Aufnehmen eines Anteils der Gewichtskraft des Rakelwerkzeugs zu verstehen sein, wobei gleichzeitig eine Verstellbarkeit des Rakelwerkzeugs sichergestellt sein kann. Durch ein "Halten" kann zusätzlich oder alternativ die Aufbringung einer Anziehungskraft zu verstehen sein, die einer durch das Luftlager im Luftlagerbetrieb erzeugten Abstoßkraft entgegenwirkt. Der wenigstens eine Permanentmagnet kann somit dazu ausgebildet sein, die Gewichtskraft des Rakelwerkzeugs zumindest teilweise aufzunehmen, wobei eine Verstellbarkeit, insbesondere eine Ausrichtung, des Rakelwerkzeugs ermöglicht beziehungsweise sichergestellt ist.

Zusätzlich oder alternativ kann durch einen Permanentmagneten vermieden werden, dass im Luftlagerbetrieb des Luftlagers eine zu starke Entfernung der Lagerpartner erfolgt oder sich der Luftlagerspalt zu stark vergrößert.

Der wenigstens eine Permanentmagnet erzeugt vorzugsweise eine Vorspannung der Tragstruktur gegen die Justierhalterung und/oder gegen die an der Justierhalterung angeordnete Luftlagereinrichtung beziehungsweise eine Magnetkraft zwischen der Tragstruktur und der Justierhalterung und/oder zwischen der Tragstruktur und der an der Justierhalterung angeordneten Luftlagereinrichtung, insbesondere entlang einer Rakelbewegungsrichtung. Mittels der Vorspannung beziehungsweise Magnetkraft kann eine unkontrollierte und/oder ungewollte Relativbewegung zwischen der Tragstruktur und der Justierhalterung zuverlässig verhindert werden. Insbesondere kann ein ungewolltes Lösen der Tragstruktur von der Justierhalterung durch die Vorspannung beziehungsweise Magnetkraft des wenigstens einen Permanentmagnets verhindert werden, wodurch die Betriebssicherheit erhöht werden kann. Insbesondere kann ein unerwünschtes Wegkippen der Tragstruktur auf diese Weise sicher verhindert werden.

Des Weiteren kann der wenigstens eine Permanentmagnet mit der Luftlagereinrichtung in einem Luftlagerbetrieb zur Erzeugung und/oder Aufrechterhaltung eines Luftlagers zwischen der Tragstruktur und der Justierhalterung ausgebildet sein. Der Permanentmagnet kann dann die Kraft zum Halten der Tragstruktur bereitstellen, wobei gleichzeitig eine relative Verstellbarkeit zwischen der Tragstruktur und der Justierhalterung bei geringem Kraftaufwand sichergestellt ist. Durch einen Permanentmagneten kann im Luftlagerbetrieb demnach bevorzugt die Einhaltung eines Luftlagerspalts sichergestellt und/oder begünstigt werden.

Im Luftlagerbetrieb können insbesondere die Magnetkräfte des Permanentmagneten oder der Permanentmagneten mit dem Luftdruck im Luftlagerspalt beziehungsweise dem Luftdruck, der an Projektionsflächen der Luftdüsen anliegt, im Gleichgewicht stehen.

Gemäß einer noch weiter bevorzugten Ausgestaltung kann die Rakelvorrichtung und/oder die Rakellagerung und/oder die Justiereinrichtung zumindest eine Fixiereinrichtung zur Fixierung einer justierten Neigungslage des Rakelwerkzeugs aufweisen, insbesondere einer über die Justiereinrichtung und/oder Luftlagereinrichtung justierten Neigungslage des Rakelwerkzeugs. Hierdurch ist die Neigungslage des Rakelwerkzeugs, die mithilfe der Justiereinrichtung vorab eingestellt beziehungsweise justiert werden kann, auf einfache und sichere Weise fixierbar. Eine fein eingestellte Neigungsjustierlage für den Betrieb der Vorrichtung kann mithin fixiert werden, so dass nach erfolgter Einstellung eine Veränderung der räumlichen Lage des Rakelwerkzeugs beziehungsweise der Rakelvorrichtung effektiv verhindert werden kann, wodurch im Ergebnis eine hohe Druckqualität der Schichten zueinander sichergestellt werden kann.

Vorzugsweise ist die Fixiereinrichtung zur schraubenlosen und/oder kraftschlüssigen Fixierung des Rakelwerkzeugs in seiner ausgerichteten Position ausgebildet. Auf diese Weise kann eine schnelle, zuverlässige und flexible Fixierung des Rakelwerkzeugs erfolgen.

Des Weiteren kann die zumindest eine Fixiereinrichtung zur Fixierung der Relativposition und/oder Relativausrichtung zwischen der Justierhalterung und der Tragstruktur ausgebildet sein. Somit kann eine relative Bewegung zwischen der Justierhalterung und der Tragstruktur beispielsweise mittels der Fixiereinrichtung verhindert werden, insbesondere nachdem eine Einstellung der relativen Position der Tragstruktur zur Justiereinrichtung vorgenommen worden ist.

Des Weiteren kann die Fixiereinrichtung einen Elektromagneten oder eine Mehrzahl von Elektromagneten zum magnetischen Fixieren des Rakelwerkzeugs in einer Arbeitsposition aufweisen, insbesondere in einer über die Justiereinrichtung und/oder Luftlagereinrichtung justierten Arbeitsposition des Rakelwerkzeugs. Mittels des Elektromagneten kann somit das Rakelwerkzeug, insbesondere in einer Arbeitsposition, in besonders zuverlässiger Weise und mit nur geringem Aufwand fixiert werden. Elektromagneten erlauben eine besonders präzise Ansteuerung und Anpassung der erzeugten Magnetkraft mit nur geringem Bedienaufwand.

Des Weiteren kann der zumindest eine Elektromagnet und/oder der zumindest eine Permanentmagnet an der Justierhalterung und/oder an der Tragstruktur angeordnet oder dieser zugeordnet sein. Bevorzugt ist der zumindest eine Elektromagnet und/oder der zumindest eine Permanentmagnet vorzugsweise an der Justierhalterung angeordnet oder dieser zugeordnet und die Tragstruktur ist ferromagnetisch ausgebildet. Der Elektromagnet und/oder der zumindest eine Permanentmagnet wirken dann in vorteilhafter Weise derart mit der ferromagnetisch ausgebildeten Tragstruktur zusammen, dass eine Kraft zwischen dem Elektromagneten und/oder dem zumindest einen Permanentmagneten und der Tragstruktur wirkt beziehungsweise wirken kann.

Bevorzugt ist der wenigstens eine Elektromagnet zumindest abschnittweise von einer Luftdüse umgeben. Beim Einschalten des Elektromagneten und/oder Ausschalten der Luftdüse kann hierdurch eine Relativverschiebung zwischen der Justierhalterung und der Tragstruktur mit hoher Sicherheit verhindert werden. Eine solche Ausgestaltung begünstigt zudem eine platzsparende Ausgestaltung der Komponenten, insbesondere der Justierhaltung.

Zusätzlich oder alternativ kann die Fixiereinrichtung zumindest eine mechanische und/oder pneumatische und/oder hydraulische Klemmvorrichtung zum Fixieren des Rakelwerkzeugs und/oder der Tragstruktur in einer Arbeitsposition aufweisen, insbesondere in einer über die Justiereinrichtung und/oder Luftlagereinrichtung justierten Arbeitsposition des Rakelwerkzeugs. Die Klemmvorrichtung kann somit das Rakelwerkzeug in zuverlässiger Weise und mit nur geringem konstruktiven Aufwand in der Arbeitsposition fixieren.

Ferner kann die Rakelvorrichtung und/oder die Rakellagerung zumindest eine Langlochführung oder Langlochstruktur aufweisen, wobei die Langlochführung oder Langlochstruktur bevorzugt spielbehaftet sein kann. Somit kann die relative Bewegung zweier Bauteile, die durch die Justiereinrichtung beziehungsweise Luftlagerung zueinander bewegbar sind, auf einfache Weise ermöglicht werden. Durch eine solche spielbehaftete Langlochführung oder Langlochstruktur kann ein Bewegungsspielraum entlang mehrerer Freiheitsgrade ermöglicht und gleichzeitig eine geeignete Begrenzung etwaiger Endlagen erreicht werden.

Gemäß einer noch weiter bevorzugten Ausgestaltung kann die Rakelvorrichtung ein Befestigungssystem zur Befestigung und/oder zum Halten des Rakelwerkzeugs aufweisen. Dabei kann das Befestigungssystem bevorzugt als Haltesystem und/oder als Schnellwechselhaltesystem ausgebildet sein. Vorgenannte Systeme dienen dem unkomplizierten, einfachen und/oder schnellen Wechsel eines Rakelwerkzeugs sowie einer korrekten und sicheren Halterung des Rakelwerkzeugs. Ein solches Befestigungssystem kann ferner zum temporären Befestigen und/oder Halten für Zwecke eines Justiervorgangs ausgebildet sein.

Des Weiteren kann das Befestigungssystem werkzeugfrei betätigbar sein. Alternativ oder zusätzlich kann das Befestigungssystem einen Haltestift oder eine Mehrzahl von Haltestiften zum Halten oder temporären Halten des Rakelwerkzeugs aufweisen. Die Haltestifte können insbesondere zum Einhängen des Rakelwerkzeugs auf den Haltestiften und/oder Aufschieben des Rakelwerkzeugs auf die Haltestifte ausgebildet sein. Zusätzlich oder alternativ kann das Befestigungssystem zum Lösen eines Rakelwerkzeugs ausgebildet sein. Somit dient also das Befestigungssystem zum schnellen und einfachen Wechseln des Rakelwerkzeugs, insbesondere mit nur geringem Handhabungsaufwand.

Alternativ oder ergänzend kann das Befestigungssystem die Fixiereinrichtung aufweisen, wodurch eine hohe Funktionsintegration erzielt werden kann.

Bevorzugt ist der wenigstens eine Haltestift in einer Langlochführung der Rakellagerung, insbesondere spielbehaftet, geführt. Das Rakelwerkzeug kann dann in besonders einfacher Weise mittels des Haltestifts und der Langlochführung gehalten werden. Hierdurch kann eine besonders einfach herzustellende mechanische und/oder geometrisch definierte Verbindung herstellbar sein.

Des Weiteren kann die Justierhalterung den wenigstes einen Haltestift und/oder die Tragstruktur wenigstens eine Langlochführung aufweisen. Die Tragstruktur kann dann in besonders einfacher Weise an der Justierhalterung mechanisch gehalten und/oder eingehängt werden, wobei ein besonders geringer Handhabungsaufwand anfällt.

Besonders bevorzugt ist jedem Haltestift eine Langlochführung zugeordnet, wodurch eine gleichmäßige und symmetrische Kraftübertragung ermöglicht wird.

Gemäß einer noch weiter bevorzugten Ausgestaltung ist es möglich, dass das Rakelwerkzeug ein Rakelblatt aufweist und/oder dass ein Rakelblatt des Rakelwerkzeugs zumindest abschnittsweise aus einem Kunststoffmaterial und/oder aus einem Blechmaterial gefertigt ist. Mithilfe der Ausgestaltung des Rakelwerkzeugs als Rakelblatt und/oder in Kombination mit der Ausbildung aus einem Kunststoffmaterial und/oder aus einem Blechmaterial kann eine hohe Betriebssicherheit sowie eine ein hohes Maß an Funktionalität gewährleistet werden. Derartige Rakelblätter können zum Beispiel in vorteilhafter Weise im Hinblick auf die Elastizität eingestellt werden und weisen eine hohe Medienbeständigkeit auf. Zudem können Rakelblätter auch in begrenzten Bauräumen untergebracht werden und ermöglichen eine besonders genau definierte Kraftbeaufschlagung des jeweiligen Drucksiebs.

Auch kann gemäß einer weiter bevorzugten Ausgestaltung vorgesehen sein, dass das Rakelwerkzeug eine Rakelaufnahme aufweist und/oder dass das Rakelblatt an einer Rakelaufnahme des Rakelwerkzeugs montiert und/oder in oder an einer Rakelaufnahme eingespannt ist. Somit ist also ein Rakelblatt des Rakelwerkzeugs an oder in der Rakelaufnahme mit hoher Sicherheit anordenbar und/oder fixierbar.

Außerdem kann das Rakelblatt wenigstens eine Rakelseitenfläche aufweisen, die zwischen den Seitenrändern des Rakelblatts verläuft. Dabei kann durch die Rakelaufnahme ein zwischen der Rakelseitenfläche und einer Horizontalebene und/oder zwischen der Rakelseitenfläche und dem Drucksieb und/oder zwischen der Rakelseitenfläche und einem Drucktisch ausgebildeter Rakelwinkel vorgegeben und/oder festgelegt sein. Somit kann durch die Ausbildung des Rakelblatts beziehungsweise durch die Ausbildung der Rakelaufnahme der Rakelwinkel dahingehend optimiert oder gewählt werden, dass von dem Rakelblatt die jeweilige Druckmasse bestmöglich durch das Drucksieb hindurchpressbar ist und gleichzeitig die Gefahr der Beschädigung des Drucksiebs, beispielsweise aufgrund einer Verkantung, geringgehalten werden kann.

Gemäß einer weiter bevorzugten Ausgestaltung kann das Rakelwerkzeug als Wechselwerkzeug ausgebildet sein. Zusätzlich oder alternativ kann durch Austausch des Rakelwerkzeugs der Rakelwinkel zwischen einer Rakelseitenfläche und einer Horizontalebene und/oder dem Drucksieb und/oder einem Drucktisch veränderbar sein. Durch Ausbildung des Rakelwerkzeugs als Wechselwerkzeug ist das Rakelwerkzeug einfach und schnell im Hinblick auf unterschiedliche Betriebs- und Prozessanforderungen auswechselbar. Die Vorrichtung kann mithin schnell an unterschiedliche Betriebs- und Prozessanforderungen angepasst und beispielsweise der Druck unterschiedlicher Materialien oder die Nutzung unterschiedlicher Drucksiebe und/oder Drucklayouts kann mit nur geringem Aufwand bewerkstelligt werden. Durch die Veränderung des Rakelwinkels ist es möglich, mit ein und derselben Vorrichtung beispielsweise unterschiedliche Werkstoffe zu drucken beziehungsweise unterschiedliche Druckergebnisse oder Druckauftragsstärken zu erzielen.

Des Weiteren kann das Rakelwerkzeug eine Verstelleinrichtung zum Einstellen des Rakelwinkels zwischen einer Rakelseitenfläche und einer Horizontalebene und/oder dem Drucksieb und/oder einem Drucktisch aufweisen. Der Rakelwinkel kann dabei bevorzugt stufenlos oder stufenweise, insbesondere mittels vorgegebener Stufen, mittels der Verstelleinrichtung einstellbar sein. Der Rakelwinkel kann somit in besonders einfacher Weise dahingehend optimiert oder gewählt werden, dass von dem Rakelblatt die jeweilige Druckmasse bestmöglich durch das Drucksieb hindurchpressbar ist und gleichzeitig die Gefahr der Beschädigung des Drucksiebs, beispielsweise aufgrund einer Verkantung, geringgehalten werden kann. Zudem wird durch eine solche Verstelleinrichtung eine Einstellung des Rakelwinkels ohne Komponentenaustausch ermöglicht.

Des Weiteren kann das Rakelwerkzeug zumindest einen an der Rakelaufnahme ausgebildeten und/oder mit der Rakelaufnahme verbundenen Kopplungsabschnitt zur Verbindung mit der Rakelvorrichtung mittels der Rakellagerung, insbesondere der Fixiereinrichtung und/oder der Luftlagereinrichtung, aufweisen. Somit erlaubt es der Kopplungsabschnitt, das Rakelwerkzeug mit der Rakellagerung sicher zu verbinden.

Gemäß einer weiter bevorzugten Ausgestaltung kann das Rakelwerkzeug zumindest ein an der Rakelaufnahme ausgebildetes und/oder mit der Rakelaufnahme verbundenes Halteelement aufweisen. Dabei kann der Kopplungsabschnitt mit dem Halteelement in wenigstens zwei verschiedenen Positionen verbindbar sein, derart, dass der Rakelwinkel in den verschiedenen Positionen unterschiedlich ist.

Der Rakelwinkel kann dann in besonders einfacher Weise an den jeweiligen Anwendungsfall angepasst werden. Durch die Veränderung des Rakelwinkels ist es möglich, mit ein und demselben Rakel beispielsweise unterschiedliche Werkstoffe zu drucken beziehungsweise unterschiedliche Druckergebnisse oder Druckauftragsstärken zu erzielen.

Gemäß einer noch weiter bevorzugten Ausgestaltung kann die Justiereinrichtung zumindest eine Federlagerung aufweisen, die durch eine Ausrichtbewegung des Rakelwerkzeugs federelastisch auslenkbar ist. Dabei kann die Justiereinrichtung zur selbsttätigen Ausrichtung des Rakelwerkzeugs durch federgestütztes Auflegen und/oder federgestütztes Andrücken des Rakelwerkzeugs auf einen Untergrund ausgebildet sein.

Auf diese Weise können in besonders vorteilhafter Weise bei einer Ausrichtung des Rakelwerkzeugs die zur Ausrichtung aufgebrachten und auf das Rakelwerkzeug wirkenden Stellkräfte - zusätzlich zu den durch das jeweilige Eigengewicht des Rakelwerkzeugs beziehungsweise des Rakelwerkzeugs und der mit dem Rakelwerkzeug fest beziehungsweise unbeweglich verbundenen Komponenten oder Baugruppen erzeugten Stellkräften - zumindest teilweise durch Federkräfte erzeugt und/oder mit den jeweils durch das Eigengewicht erzeugten Stellkräften überlagert werden, insbesondere durch Federkräfte, die dem jeweiligen Eigengewicht entgegenwirken und/oder in Richtung des Eigengewichtskraft wirken. Die Justiereinrichtung kann auf diese Weise zur selbsttätigen Ausrichtung des Rakelwerkzeugs durch eigengewichtsbasierte Auflage des Rakelwerkzeugs auf einem Untergrund bei Überlagerung mit Federkräften, insbesondere mit Federkräften, die dem jeweiligen Eigengewicht entgegenwirken und/oder in Richtung der Eigengewichtskraft wirken, ausgebildet sein.

Gemäß einer noch weiter bevorzugten Ausgestaltung kann die Federlagerung eine auf das Rakelwerkzeug wirkende Federvorspannung aufbringen und/oder zum Aufbringen einer auf das Rakelwerkzeug wirkenden Federvorspannung eingerichtet sein, insbesondere bei selbsttätiger Ausrichtung des Rakelwerkzeugs.

Durch eine solche Vorspannung können Ausrichtbewegungen des Rakelwerkzeugs in besonders vorteilhafter Weise kontrolliert und eine eingenommene Ausrichtstellung kann stabil bis zur Fixierung des Rakelwerkzeugs aufrecht erhalten bleiben.

Gemäß einer noch weiter bevorzugten Ausgestaltung kann die Federlagerung dazu eingerichtet sein, bei Aufliegen des Rakelwerkzeugs auf einem Untergrund, eine auf das Rakelwerkezug auf den Untergrund drückende Federkraft und/oder eine das Rakelwerkzeug von dem Untergrund wegdrückende Federkraft aufzubringen. Durch eine das Rakelwerkzeug auf den Untergrund drückende Federkraft kann die stabile und sichere Auflage des Rakelwerkzeugs und damit eine genaue Ausrichtung besonders begünstigt werden. Durch eine das Rakelwerkzeug von dem Untergrund weg drückende Federkraft kann eine zu starkes Andrücken des Rakelwerkzeugs auf einen Untergrund verhindert werden und gleichzeitig eine besonders gut kontrollierte Ausrichtbewegung des Rakelwerkzeugs ermöglicht werden.

Gemäß einer noch weiter bevorzugten Ausgestaltung kann die Federlagerung zur Erzeugung einer in Gravitationsrichtung und/oder entgegen der Gravitationsrichtung auf das Rakelwerkzeug wirkende Federkraft eingerichtet sein. Durch eine in Gravitationsrichtung wirkende Federkraft kann das Rakelwerkzeugs beispielsweise auf einen Untergrund angedrückt werden und durch eine entgegen der Gravitationsrichtung auf das Rakelwerkzeug wirkende Federkraft kann dieses von dem Untergrund weggedrückt und damit der Gewichtskraft entgegengewirkt werden.

Gemäß einer noch weiter bevorzugten Ausgestaltung kann das Rakelwerkzeug durch die Federlagerung, insbesondere in einer unfixierten Betriebsstellung des Rakelwerkzeugs, in einer auf einen Untergrund weisenden Absenkrichtung und/oder in einer von einem Untergrund weg weisenden Anheberichtung federkraftbeaufschlagt sein. Durch Federkraftbeaufschlagung in Absenkrichtung kann das Rakelwerkzeugs besonders vorteilhaft auf einen Untergrund angedrückt werden. Durch die Federkraftbeaufschlagung in Anheberichtung kann das Rakelwerkzeugs besonders vorteilhaft von dem Untergrund weg gedrückt werden.

Gemäß einer noch weiter bevorzugten Ausgestaltung kann die Federlagerung zumindest eine Feder oder eine Mehrzahl von Federn aufweisen, die zwischen der Justierhalterung und der Tragstruktur wirkt oder wirken. Durch eine solche Feder oder durch mehrere Federn kann in besonders vorteilhafter Weise eine geeignete Federkraft, beispielsweise in Absenkrichtung orientiert und/oder in Anheberichtung orientiert, erzeugt werden. Bei mehreren Federn kann in vorteilhafter Weise eine stabile Lagerung der Rakelvorrichtung in der jeweiligen Lage aufrecht erhalten werden.

Gemäß einer weiter bevorzugten Ausgestaltung kann die Vorrichtung eine Sensoreinrichtung zur Erfassung von auf das Rakelwerkzeug wirkenden Rakelkräften aufweisen. Damit lassen sich in geeigneter Weise Rückschlüsse auf Rakelkräfte ziehen und die jeweiligen Prozessparameter und/oder Einstellungen können in vorteilhafter Weise angepasst, korrigiert und/oder optimiert werden.

Die Sensoreinrichtung kann dabei zur Erfassung einer Rakelkraftabweichung entlang einer Längserstreckung des Rakelwerkzeugs ausgebildet sein.

Es können somit also die auf das Rakelwerkzeug wirkenden Rakelkräfte entlang der Längserstreckung des Rakelwerkzeugs beziehungsweise unterschiede der Rakelkräfte entlang der Längserstreckung erfasst werden. Dadurch kann die Gleichmäßigkeit oder eben auch eine Ungleichmäßigkeit der Krafteinwirkung vom Rakelwerkzeug auf das Drucksieb in die Prozessführung bei der Ausführung von Druck- beziehungsweise Rakelvorgängen einfließen. Einer Ungleichmäßigkeit der Krafteinwirkung kann dabei entweder durch die Prozessführung beziehungsweise durch die Anpassung der Vorrichtungseinstellungen entgegengewirkt werden oder eine Ungleichmäßigkeit der Krafteinwirkung kann gewollt sein oder gezielt erzeugt werden.

Die Kraftmessung mittels einer solchen Sensoreinrichtung ermöglicht damit eine besonders vorteilhafte Prozessführung, durch die eine erhöhte Betriebssicherheit bei gleichzeitig verbesserter beziehungsweise präziserer Ausführung von Druckbeziehungsweise Rakelbewegungen ermöglicht wird.

Insgesamt kann hierdurch in besonders vorteilhafter Weise ein korrektes und gleichmäßiges Anliegen des Rakels auf einem Siebdruckgewebe beziehungsweise auf einem Drucksieb ermöglicht werden. Ebenso wird hierdurch ermöglicht, dass ein prozessbedingt und/oder verschleißbedingt angepasstes beziehungsweise auch gewollt ungleichmäßiges Anliegen des Rakels auf einem Siebdruckgewebe beziehungsweise auf einem Drucksieb umgesetzt wird. Ein zunächst ungleichmäßiges Anliegen des Rakels auf einem Siebdruckgewebe kann, beispielsweise bei ungleichmäßigem Verschleiß des Drucksiebs, während der Ausführung einer Druck- beziehungsweise Rakelbewegung wiederum gleichmäßige Rakelkräfte erzeugen. Mithin kann eine vorteilhafte Anpassung an die vorherrschenden Verschleißbedingungen erfolgen und die Standzeiten lassen sich erhöhen. Ferner kann mit einer erfindungsgemäßen Sensoreinrichtung in vorteilhafter Weise auch der Verschleiß von Vorrichtungskomponenten verringern oder der Verschleißfortschritt verlangsamt werden.

Durch ein korrektes und gleichmäßiges Anliegen des Rakels auf dem Siebdruckgewebe beziehungsweise auf einem Drucksieb kann ein gleichmäßiger Schichtaufbau des Siebdruckwerkstücks erreicht werden. Insbesondere können gleichmäßige Schichten mit konstanter dicke parallel zueinander erzeugt werden. Somit kann die Druckqualität insgesamt verbessert werden.

Schließlich lässt sich mit einer solchen Sensoreinrichtung eine verhältnismäßig sichere und überwachbare, räumliche Ausrichtung des Rakelwerkzeugs während der Durchführung von Druck- beziehungsweise Rakelvorgängen realisieren. Im Ergebnis können qualitativ verbesserte Druckergebnisse sowie auch eine verbesserte Prozessführung während der Durchführung von Druck- beziehungsweise Rakelvorgängen gewährleistet werden.

Ferner ist es gemäß einer weiter bevorzugten Ausgestaltung möglich, dass die Sensoreinrichtung zumindest einen Kraftmesssensor oder zumindest zwei Kraftmesssensoren aufweist, insbesondere zwei parallel geschaltete Kraftmesssensoren. Mithilfe dieser Ausgestaltung ist es möglich, wirkende Rakelkräfte und/oder Rakelkraftabweichungen entlang der Längserstreckung des Rakelwerkzeugs mit hoher Sicherheit zu erfassen. Zudem ist eine solche Ausgestaltung kostengünstig und mit einem nur begrenzten Konstruktionsaufwand zu bewerkstelligen.

Ferner können die Kraftmesssensoren entlang einer Längserstreckung des Rakelwerkzeugs zueinander beabstandet angeordnet sein. Diese Ausgestaltung erlaubt es, mithilfe der Kraftmesssensoren an zueinander beabstandeten Punkten des Rakelwerkzeugs beziehungsweise an zueinander beabstandeten Messstellen Kräfte zu erfassen. Dadurch kann sichergestellt werden, dass die Krafteinwirkung des Rakelwerkzeugs auf das Drucksieb und/oder auf einen Drucktisch beispielsweise gleichmäßig ist oder - je nach gewünschter Prozessführung - gezielt ungleichmäßig eingestellt werden kann.

Ebenso begünstigt eine solche Ausgestaltung die Erzeugung besonders genauer Schichtdicken beziehungsweise einen besonders genauen Schichtauftrag auf ein Siebdruckwerkstück beziehungsweise auf einen Werkstückträger oder auf eine Druckunterlage. Die jeweilige Schichtdicke kann im Betrieb unter Nutzung einer solchen Sensoreinrichtung besonders gut reproduzierbar und auch konstant über mehrere Druckvorgänge eingehalten werden.

In weiter bevorzugter Ausgestaltung können die Kraftmesssensoren zur gleichzeitigen Messung von absoluten Rakelkräften an voneinander entlang der Längserstreckung des Rakelwerkzeugs beabstandeten Messstellen ausgebildet sein. Die gleichzeitige Messung von absoluten Rakelkräften an voneinander beabstandeten Messstellen erlaubt den direkten Vergleich der erfassten beziehungsweise gemessenen Rakelkräfte der Kraftmesssensoren miteinander. Dies ermöglicht zudem eine zeitgleiche Verarbeitung der erfassten Messdaten und somit die Implementierung besonders sicherer und zuverlässiger Regelkreise.

Außerdem können die Kraftmesssensoren zur Erfassung von relativen Rakelkraftabweichungen an entlang der Längserstreckung des Rakelwerkzeugs beabstandeten Messstellen ausgebildet sein. Diese Ausgestaltung ermöglicht es, beispielsweise während eines Druckvorganges, in welchem das Rakelwerkzeug über ein Drucksieb streicht, die Rakelkräfte entlang einer Rakelbewegungsrichtung des Rakelwerkzeugs beziehungsweise während des Verfahrens des Rakelwerkzeugs zu erfassen und mit nur geringem Aufwand eine relative Rakelkraftabweichung zu ermitteln. Somit kann beispielsweise für nachfolgende Druckprozesse und/oder für einen noch laufenden Druckprozess Einfluss auf etwaige Druckparameter genommen werden. Es kann insbesondere sichergestellt werden, dass das Aufliegen des Rakelwerkzeugs auf dem Drucksieb innerhalb gewünschter Parameter erfolgt oder eine Kontaktierung des Drucksiebs durch das Rakelwerkzeugs innerhalb vorbestimmter und/oder angepasster Parameter erfolgt, wodurch mit hoher Präzision Einfluss auf die Schichtdicken pro Druckschicht und/oder an unterschiedlichen Stellen eines Drucklayouts genommen werden kann. Eine insgesamt hohe Druckqualität ist dadurch erzielbar.

Es können mit einer Sensoreinrichtung mithin in vorteilhafter Weise absolute Rakelkräfte und/oder relative Rakelkraftabweichungen erfassbar sein. Beispielsweise können absolute Rakelkräfte nach dem Aufsetzen des Rakelwerkzeugs auf dem Drucksieb oder auf dem Drucktisch erfasst werden. Hingegen können relative Rakelkraftabweichungen während einer Bewegung des Rakelwerkzeugs auf dem Drucksieb oder auf einem Drucktisch erfasst werden.

Des Weiteren kann in Draufsicht auf die Rakelvorrichtung der zumindest eine Kraftmesssensor oder die Kraftmesssensoren oberhalb einer Aufstandslinie des Rakelwerkzeugs angeordnet sein. Ergänzend oder alternativ kann in Draufsicht auf die Rakelvorrichtung der zumindest eine Kraftmesssensor oder die Kraftmesssensoren mit einer Aufstandslinie des Rakelwerkzeugs ausgerichtet sein. Bei der Aufstandslinie handelt es sich um die Kontaktlinie, entlang welcher das Rakelwerkzeug das Drucksieb oder den Drucktisch kontaktiert. Somit können mithilfe dieser Ausgestaltung einwirkende Momente, die eine Kraftmessung durch die Sensoreinrichtung auf das Drucksieb beziehungsweise auf das Rakelwerkzeug verfälschen oder ungünstig beeinflussen können, bestmöglich vermieden werden.

Des Weiteren kann in Draufsicht auf die Rakelvorrichtung der zumindest eine Kraftmesssensor oder die Kraftmesssensoren versetzt zu einer Aufstandslinie des Rakelwerkzeugs angeordnet sein. Es ergibt sich hierdurch eine flexiblere Anlagenkonfiguration und eine bessere Nutzbarkeit des zur Verfügung stehenden Bauraums für die jeweiligen Anlagenkomponenten.

Gemäß einer noch weiter bevorzugten Ausgestaltung kann die Rakelvorrichtung eine Stelleinrichtung zur Bewegung des Rakelwerkzeugs zwischen einer angehobenen Ausgangsstellung und zumindest einer abgesenkten Betriebsstellung aufweisen. Somit ist also mithilfe der Stelleinrichtung die Rakelvorrichtung beispielsweise hin oder weg von einem Drucktisch und/oder hin oder weg von einem Drucksieb verfahrbar, insbesondere mit einem nur geringem oder ohne Bedienaufwand durch das jeweilige Bedienpersonal.

Außerdem kann die Stelleinrichtung zumindest einen Linearantrieb oder eine Mehrzahl von Linearantrieben aufweisen. Somit ist also die Stelleinrichtung in der Lage, eine Linearbewegung mit hoher Sicherheit und einem verhältnismäßig hohen Automationsgrad auszuführen.

Zudem kann die Stelleinrichtung eine Mehrzahl in Reihe geschalteter Linearantriebe aufweisen. Auf diese Weise ist es möglich, den Hub der Stelleinrichtung zu vergrößern beziehungsweise unterschiedliche Linearantriebe für unterschiedliche Stellfunktionalitäten zu nutzen.

Der wenigstens eine Linearantrieb der Stelleinrichtung kann als elektrischer oder elektromechanischer Linearantrieb und/oder als elektrischer Spindelantrieb und/oder als Elektrozylinder und/oder als Linearaktor ausgebildet sein. Durch einen solchen Linearantrieb kann der jeweils erforderliche Hub zuverlässig bereitgestellt werden und lässt sich auch auf geringem Bauraum anordnen. Zudem können derartige Linearantrieb vorteilhaft miteinander kombiniert werden.

Ferner kann vorgesehen sein, dass zumindest ein Linearantrieb der Stelleinrichtung als pneumatischer Linearantrieb oder Linearzylinder ausgebildet ist. Somit ist also die Stelleinrichtung in der Lage, eine Linearbewegung mithilfe von druckbeaufschlagtem Gas auszuführen. Durch eine solchen pneumatischen Linearantrieb oder Linearzylinder kann dabei in vorteilhafter eine rückfedernde Kontaktierung des Drucksiebs durch das jeweilige Rakel bewerkstelligt werden, sodass die Gefahr von Beschädigungen von Vorrichtungskomponenten verringert werden kann.

Dabei kann der pneumatische Linearantrieb im Kraftfluss zwischen dem elektrischen oder elektromechanischen Linearantrieb und dem Rakelwerkzeug angeordnet sein. Somit kann der Hub der Stelleinrichtung über eine Betätigung des pneumatischen Linearantrieb schnell variiert beziehungsweise vergrößert oder verkleinert werden. Zudem kann durch eine solche Anordnung bei Betätigung des pneumatischen Linearantriebs in vorteilhafter Weise ein rückfederndes Verhalten zwischen dem elektrischen oder elektromechanischen Linearantrieb und dem Rakelwerkzeug bereitgestellt werden.

Des Weiteren kann die Sensoreinrichtung im Kraftfluss zwischen der Stelleinrichtung und dem Rakelwerkzeug angeordnet sein. Somit kann also eine Kraft, die auf das Rakelwerkzeug einwirkt, nah am Entstehungsort erfasst werden. Zudem wird die über die Sensoreinrichtung auch diejenige Kraft erfasst, die durch die Stelleinrichtung erzeugt wird. Dadurch können genaue Messergebnisse erzielt werden, die für die weitere oder spätere Prozessführung in vorteilhafter Weise genutzt werden können.

Außerdem kann die Sensoreinrichtung im Kraftfluss zwischen der Stelleinrichtung und der Rakellagerung und/oder im Kraftfluss zwischen der Stelleinrichtung und der Justiereinrichtung und/oder im Kraftfluss zwischen der Stelleinrichtung und der Justierhalterung angeordnet sein. Diese Ausgestaltung hat den Vorteil, dass die Sensoreinrichtung die durch die Stelleinrichtung bei der Kontaktierung eines Drucksiebs durch das Rakelwerkzeugs erzeugten Kräfte nah an der Stelleinrichtung selbst erfasst. Hierdurch können besonders exakte Messergebnisse erhalten werden.

Ferner kann die Sensoreinrichtung, insbesondere die Kraftmesssensoren der Sensoreinrichtung, fest zwischen der Justierhalterung und einer mit der Stelleinrichtung verbundenen Sensorhalterung angeordnet sein. Eine solcher Aufbau ist besonders robust und weist eine nur geringe Störanfälligkeit auf. Die jeweils erzielten Messergebnisse einer derart angeordneten Sensoreinrichtung weisen eine mithin nur geringe Fehleranfälligkeit auf.

Gemäß einer noch weiter bevorzugten Ausgestaltung kann die Vorrichtung zur Herstellung von dreidimensionalen Siebdruckwerkstücken eine Rakelbewegungseinrichtung zur Bewegung der Rakelvorrichtung und/oder des Rakelwerkzeugs entlang einer in Horizontalrichtung verlaufenden Rakelbewegungsrichtung aufweisen. Somit ist es möglich, ein Rakelwerkzeug beziehungsweise die Rakelvorrichtung entlang einer in Horizontalrichtung verlaufenden Rakelbewegungsrichtung zu verfahren. Hierdurch kann beispielsweise eine Druckmasse von der Rakelvorrichtung und/oder des Rakelwerkzeugs auf dem Drucksieb verteilt und durch dieses hindurchgedrückt werden, um einen schichtweisen Aufbau des jeweils gewünschten Werkzeugs vorzunehmen.

Dabei kann die Rakelbewegungseinrichtung wenigstens einen Linearantrieb zur Bewegung der Rakelvorrichtung und/oder des Rakelwerkzeugs aufweisen. Somit kann also die Rakelvorrichtung und/oder das Rakelwerkzeug linear in einer Richtung hin und her beziehungsweise vorwärts und rückwärts bewegbar sein. Folglich sind mehrere aufeinanderfolgende Druckdurchgänge mit der Vorrichtung zur Herstellung von dreidimensionalen Siebdruckwerkstücken in vorteilhafter Weise realisierbar. Ebenso kann hierdurch bei einer Vorwärtsbewegung ein Fluten des Drucksiebs durch ein Flutrakel und bei einer Rückwärtsbewegung ein Drucken durch ein Druckrakel erfolgen.

Gemäß einer weiter bevorzugten Ausgestaltung kann die Rakelbewegungseinrichtung ein Portalsystem mit Linearführungen und/oder einem Querträger und/oder einer Stützeinrichtung zur Abstützung des Querträgers auf den Linearführungen aufweisen. Somit ist es also möglich, das Rakelwerkzeug beziehungsweise die Rakelvorrichtung schwebend oberhalb eines Drucktisches und/oder schwebend oberhalb eines Drucksiebs zu verfahren, beispielsweise linear zu verfahren. Somit kann eine sichere Abfolge aufeinanderfolgender Druckdurchgänge mit der Vorrichtung zur Herstellung von dreidimensionalen Siebdruckwerkstücken gewährleistet werden. Ein solches Portalsystem beziehungsweise Portalachsensystem ist insbesondere im Hinblick auf die Bauraumanforderungen einer Druckeinrichtung besonders geeignet. Das jeweilige Drucksieb und/oder ein Drucktisch kann in vorteilhafter Weise unterhalb des Portalsystems positioniert sein und durch die jeweils erzeugte Bewegung kann mit hoher Betriebssicherheit ein Drucken von Druckmasse durch das Drucksieb ermöglicht werden. Ein solches Portalsystem erlaubt zudem die Bewegung eines verhältnismäßig schweren Rakelsystems mit einer hohen Bewegungspräzision.

Hierbei ist es möglich, dass die Linearführungen entlang der Rakelbewegungsrichtung verlaufen. Somit ist das Portalsystem beziehungsweise die Rakelvorrichtung und/oder das Rakelwerkzeug entlang der Rakelbewegungsrichtung verfahrbar. Ergänzend oder alternativ ist es möglich, dass der Querträger in einer Draufsicht zwischen den Linearführungen und/oder quer zu den Linearführungen verläuft. Somit kann also der Querträger die Linearführungen verbinden und auch gemeinsam mit den Linearführungen die Rakelvorrichtung verfahren. Es kann hierdurch eine hohe Gesamtstabilität und damit auch eine weiter verbesserte Bewegungspräzision gewährleistet werden.

Des Weiteren kann die Rakelvorrichtung und/oder die Stelleinrichtung der Rakelvorrichtung an dem Querträger des Portalsystems befestigt sein. Somit bedingt also eine Bewegung des Querträgers eine Bewegung der Rakelvorrichtung beziehungsweise des Rakelwerkzeugs. Die Stelleinrichtung wiederum ermöglicht auf diese Weise eine Relativbewegung des Rakelwerkzeugs zum Querträger des Portalsystems.

Gemäß einer noch weiter bevorzugten Ausgestaltung kann die Rakelvorrichtung entlang einer Längserstreckung des Querträgers unbeweglich angeordnet sein. Eine solche Beweglichkeit ist für die Ausführung von Rakelbewegungen nicht erforderlich und eine Unbeweglichkeit entlang einer Längserstreckung des Querträgers vereinfacht den Gesamtaufbau und kann die Stabilität beziehungsweise Steifigkeit des Portalsystems verbessern.

Gemäß einer noch weiter bevorzugten Ausgestaltung kann der zumindest eine Linearantrieb der Rakelbewegungseinrichtung mit dem Querträger des Portalsystems gekoppelt sein. Somit verursacht eine Bewegung des Linearantriebs also eine Bewegung des Querträgers, mit welchem beispielsweise dann auch eine Bewegung der Rakelvorrichtung beziehungsweise des Rakelwerkzeugs einhergeht. Ein solcher Aufbau kann konstruktiv einfach und robust bewerkstelligt werden.

Des Weiteren kann die Vorrichtung zur Herstellung von dreidimensionalen Siebdruckwerkstücken zwei Rakelvorrichtungen aufweisen. Dabei kann eine Rakelvorrichtung als Flutrakelvorrichtung und eine weitere Rakelvorrichtung als Druckrakelvorrichtung ausgebildet sein. Ergänzend oder alternativ können beide Rakelvorrichtungen an der Rakelbewegungseinrichtung, insbesondere an dem Querträger der Rakelbewegungseinrichtung, angeordnet sein. Dementsprechend verursacht eine Bewegung der Rakelbewegungseinrichtung eine Bewegung der jeweiligen Rakelvorrichtung beziehungsweise des jeweiligen Rakelwerkzeugs. Mithin kann hierdurch in vorteilhafter Weise gewährleistet werden, dass zwei Rakelvorrichtungen von der Rakelbewegungseinrichtung gemeinsam bewegt werden.

Gemäß einer noch weiter bevorzugten Ausgestaltung können die Rakelvorrichtung oder die Rakelvorrichtungen und die Rakelbewegungseinrichtung ein Rakelsystem bilden. Ein solches Rakelsystem kann als Gesamtbaugruppe oberhalb eines Drucksiebs beziehungsweise eines Drucktischs angeordnet sein und eine Rakelbewegung mit hoher Bewegungspräzision bereitstellen.

Gemäß einer noch weiter bevorzugten Ausgestaltung kann vorgesehen sein, dass die Rakelvorrichtung für den Druck in einem Positionsmodus ausgebildet ist. In dem Positionsmodus kann ein pneumatischer Linearantrieb der Stelleinrichtung eingefahren und/oder ein elektrischer oder elektromechanischer Linearantrieb der Stelleinrichtung zumindest teilweise ausgefahren oder abgesenkt sein. Mit anderen Worten ausgedrückt kann der pneumatische Linearantrieb deaktiviert sein, hingegen der elektrische oder elektromechanische Linearantrieb in Betrieb sein. Mit einem elektrischen oder elektromechanischen Linearantrieb kann eine bestimmte Position sehr genau anfahrbar sein. Dabei kann durch eine Deaktivierung des pneumatischen Linearantriebs eine federelastische Rückstellbewegung vermieden oder verringert werden, sodass eine gewünschte Hubposition sehr genau aufrechterhalten werden kann.

Gemäß einer noch weiter bevorzugten Ausgestaltung kann die Rakelvorrichtung für den Druck in einem Kraftmodus ausgebildet sein. In dem Kraftmodus kann ein pneumatischer Linearantrieb der Stelleinrichtung teilweise oder vollständig ausgefahren und/oder abgesenkt sein. Im Kraftmodus ist es somit möglich, mithilfe des pneumatischen Linearantriebs eine große Kraft und einen großen Hub auf einfache Weise schnell beziehungsweise in einer kleinen Zeitspanne zu erzeugen. Gleichzeitig kann in einem Kraftmodus ein federelastisches Verhalten des pneumatischen Linearantriebs für das verhältnismäßig genaue Aufrechterhalten einer gewünschten Rakelkraft beitragen. Sprunghafte Veränderungen der Rakelkraft lassen sich in einem solchen Kraftmodus vermeiden.

Gemäß einer noch weiter bevorzugten Ausgestaltung kann in einem Kraftmodus ein elektrischer oder elektromechanischer Linearantrieb der Stelleinrichtung eingefahren oder nur zumindest teilweise ausgefahren oder abgesenkt sein. Mithin kann der elektrische oder elektromechanische Linearantrieb auch in einem Kraftmodus für die Erzeugung eines Hubs eingesetzt werden. Ebenso kann der elektrische oder elektromechanische Linearantrieb in einem Kraftmodus deaktiviert bleiben.

Gemäß einer noch weiter bevorzugten Ausgestaltung kann in einem Kraftmodus der pneumatische Linearantrieb der Stelleinrichtung als Gas-Feder betrieben werden. Dies ist eine einfache und kostengünstige Ausgestaltung des Linearantriebs und hierdurch kann ein genaues Aufrechterhalten einer gewünschten Rakelkraft auch bei schwankenden Rückstellbewegungen des Rakelwerkzeugs gewährleistet werden.

Gemäß einer noch weiter bevorzugten Ausgestaltung kann der pneumatische Linearantrieb der Stelleinrichtung für den Betrieb als Gas-Feder ein Proportionalventil aufweisen. Bei einem Proportionalventil kann es sich um ein elektromagnetisches oder medium-gesteuertes Ventil handeln, das beliebige Zwischenstellungen zwischen einer offenen und geschlossenen Stellung annehmen kann. Somit kann die Durchflussmenge an Gas durch das Proportionalventil geregelt und/oder gesteuert sein. Die genaue Einstellbarkeit und Aufrechterhaltung einer gewünschten Rakelkraft kann hierdurch weiter verbessert werden.

Gemäß einer besonders bevorzugten Ausgestaltung kann die Vorrichtung eine Drucksiebvorrichtung aufweisen. Die Drucksiebvorrichtung kann eine Drucksiebbewegungseinrichtung zur Bewegung des Drucksiebs zwischen einer angehobenen Prüfstellung und zumindest einer abgesenkten Druckstellung aufweisen. Das Drucksieb kann dann von einer Druckstellung in eine vom einem Drucktisch beziehungsweise Siebdruckwerkstück angehobenen Prüfstellung angehoben werden, insbesondere um Prüfabläufe durchzuführen. Das Drucksieb ist dann in vorteilhafter Weise zwecks Durchführung von Prüfabläufen höhenverstellbar.

Dabei kann die Drucksiebbewegungseinrichtung wenigstens einen Linearantrieb oder eine Mehrzahl von Linearantrieben zu Bewegung des Drucksiebs aufweisen. Somit kann also Das Drucksieb linear in einer Richtung hin und her beziehungsweise hoch und runter bewegbar sein. Folglich kann das Drucksieb in vorteilhafter Weise angehoben und abgesenkt werden.

Des Weiteren kann die Drucksiebbewegungseinrichtung zwei voneinander entlang der Längserstreckung des Rakelwerkzeugs beabstandete Linearantriebe aufweisen. Diese Ausgestaltung ermöglich es, das Drucksieb an voneinander in Längserstreckung des Rakelwerkzeugs beabstandeten Stellen unabhängig voneinander zu verstellen. Auf diese Weise kann ein Verkippen des Drucksiebs quer zur Längserstreckung des Rakelwerkzeugs realisiert werden.

Bevorzugt weist die Drucksiebbewegungseinrichtung einen ersten Linearantrieb und einen zweiten Linearantrieb auf, wobei die Linearantriebe an gegenüberliegenden Querseiten des Drucksiebs angeordnet oder gegenüberliegenden Querseiten des Drucksiebs zugeordnet sind. Alternativ oder ergänzend sind die Linearantriebe entlang der Längserstreckung das Rakelwerkzeugs voneinander beanstandet und/oder quer, insbesondere senkrecht, zur Rakelbewegungsrichtung voneinander beabstandet. Durch die Anordnung der Linearantriebe kann ein Verkippen des Drucksiebs durch einen geringen Bewegungshub der Linearantriebe in schneller und einfacher Weise realisiert werden, wodurch das Drucksieb besonders genau ausgerichtet werden kann.

Des Weiteren kann das Drucksieb mittels der Drucksiebbewegungseinrichtung relativ zum Rakelwerkzeug und/oder relativ zu einem Drucktisch und/oder relativ zu einer Horizontalebene schwenkbar oder verkippbar sein. Auf diese Weise kann eine vorteilhafte Ausrichtung des Drucksiebs relativ zum Rakelwerkzeug und/oder zum Drucktisch beziehungsweise zu einer Horizontalebene erfolgen und die Funktionalität der Vorrichtung weiter verbessert werden.

Das Drucksieb kann mittels der Drucksiebbewegungseinrichtung um eine sich senkrecht zur Verbindungslinie zwischen den beiden Linearantrieben erstreckende Drucksiebquerachse schwenkbar oder verkippbar sein. Das Drucksieb kann dann vorzugsweise um die Drucksiebquerachse und quer zu dieser verschwenkt werden. Das Drucksieb kann auf diese Weise mit hoher Präzision verstellt und/oder in eine definierte Lage gebracht werden.

Die Drucksiebbewegungseinrichtung kann ferner oder hierzu einen dritten Linearantrieb aufweisen. Der dritte Linearantrieb kann an einer Längsseite des Drucksiebs angeordnet sein oder einer Längsseite zugeordnet sein. Alternativ oder ergänzend ist der dritte Linearantrieb in Rakelbewegungsrichtung und/oder quer, insbesondere senkrecht, zur Längserstreckung des Rakelwerkzeugs von dem ersten und zweiten Linearantrieb beabstandet.

Durch einen solchen Linearantrieb kann der jeweils erforderliche Hub zuverlässig und mit nur geringem Konstruktivaufwand bereitgestellt werden und lässt sich auch auf geringem Bauraum anordnen. Das Drucksieb kann auf diese Weise an drei verschiedenen Stellen unabhängig voneinander mittels jeweils eines Linearantriebs verstellbar sein, wodurch das Drucksieb in besonders flexibler und präziser Weise ausgerichtet werden kann.

Bevorzugt ist das Drucksieb mittels der Drucksiebbewegungseinrichtung um eine quer, insbesondere senkrecht, zur Drucksiebquerachse und/oder parallel zur Längserstreckung des Rakelwerkzeugs erstreckende Drucksieblängsachse schwenkbar oder verkippbar. Das Drucksieb ist dann vorzugsweise um drei Achsen mittels der Drucksiebbewegungseinrichtung verschwenkbar.

Das Drucksieb kann in vorteilhafter Weise drei Freiheitsgrade aufweisen beziehungsweise mittels der Drucksiebbewegungseinrichtung in Bezug auf drei Freiheitsgrade verstellbar sein. So kann das Drucksieb in Höhenrichtung, insbesondere entlang der Richtung der Schwerkraft, verstellbar, insbesondere verschiebbar, und/oder um die Drucksieblängsachse und Drucksiebquerachse verschwenkbar sein. Hierdurch kann das Drucksieb optimal zum Rakel ausgerichtet werden und die Druckpräzision beziehungsweise Einstellflexibilität weiter verbessert werden.

Gemäß einer noch weiter bevorzugten Ausgestaltung kann die Vorrichtung zur Herstellung von dreidimensionalen Siebdruckwerkstücken eine Steuereinrichtung zur Steuerung und/oder Regelung der Stelleinrichtung und/oder der Drucksiebbewegungseinrichtung und/oder der Justiereinrichtung und/oder der Fixiereinrichtung und/oder der Rakelbewegungseinrichtung und/oder der Luftlagereinrichtung und/oder zur Verarbeitung und/oder zur Auswertung und/oder zur Speicherung und/oder zum Vergleich von Sensordaten der Sensoreinrichtung und/oder zur Ausführung einer Rakel- und/oder Siebeinrichtungsroutine aufweisen. Somit kann die Steuereinrichtung die vorgenannten Einrichtungen und deren Daten in vorteilhafte Weise steuern beziehungsweise regeln und/oder verarbeiten. Hierdurch kann ein hohes Maß an Produktivität, Wiederholgenauigkeit sowie Betriebssicherheit gewährleistet und auch eine hohe Informations- und Datendichte betreffend die jeweiligen Produktionsprozesse erzeugt werden.

Soweit vorliegend von einer Rakel- und/oder Siebeinrichtungsroutine die Rede ist, kann dies zusätzlich oder alternativ eine Rakel- und/oder Siebkorrekturroutine betreffen. Eine Rakeleinrichtungsroutine kann mithin auch eine Rakelkorrekturroutine sein oder mitumfassen und/oder Siebeinrichtungsroutine kann mithin auch eine Siebkorrekturroutine sein oder mitumfassen.

Gemäß einer noch weiter bevorzugten Ausgestaltung kann die Steuereinrichtung dazu ausgebildet sein, bei Krafteinwirkung des Rakelwerkzeugs unmittelbar auf einen Drucktisch und/oder in einer siebfreien Anordnung über die Sensoreinrichtung eine Rakelkraft zu erfassen und/oder auszuwerten, insbesondere bei fixiertem Rakelwerkzeug. Hierdurch lassen sich Einflüsse des Drucksiebs, insbesondere Rückstellkräfte des Drucksiebs, auf die Entstehung der Rakelkraft ausschließen. Es lassen sich hierdurch in vorteilhafter Weise Rückschlüsse über die Elastizität des Rakelwerkzeugs und/oder der Stelleinrichtung und/oder der gesamten Rakelvorrichtung ziehen und die derart ermittelten Rakelkräfte können für spätere Druckvorgänge berücksichtigt werden. **In** einer solchen Anordnung wird die Rakelkraft maßgeblich durch die Elastizität des Rakelwerkzeugs und/oder der Stelleinrichtung und/oder der gesamten Rakelvorrichtung bedingt, da der Drucktisch regelmäßig eine hohe Steifigkeit beziehungsweise geringe Nachgiebigkeit aufweist.

Gemäß einer noch weiter bevorzugten Ausgestaltung kann die Steuereinrichtung dazu ausgebildet sein, bei Krafteinwirkung des Rakelwerkzeugs auf ein Drucksieb, in einer mit dem Drucksieb auf einem Drucktisch und/oder einer festen Druckunterlage aufliegenden Betriebsstellung, über die Sensoreinrichtung eine Rakelkraft zu erfassen und/oder auszuwerten, insbesondere bei fixiertem Rakelwerkzeug. Insbesondere kann in einer solchen Stellung das Drucksieb vollständig und/oder flach auf dem jeweiligen Drucktisch und/oder der jeweiligen Druckunterlage aufliegen. In einer solchen Stellung liegt mithin bereits ein flächiger Kontakt zwischen dem Drucksieb und dem Drucktisch beziehungsweise der Druckunterlage vor, sodass ein solche Kontaktierung nicht erst durch eine Abwärtsbewegung des Rakelwerkzeugs erzeugt werden muss. Daher kommt es bei einer Krafteinwirkung des Rakelwerkzeugs auf das Drucksieb hierbei zu keiner oder einer nur vernachlässigbaren elastischen Verformung des Drucksiebs. Hierdurch lassen sich wiederum Einflüsse des Drucksiebs, insbesondere Rückstellkräfte des Drucksiebs aufgrund nennenswerter elastischer Verformung, auf die Entstehung der Rakelkraft weitgehend ausschließen. Es lassen sich hierdurch wiederum Rückschlüsse über die Elastizität des Rakelwerkzeugs und/oder der Stelleinrichtung und/oder der gesamten Rakelvorrichtung ziehen und die derart ermittelten Rakelkräfte können für spätere Druckvorgänge und/oder Messvorgänge berücksichtigt werden. Gleichzeitig kann eine vollständige Entfernung des Drucksiebs aus dem Druckbereich vermieden werden.

Gemäß einer noch weiter bevorzugten Ausgestaltung kann die Steuereinrichtung dazu ausgebildet sein, bei Krafteinwirkung des Rakelwerkzeugs auf ein Drucksieb, frei von einer Kontaktierung zwischen dem Drucksieb und einem Drucktisch und/oder einer Druckunterlage und/oder zumindest einem Siebruckwerkstück, über die Sensoreinrichtung eine Rakelkraft zu erfassen und/oder auszuwerten, insbesondere bei fixiertem Rakelwerkzeug. Bei einer solchen Krafteinwirkung entspricht die Rakelkraft einer Rückstellkraft des Drucksiebs, die sich aufgrund einer elastischen Verformung des Drucksiebs einstellt. Hierdurch kann ein Rückschluss auf das mechanische Verhalten des Drucksiebs beziehungsweise auf dessen Zustand beziehungsweise auf die Rakelkräfte im Zusammenwirken zwischen der Rakelvorrichtung und dem Drucksieb gezogen werden. Es lassen sich mithin Rückschlüsse über die Elastizität des Drucksiebs ziehen und die derart ermittelten Rakelkräfte können für spätere Druckvorgänge und/oder Messvorgänge berücksichtigt werden.

Gemäß einer noch weiter bevorzugten Ausgestaltung kann die Steuereinrichtung dazu ausgebildet sein, bei Krafteinwirkung des Rakelwerkzeugs auf ein Drucksieb und bei einer durch die Krafteinwirkung auf das Drucksieb erzeugten Kontaktierung eines Drucktisches und/oder einer Druckunterlage und/oder zumindest eines Siebruckwerkstücks durch das Drucksieb, insbesondere bei elastischer Verformung des Drucksiebs, über die Sensoreinrichtung eine Rakelkraft zu erfassen und/oder auszuwerten. Mithin kann in einer solchen Betriebsstellung zunächst eine Krafteinwirkung des Rakelwerkzeugs auf das Drucksieb erfolgen und durch diese Krafteinwirkung kann eine elastische Verformung des Drucksiebs erzeugt werden, aufgrund derer das Drucksieb in Kontakt mit einem darunter befindlichen Drucktisch und/oder einer Druckunterlage und/oder zumindest einem Siebdruckwerkstück gelangt. Die hierbei erzeugte Rakelkraft wird sowohl durch die Rückstellkraft des Drucksiebs aufgrund der sich jeweils einstellenden elastischen Verformung als auch durch die Rückstellkraft des Drucktisches und/oder einer Druckunterlage und/oder des zumindest einen Siebdruckwerkstücks bedingt. Die Rakelkräfte im Zusammenwirken zwischen der Rakelvorrichtung, dem Drucksieb sowie auch dem Drucktisch beziehungsweise der Druckunterlage und/oder den jeweils erzeugten Siebdruckwerkstücken unterhalb des Drucksiebs können auf diese Weise ermittelt werden.

Gemäß einer noch weiter bevorzugten Ausgestaltung kann die Steuereinrichtung dazu ausgebildet sein, während einer mittels der Stelleinrichtung erfolgenden Absenkbewegung des Rakelwerkzeugs über die Sensoreinrichtung eine Rakelkraftzunahme oder Rakelkraftabnahme zu erfassen und/oder auszuwerten. Somit kann die Steuereinrichtung also in der Lage sein, mithilfe der Sensoreinrichtung die Zunahme von Rakelkräften zu erfassen und/oder auszuwerten. Dies ermöglicht in vorteilhafter Weise, die Absenkbewegung in Abhängigkeit der erfassten Rakelkräfte zu beeinflussen und/oder die bei der Absenkbewegung entstehenden Rakelkräfte zu erfassen und/oder für spätere Auswertevorgänge zu speichern.

Gemäß einer noch weiter bevorzugten Ausgestaltung kann die Steuereinrichtung dazu ausgebildet sein, während einer mittels der Stelleinrichtung ausschließlich auf das Drucksieb erfolgenden Absenkbewegung des Rakelwerkzeugs, insbesondere frei von einer Kontaktierung eines Drucktischs und/oder einer Druckunterlage und/oder zumindest eines Siebdruckwerkstücks durch das Drucksieb, über die Sensoreinrichtung eine Rakelkraftzunahme zu erfassen und/oder auszuwerten. Hierdurch können Einflüsse der elastischen Verformung des Drucksiebs auf die Rakelkraftzunahme während einer Absenkbewegung des Rakelwerkzeugs isoliert erfasst werden.

Gemäß einer noch weiter bevorzugten Ausgestaltung kann die Steuereinrichtung dazu ausgebildet sein, während einer mittels der Stelleinrichtung auf das Drucksieb erfolgenden Absenkbewegung des Rakelwerkzeugs, in einer mit dem Drucksieb auf einem Drucktisch aufliegenden Betriebsstellung, über die Sensoreinrichtung eine Rakelkraftzunahme zu erfassen und/oder auszuwerten. Hierdurch können Einflüsse der elastischen Verformung des Rakelwerkezugs und/oder der Stelleinrichtung und/oder der Rakelvorrichtung insgesamt auf die Rakelkraftzunahme während einer Absenkbewegung des Rakelwerkzeugs isoliert erfasst werden.

Gemäß einer noch weiter bevorzugten Ausgestaltung kann die Steuereinrichtung dazu ausgebildet sein, während einer mittels der Stelleinrichtung auf einen Drucktisch und/oder auf eine Druckunterlage erfolgenden Absenkbewegung des Rakelwerkzeugs, insbesondere in einer siebfreien Anordnung, über die Sensoreinrichtung eine Rakelkraftzunahme zu erfassen und/oder auszuwerten. Auch hierdurch können Einflüsse der elastischen Verformung des Rakelwerkezugs und/oder der Stelleinrichtung und/oder der Rakelvorrichtung insgesamt auf die Rakelkraftzunahme während einer Absenkbewegung des Rakelwerkzeugs isoliert erfasst werden.

Des Weiteren kann die Steuereinrichtung dazu ausgebildet sein, bei einem mittels der Sensoreinrichtung erfassten Beginn einer Rakelkraftänderung während der Absenkung des Rakelwerkzeugs eine Absenkbewegung durch die Stelleinrichtung zu beenden oder die Absenkbewegung durch die Stelleinrichtung nach einem vorgegebenen Absenkhub zu beenden. Somit kann die Steuereinrichtung dazu dienen, bei Erreichen einer bestimmten oder einer vorbestimmten Rakelkraftänderung während der Absenkung des Rakelwerkzeugs eben diese Absenkung zu beenden oder nach einem vorgegebenen Absenkhub zu beenden. Dies dient sowohl der Schonung des Rakelwerkzeugs beziehungsweise der Rakelvorrichtung als auch des Drucksiebs und/oder des Drucktisches.

Gemäß einer noch weiter bevorzugten Ausgestaltung kann die Steuereinrichtung dazu ausgebildet sein, bei einer mittels der Sensoreinrichtung erfassten Rakelkraftänderung und/oder bei einem mittels der Sensoreinrichtung erfassten Beginn einer Rakelkraftzunahme während der Absenkung des Rakelwerkzeugs eine Rakelhöhe automatisch oder teilautomatisch zu referenzieren. Das kann bedeuten, dass die Steuereinrichtung anhand einer beginnenden Rakelkraftänderung beziehungsweise anhand der beginnenden Änderung der Rakelkraft während der Absenkung des Rakelwerkzeugs eine etwaige Rakelhöhe, beispielsweise eine Soll-Höhe oder Sollposition des Rakelwerkzeugs, als Referenz festlegt, die wiederum für nachfolgende Prozesse als Referenz dienen kann. Die Reproduzierbarkeit der jeweiligen Prozesse lässt sich hierdurch weiter verbessern.

Gemäß einer noch weiter bevorzugten Ausgestaltung kann die Steuereinrichtung dazu ausgebildet sein, während einer mittels der Stelleinrichtung erfolgenden Absenkbewegung des Rakelwerkzeugs über die Sensoreinrichtung eine Rakelkraftabweichung entlang einer Längserstreckung des Rakelwerkzeugs zu erfassen und/oder auszuwerten. Dementsprechend kann die Steuereinrichtung entlang der Längserstreckung des Rakelwerkzeugs Rakelkräfte erfassen, miteinander vergleichen und/oder auswerten. Dadurch ist es zum Beispiel möglich, mithilfe der Steuereinrichtung auf eine gleichmäßige Kraftverteilung entlang einer Längserstreckung des Rakelwerkzeugs hinzuwirken, so dass der Druck beziehungsweise die Kraft des Rakelwerkzeugs auf das Drucksieb entlang der Längserstreckung des Rakelwerkzeugs gleichbleibend beziehungsweise konstant eingestellt und/oder konstant gehalten werden kann. Ebenso können gewollte Rakelkraftabweichungen entlang der Längserstreckung eingestellt und/oder aufrechterhalten werden.

Gemäß einer noch weiter bevorzugten Ausgestaltung kann die Steuereinrichtung dazu ausgebildet sein, insbesondere während einer Rakeleinrichtroutine, mittels der Stelleinrichtung die Rakelvorrichtung in eine Rakelwechselstellung zu verstellen. **In** der Rakelwechselstellung kann das Rakel in einfacher und schneller Weise gewechselt werden. Durch die Steuereinrichtung kann eine zuverlässige Überführung der Rakelvorrichtung in die Rakelwechselstellung sichergestellt werden. Hierdurch kann der Handhabungsaufwand und die Gefahr von Fehlbedienungen insgesamt verringert werden.

Weiterhin kann die Steuereinrichtung dazu ausgebildet sein, insbesondere während einer Rakeleinrichtroutine, zu erfassen und/oder zu erkennen, ob ein Rakelwerkzeug an der Rakellagerung und/oder der Rakelvorrichtung angebunden oder mit dieser verbunden ist, insbesondere über eine mittels der Sensoreinrichtung erfassten Rakelkraft und/oder über ein mittels der Sensoreinrichtung erfassten Eigengewicht des Rakelwerkzeugs und/oder erfassten Eigengewichts des Rakelwerkzeugs sowie mit dem Rakelwerkzeug fest verbundenen Komponenten und/oder Baugruppen. Es ist bei einer solchen Ausgestaltung steuerungstechnisch möglich, automatisch zu erfassen, ob ein Rakelwerkzeug an der Rakellagerung beziehungsweise Rakelvorrichtung angebunden ist, wodurch die Betriebssicherheit insgesamt erhöht werden kann.

Des Weiteren kann die Steuereinrichtung dazu ausgebildet sein, insbesondere während einer Rakeleinrichtroutine, während einer mittels der Stelleinrichtung erfolgenden Absenkbewegung des Rakelwerkzeugs die Luftlagerung beziehungsweise Luftlagereinrichtung, insbesondere die wenigstens eine Luftdüse, zu aktivieren oder aktiviert zu halten und den wenigstens einen Elektromagneten inaktiv stellen und/oder inaktiv zu lassen. Während einer Absenkbewegung kann dann in vorteilhafter Weise sichergestellt werden, dass die Luftlagerung beziehungsweise Luftlagereinrichtung aktiv ist und eine, insbesondere selbsttätige, Ausrichtung des Rakelwerkzeugs beziehungsweise der Rakel in genauer Weise mit geringen auf das Rakel wirkenden Kräften erfolgen kann. Die Ausrichtung der Rakel kann dann mit besonders geringen Handhabungsaufwand und geringer Gefahr von Fehlbedienungen erzielt werden.

Gemäß einer bevorzugten Ausgestaltung kann die Steuereinrichtung dazu ausgebildet sein, insbesondere während einer Rakeleinrichtroutine, bei einem über die Sensoreinrichtung erfassten Kraftreferenzwert eine Absenkbewegung durch die Stelleinrichtung zu beenden und/oder eine Absenkbewegung durch die Stelleinrichtung um einen vorgegebenen Absenkhub fortzuführen und/oder im Anschluss an einen vorgegebenen Absenkhub zu beenden. Die Absenkbewegung kann dann in vorteilhafter Weise beendet werden, wenn über die Sensoreinrichtung ein erfasster Kraftreferenzwert erreicht und/oder überschritten wird. Das Ausrichten des Rakelwerkzeugs beziehungsweise der Rakel kann hierdurch selbsttätig und mit geringen Handhabungsaufwand realisiert und zu geeignetem Zeitpunkt nach erfolgtem und ausreichendem Absenkhub beendet werden.

Bei einem Kraftreferenzwert kann es sich um einen Wert handeln, der dem Eigengewicht des Rakelwerkzeugs und/oder dem Eigengewicht des Rakelwerkzeugs sowie mit dem Rakelwerkzeug fest verbundener Komponenten oder Baugruppen handeln. Durch einen solchen Kraftreferenzwert kann sichergestellt werden, dass das Rakelwerkzeug und/oder das Rakelwerkzeug mit fest verbundenen Komponenten vollständig mit dem jeweiligen Eigengewicht aufliegt und damit auch eine korrekte und vollständige Ausrichtung erfolgt ist. Der Kraftreferenzwert kann vordefiniert und/oder veränderbar und/oder einer Toleranzen versehen sein. Ebenso kann es sich bei dem Kraftreferenzwert um einen mit einem Faktor multiplizierten Wert des jeweiligen Eigengewichts handeln.

Gemäß einer weiter bevorzugten Ausgestaltung kann die Steuereinrichtung dazu ausgebildet sein, insbesondere während einer Rakeleinrichtroutine, bei einer über die Sensoreinrichtung erfassten, innerhalb eines Referenzintervalls oder Referenzwertebereichs befindlichen Rakelkraftabweichung entlang einer Längserstreckung des Rakelwerkzeugs eine Absenkbewegung durch die Stelleinrichtung zu beenden und/oder eine Absenkbewegung durch die Stelleinrichtung um einen vorgegebenen Absenkhub fortzuführen und/oder im Anschluss an einen vorgegebenen Absenkhub zu beenden. Die Absenkbewegung kann dann in vorteilhafter Weise beendet werden, wenn über die Sensoreinrichtung eine innerhalb eines Referenzintervalls oder Referenzwertebereichs erfasste Rakelkraftabweichung erreicht und/oder überschritten wird. Das Ausrichten des Rakelwerkzeugs beziehungsweise der Rakel kann dann selbsttätig in Abhängigkeit von einer Rakelkraftabweichung und mit geringen Handhabungsaufwand realisiert werden.

Gemäß einer noch weiter bevorzugten Ausgestaltung kann die Steuereinrichtung dazu ausgebildet sein, insbesondere während einer Rakeleinrichtroutine, nach Beendigung einer Absenkbewegung durch die Stelleinrichtung den wenigstens einen Elektromagneten zu aktivieren und/oder aktiviert zu lassen und/oder die Luftlagerung beziehungsweise Luftlagereinrichtung, insbesondere die wenigstens eine Luftdüse, zu deaktivieren und/oder deaktiviert zu lassen. Folglich kann die Steuereinrichtung dazu ausgebildet sein, das Rakel beziehungsweise das Rakelwerkzeug in einer ausgerichteten Position automatisch zu fixieren. Dadurch, dass diese Fixierung automatisch oder teilautomatisch erfolgen kann, können menschliche Bedienfehler zumindest verringert und auch ein etwaiger Handhabungsaufwand geringgehalten werden.

Gemäß einer noch weiter bevorzugten Ausgestaltung kann die Steuereinrichtung dazu ausgebildet sein, insbesondere während einer Rakeleinrichtroutine, nach Beendigung einer Absenkbewegung durch die Stelleinrichtung und/oder Aktivierung des wenigstens einen Elektromagneten und/oder Deaktivierung der Luftlagerung beziehungsweise Luftlagereinrichtung, die Position des Rakelwerkzeugs zu referenzieren. Folglich kann die Steuereinrichtung eine derart vorgenommene Referenzierung für nachfolgende Druck- beziehungsweise Rakelvorgänge nutzen. Insbesondere kann ausgehend von einer Referenzierten Ausrichtung und/oder Neigungslage entweder kein weiterer Einstellaufwand oder ein verringerter Einstellaufwand erforderlich sein, da die gewünschte Rakelkraftverteilung bereits vorliegt oder mit geringem Einstellaufwand erzielt werden kann.

Gemäß einer noch weiter bevorzugten Ausgestaltung kann die Steuereinrichtung dazu ausgebildet sein, insbesondere während eines Rakelvorgangs und/oder für einen Rakelvorgang, durch die Stelleinrichtung die Position des Rakelwerkzeugs gegenüber der referenzierten Position durch eine Absenk- oder Anhebebewegung zu verändern, insbesondere um eine, vorzugsweise vorgegebene, Soll-Rakelkraft während eines Rakelvorgangs einzustellen. Das kann bedeuten, dass die Steuereinrichtung das Rakelwerkzeug beziehungsweise das Rakel gegenüber der referenzierten Position in Höhenrichtung verstellen kann, um eine Soll-Rakelkraft während des anschließenden Rakelvorgangs sicherzustellen. Eine gewünschte Rakelkraft kann dann mit geringem Einstellaufwand in zuverlässiger Weise eingestellt werden.

Die Steuereinrichtung kann weiterhin dazu ausgebildet sein, insbesondere während einer Rakeleinrichtroutine, nach Aktivierung des wenigstens einen Elektromagneten das Rakelwerkzeug mittels der Stelleinrichtung in einer Aufwärtsbewegung zu verfahren, insbesondere bis in eine Siebkorrekturposition. Das Rakelwerkzeug kann dann in einer ausgerichteten Stellung in eine vorgegebene Position, insbesondere eine Siebkorrekturposition, verstellt werden. Dadurch, dass die Aufwärtsbewegung automatisch oder teilautomatisch erfolgen kann, lässt sich ein personalintensiver Betrieb vermeiden und die Produktivität erhöhen. **In** einer Siebkorrekturposition des Rakelwerkzeugs kann insbesondere eine Siebkorrektur oder Siebverstellung erfolgen.

Weiterhin kann die Steuereinrichtung dazu ausgebildet sein, insbesondere im Rahmen einer Siebeinrichtungsroutine, zwischen dem, insbesondere sich in einer Siebkorrekturposition befindlichen und/oder eigengewichtsbasiert ausgerichteten und/oder durch federgestütztes Auflegen und/oder federgestütztes Andrücken des Rakelwerkzeugs auf einen Untergrund ausgerichteten, Rakelwerkzeug und dem, insbesondere sich in einer Siebkorrekturposition befindlichen, Drucksieb einen Wirkkontakt mit Krafteinwirkung des Rakelwerkzeugs auf das Drucksieb zu erzeugen, insbesondere frei von einer Kontaktierung eines Drucktischs und/oder einer Druckunterlage und/oder zumindest eines Siebdruckwerkstücks durch das Drucksieb und/oder durch das Rakelwerkzeug. Bei einem Wirkkontakt kann das Rakelwerkzeug in das Drucksieb hineindrücken beziehungsweise eintauchen und/oder eine elastische Verformung des Drucksiebs bewirken. Durch das Verhalten während eines solchen Wirkkontakts, insbesondere frei von einer Kontaktierung eines Drucktischs und/oder einer Druckunterlage und/oder zumindest eines Siebdruckwerkstücks durch das Drucksieb und/oder durch das Rakelwerkzeug, lassen sich in besonders vorteilhafter Weise Rückschlüsse über die Eignung oder Genauigkeit der Siebstellung für nachfolgende Druckvorgänge gewinnen.

Weiterhin kann die Steuereinrichtung dazu ausgebildet sein, insbesondere im Rahmen einer Siebeinrichtungsroutine, bei der Erzeugung eines Wirkkontakts zwischen dem Rakelwerkzeug und dem Drucksieb über die Sensoreinrichtung eine Rakelkraftzunahme zu erfassen und/oder auszuwerten. Insbesondere kann während der Erzeugung eines solchen Wirkkontakts durch die Steuereinrichtung und/oder Sensoreinrichtung eine Rakelkraftabweichung entlang einer Längserstreckung des Rakelwerkzeugs erfasst und/oder ausgewertet werden. Die erfassten und/oder ausgewerteten Daten lassen sich in vorteilhafter Weise für eine Korrektur und/oder Einstellung einer Siebstellung verwenden und damit die Druckqualität und -präzision weiter verbessern.

Weiterhin kann die Steuereinrichtung dazu ausgebildet sein, insbesondere im Rahmen einer Siebeinrichtungsroutine, während einer mittels der Drucksiebbewegungseinrichtung ausschließlich auf das, insbesondere sich in einer Siebkorrekturposition befindliche, Rakelwerkzeug erfolgenden Aufwärtsbewegung des Drucksiebs, insbesondere frei von einer Kontaktierung eines Drucktischs und/oder einer Druckunterlage und/oder zumindest eines Siebdruckwerkstücks durch das Drucksieb, über die Sensoreinrichtung eine Rakelkraftzunahme zu erfassen und/oder auszuwerten. Hierdurch können Einflüsse des Drucksiebs auf die Rakelkraftzunahme während einer Aufwärtsbewegung des Drucksiebs erfasst werden. Einflüsse des Drucksiebs können somit bei einem Druckvorgang in vorteilhafter Weise mitberücksichtigt werden.

Weiterhin kann die Steuereinrichtung dazu ausgebildet sein, insbesondere im Rahmen einer Siebeinrichtungsroutine, das Drucksieb in eine Siebkorrekturposition anzuheben und/oder zu positionieren, insbesondere frei von einer Kontaktierung eines Drucktischs und/oder einer Druckunterlage und/oder zumindest eines Siebdruckwerkstücks durch das Drucksieb, und während einer ausschließlich auf das Drucksieb erfolgenden Abwärtsbewegung des, insbesondere ausgerichteten und/oder eigengewichtsbasiert ausgerichteten und/oder durch federgestütztes Auflegen und/oder federgestütztes Andrücken des Rakelwerkzeugs auf einen Untergrund ausgerichteten, Rakelwerkzeugs über die Sensoreinrichtung eine Rakelkraftzunahme zu erfassen und/oder auszuwerten, insbesondere eine Rakelkraftzunahme frei von einer Kontaktierung eines Drucktischs und/oder einer Druckunterlage und/oder zumindest eines Siebdruckwerkstücks durch das Drucksieb und/oder durch das Rakelwerkzeug zu erfassen und/oder auszuwerten. Hierdurch können Einflüsse des Drucksiebs auf die Rakelkraftzunahme während einer Abwärtsbewegung des Rakelwerkzeugs geeignet erfasst werden. Einflüsse des Drucksiebs können somit bei einem Druckvorgang in vorteilhafter Weise mitberücksichtigt werden. Die Abwärtsbewegung des Rakelwerkzeugs auf das Drucksieb kann durchgeführt werden, bis ein Wirkkontakt mit dem Drucksieb erzeugt ist und/oder auch das Rakelwerkzeug eine Siebkorrekturposition erreicht hat. Die Siebkorrekturposition des Drucksiebs kann dabei insbesondere weiter angehoben oder oberhalb einer Siebkorrekturposition des Rakelwerkzeugs sein.

Ferner kann die Siebkorrekturposition des Drucksiebs in vorteilhafter Weise einer vorgegebene Absprunghöhe entsprechen.

Gemäß einer vorteilhaften Ausgestaltung kann die Steuereinrichtung dazu ausgebildet sein, insbesondere im Rahmen einer Siebeinrichtungsroutine, während einer mittels der Drucksiebbewegungseinrichtung ausschließlich auf das, insbesondere sich in einer Siebkorrekturposition befindliche, Rakelwerkzeug erfolgenden Aufwärtsbewegung des Drucksiebs über die Sensoreinrichtung eine Rakelkraftabweichung entlang einer Längserstreckung des Rakelwerkzeugs zu erfassen und/oder auszuwerten, insbesondere eine Rakelkraftabweichung entlang einer Längserstreckung des Rakelwerk-zeugs frei von einer Kontaktierung eines Drucktischs und/oder einer Druckunterlage und/oder zumindest eines Siebdruckwerkstücks durch das Drucksieb. Hierdurch können Einflüsse des Drucksiebs auf die Rakelkraft entlang einer Längserstreckung des Rakelwerkzeugs während einer Aufwärtsbewegung des Drucksiebs erfasst werden. Einflüsse des Drucksiebs können somit bei einem nachfolgenden Druckvorgang in besonders vorteilhafter Weise mitberücksichtigt werden und/oder Unterschiede der Kraftzunahme entlang einer Längserstreckung des Rakelwerkzeugs erkannt und berücksichtigt werden. Hierdurch kann die Druckqualität weiter verbessert werden.

Gemäß einer vorteilhaften Ausgestaltung kann die Steuereinrichtung dazu ausgebildet sein, insbesondere im Rahmen einer Siebeinrichtungsroutine, das Drucksieb in eine Siebkorrekturposition anzuheben und/oder zu positionieren, insbesondere frei von einer Kontaktierung eines Drucktischs und/oder einer Druckunterlage und/oder zumindest eines Siebdruckwerkstücks durch das Drucksieb, und während einer ausschließlich auf das Drucksieb erfolgenden Abwärtsbewegung des, insbesondere ausgerichteten und/oder eigengewichtsbasiert ausgerichteten und/oder durch federgestütztes Auflegen und/oder federgestütztes Andrücken des Rakelwerkzeugs auf einen Untergrund ausgerichteten, Rakelwerkzeugs über die Sensoreinrichtung eine Rakelkraftabweichung entlang einer Längserstreckung des Rakelwerkzeugs zu erfassen und/oder auszuwerten, insbesondere eine Rakelkraftabweichung entlang einer Längserstreckung des Rakelwerkzeugs frei von einer Kontaktierung eines Drucktischs und/oder einer Druckunterlage und/oder zumindest eines Siebdruckwerkstücks durch das Drucksieb und/oder durch das Rakelwerkzeug. Die Abwärtsbewegung des Rakelwerkzeugs kann insbesondere anschließend oder zeitgleich mit der Anhebung des Drucksiebs erfolgen. Die Abwärtsbewegung des Rakelwerkzeugs kann auf das Drucksieb, das in der Siebkorrekturposition angeordnet ist, erfolgen. Auf diese Weise können Einflüsse des Drucksiebs bei einem nachfolgenden Druckvorgang in besonders vorteilhafter Weise mitberücksichtigt werden und/oder Unterschiede der Kraftzunahme entlang einer Längserstreckung des Rakelwerkzeugs erkannt und berücksichtigt werden. Hierdurch kann die Druckqualität ebenfalls weiter verbessert werden.

Gemäß einer bevorzugten Ausgestaltung kann die Steuereinrichtung dazu ausgebildet sein, insbesondere im Rahmen einer Siebeinrichtungsroutine, das Drucksieb in einer Aufwärtsbewegung, insbesondere frei von einer Kontaktierung eines Drucktischs und/oder einer Druckunterlage und/oder zumindest eines Siebdruckwerkstücks durch das Drucksieb, gegen das, insbesondere sich in der Siebkorrekturposition befindliche, Rakelwerkzeug zu verfahren und/oder das Drucksieb stärker anzuheben als das Rakelwerkzeug, bis eine vorgegebene Absprunghöhe und/oder eine Siebkorrekturposition des Drucksiebs und/oder eine Mindestkrafteinwirkung des Rakelwerkzeugs auf das Drucksieb erreicht ist. Hierdurch kann die auf das Drucksieb wirkende Rakelkraft bei einer vorgegebenen Absprunghöhe oder Siebkorrekturposition erkannt und berücksichtigt werden, insbesondere in hoher Genauigkeit.

Die Absprunghöhe zwischen dem Drucksieb einerseits und einem Drucktisch und/oder einer Druckunterlage und/oder zumindest einem Siebdruckwerkstück andererseits kann entscheidend dafür sein, um welches Maß das Drucksieb bei einer Krafteinwirkung durch das Rakelwerkzeug heruntergedrückt wird, insbesondere aufgrund eines linienförmigen Kontakts durch das Rakelwerkzeug heruntergedrückt wird. Bei Kenntnis von Siebrückstellkraftverläufen, die zuvor ermittelt und/oder abgespeichert werden können, kann mittels der Absprunghöhe ein Rückschluss auf die jeweils vorliegende Siebrückstellkraft gezogen werden. Eine Aufwärtsbewegung des Drucksiebs relativ zum Rakelwerkzeug kann Rückschlüsse auf die elastische Verformung des Rakelwerkzeugs beziehungsweise auch der Stelleinrichtung und/oder der Rakelvorrichtung insgesamt liefern. Die Ermittlung der Auftragskraft kann hierdurch insgesamt mit erhöhter Genauigkeit vorgenommen werden.

Gemäß einer bevorzugten Ausgestaltung kann die Steuereinrichtung dazu ausgebildet sein, insbesondere im Rahmen einer Siebeinrichtungsroutine, das Drucksieb in einer Aufwärtsbewegung, insbesondere frei von einer Kontaktierung eines Drucktischs und/oder einer Druckunterlage und/oder zumindest eines Siebdruckwerkstücks durch das Drucksieb, anzuheben bis eine Siebkorrekturposition und/oder bis eine vorgegebene Absprunghöhe erreicht ist. Mithin kann in einer Siebkorrekturposition und/oder einer vorgegebene Absprunghöhe des Drucksiebs ein Kontakt zwischen dem Drucksieb und einem Drucktischs und/oder einer Druckunterlage und/oder zumindest eines Siebdruckwerkstücks sicher vermieden werden.

Anstelle einer Aufwärtsbewegung des Drucksiebs zur Krafteinwirkung auf das Rakelwerkzeug kann vorliegend auch eine Abwärtsbewegung des Rakelwerkzeugs auf das Drucksieb erfolgen, insbesondere sofern das Drucksieb frei von einer Kontaktierung einer Druckunterlage beziehungsweise eines Drucktischs bleibt.

Gemäß einer bevorzugten Ausgestaltung kann die Steuereinrichtung dazu ausgebildet sein, das Rakelwerkzeug, insbesondere im Rahmen einer Siebeinrichtungsroutine, auf das, insbesondere sich in einer Siebkorrekturposition befindliche, Drucksieb in einer Abwärtsbewegung zu verfahren, insbesondere bis eine Mindestkrafteinwirkung des Rakelwerkzeugs auf das Drucksieb erreicht ist und/oder bis das Rakelwerkzeug in einer Siebkorrekturstellung positioniert ist und/oder bis ein Wirkkontakt zwischen dem Rakelwerkzeug und dem Drucksieb erzeugt ist. Die Ermittlung von Kräften zwischen dem Rakelwerkzeug und dem Drucksieb können hierdurch insgesamt mit erhöhter Genauigkeit vorgenommen werden.

Gemäß einer besonders bevorzugten Ausgestaltung kann die Steuereinrichtung dazu ausgebildet sein, insbesondere im Rahmen einer Siebeinrichtungsroutine, das Drucksieb in Abhängigkeit von erfassten und/oder ausgewerteten Daten der Sensoreinrichtung und/oder erfasster und/oder ausgewerteter Rakelkraftzunahmen und/oder Rakelkraftabweichungen entlang einer Längserstreckung des Rakelwerkzeugs das Drucksieb um zumindest eine Achse zu neigen, insbesondere mittels der Drucksiebbewegungseinrichtung um eine Drucksiebquerachse und/oder Drucksieblängsachse zu schwenken und/oder zu verkippen. Dies ermöglicht besonders vorteilhafte Positionierungen und Ausrichtungen beziehungsweise Justierungen des Drucksiebs für qualitativ hochwertige Druckprozesse.

Gemäß einer besonders bevorzugten Ausgestaltung kann die Steuereinrichtung dazu ausgebildet sein, insbesondere im Rahmen einer Siebeinrichtungsroutine, die Position des ersten und zweiten Linearantriebs der Drucksiebbewegungseinrichtung zu referenzieren, insbesondere bei einer vorgegebenen Absprunghöhe. Folglich kann die Steuereinrichtung eine derart vorgenommene Referenzierung für nachfolgende Druck- beziehungsweise Rakelvorgänge und/oder für weitere Einstellungen der Vorrichtung nutzen. Insbesondere kann ausgehend von referenzierten Positionen der Linearantriebe entweder kein weiterer Einstellaufwand oder ein verringerter Einstellaufwand erforderlich sein, da die gewünschte Ausrichtung des Drucksiebs bereits vorliegt oder mit geringem Einstellaufwand erzielt werden kann.

Des Weiteren kann die Steuereinrichtung dazu ausgebildet sein, insbesondere im Rahmen einer Siebeinrichtungsroutine, den ersten und zweiten Linearantrieb der Drucksiebbewegungseinrichtung ausgehend von der referenzierten Position unabhängig voneinander zu verfahren, bis die über die Sensoreinrichtung erfasste Rakelkraftabweichung entlang einer Längserstreckung des Rakelwerkzeugs gleich null ist oder innerhalb eines vorgegebenen Abweichungsintervalls beziehungsweise Abweichungswertbereichs liegt. Folglich kann mittels der Steuereinrichtung eine Ausrichtung des Drucksiebs relativ zum Rakelwerkzeug derart erfolgen, dass bei einer vorgegebenen Absprunghöhe eine entlang einer Längserstreckung gleiche oder im Wesentlichen gleiche Belastung des Rakelwerkzeugs vorliegt. Auf diese Weise kann ein Druck- beziehungsweise Rakelvorgang mit besonders gleichmäßiger Rakelkraft bei gleichzeitig geringem Einstellaufwand realisiert werden.

Gemäß einer besonders bevorzugten Ausgestaltung kann die Steuereinrichtung dazu ausgebildet sein, insbesondere im Rahmen einer Siebeinrichtungsroutine, die relative Lage des ersten und des zweiten Linearantriebs der Drucksiebbewegungseinrichtung relativ zueinander zu referenzieren, wenn die über die Sensoreinrichtung erfasste Rakelkraftabweichung entlang einer Längserstreckung des Rakelwerkzeugs gleich null ist oder innerhalb eines vorgegebenen Abweichungsintervalls beziehungsweise Abweichungswertbereichs liegt. Folglich kann die Steuereinrichtung eine derart vorgenommene Referenzierung für nachfolgende Druck- beziehungsweise Rakelvorgänge nutzen. Insbesondere kann ausgehend von einer referenzierten relativen Lage der beiden Linearantriebe zueinander entweder kein weiterer Einstellaufwand oder ein verringerter Einstellaufwand erforderlich sein, da die gewünschte Rakelkraftverteilung bereits vorliegt oder mit geringem Einstellaufwand erzielt werden kann.

Gemäß einer weiteren besonders bevorzugten Ausgestaltung kann die Steuereinrichtung dazu ausgebildet sein, insbesondere im Rahmen einer Siebeinrichtungsroutine, das Rakelwerkzeug mittels der Stelleinrichtung von einer ersten Referenzposition in eine zweite Referenzposition in Bewegungsrichtung zu verfahren oder zu verstellen, insbesondere unter Beibehaltung eines Kontakts mit dem Drucksieb oder frei von einem Kontakt mit dem Drucksieb. Folglich kann die Steuereinrichtung eine Verstellung des Rakelwerkzeugs von einer ersten Referenzposition in einer zweAsite Referenzposition und/oder umgekehrt automatisch und/oder mit geringem Handhabungsaufwand veranlassen. Mehrere Referenzpositionen können dann für die weitere Steuerung und/oder Regelung genutzt werden.

Des Weiteren kann die Steuereinrichtung dazu ausgebildet sein, insbesondere im Rahmen einer Siebeinrichtungsroutine, einen ersten und einen zweiten Linearantrieb zusammen und einen dritten Linearantrieb unabhängig davon zu verfahren, derart, dass bei vorgegebener Absprunghöhe die über die Sensoreinrichtung erfasste Rakelkraftabweichung zwischen der ersten Referenzposition und der zweiten Referenzposition gleich null ist oder innerhalb eines vorgegebenen Abweichungsintervalls liegt. Auf diese Weise kann sichergestellt werden, dass die Rakelkraft in den beiden Referenzpositionen innerhalb eines vorgegebenen Abweichungsintervalls beziehungsweise Abweichungswertbereichs liegt, wodurch ein besonders gleichmäßiger Druck- und/oder Rakelvorgang sichergestellt werden kann.

Bevorzugt kann die Steuereinrichtung dazu ausgebildet sein, insbesondere im Rahmen einer Siebeinrichtungsroutine, die Position eines ersten und zweiten Linearantriebs relativ zu einem dritten Linearantrieb der Drucksiebbewegungseinrichtung zu referenzieren. Folglich kann die Steuereinrichtung eine derart vorgenommene Referenzierung für nachfolgende Druck- beziehungsweise Rakelvorgänge nutzen. Insbesondere kann ausgehend von einer referenzierten relativen Lage der beiden Linearantriebe zueinander entweder kein weiterer Einstellaufwand oder ein verringerter Einstellaufwand erforderlich sein, da die gewünschte Rakelkraftverteilung bereits vorliegt oder mit geringem Einstellaufwand erzielt werden kann.

Gemäß einer noch weiter bevorzugten Ausgestaltung kann die Steuereinrichtung und/oder die Stelleinrichtung dazu ausgebildet sein, das Rakelwerkzeug während der Durchführung eines Druckvorganges auf einer festgelegten Höhenposition zu halten. Durch das Halten einer festgelegten Höhenposition kann ein kontinuierliches, gleichbleibendes beziehungsweise gleichmäßiges Druckbild gewährleistet werden.

Alternativ oder ergänzend ist es möglich, dass eine festgelegte Höhenposition während der Durchführung eines Druckvorganges mittels der Stelleinrichtung und/oder der Steuereinrichtung fixiert und/oder unverändert aufrechterhalten bleibt. Auf diese Weise kann ein kontinuierliches, gleichbleibendes beziehungsweise gleichmäßiges Druckbild über das gesamte Drucklayout eines Drucksiebs mit erhöhter Sicherheit gewährleistet werden.

Gemäß einer noch weiter bevorzugten Ausgestaltung kann die Steuereinrichtung dazu ausgebildet sein, die Höhenposition des Rakelwerkzeugs während der Durchführung eines Druckvorganges kraftbasiert zu steuern und/oder zu regeln. Eine kraftbasierte Steuerung und/oder Regelung kann den Vorteil gewährleisten, dass Druckmasse mit einer entlang der Rakelrichtung gleichbleibenden Kraft oder einem gleichbleibenden Druck durch das Drucksieb hindurchgepresst wird. Kraftschwankungen können ausgeglichen werden. Es lässt sich damit vermeiden, dass beispielsweise lokal eine zu große Menge oder auch zu geringe Menge an Druckmasse durch das Drucksieb gepresst wird.

Gemäß einer noch weiter bevorzugten Ausgestaltung kann die Steuereinrichtung und/oder die Stelleinrichtung dazu ausgebildet sein, eine festgelegte Rakelkraft und/oder eine festgelegte und wirksame Auftragskraft während der Durchführung eines Druckvorganges zu halten. Dies hat den Vorteil, dass mit weiter erhöhter Sicherheit über das gesamte Drucklayout des Drucksiebs eine konstant bleibende Kraft ausgeübt werden kann und ein damit ein besonders gleichmäßiges Druckbild erzeugt werden kann. Schwankungen in der Rakelkraft können somit in besonders vorteilhafter Weise ausgeglichen beziehungsweise vorgebeugt werden. Hierdurch kann eine besonders hohe beziehungsweise weiter verbesserte Druckqualität gewährleistet werden.

Gemäß einer noch weiter bevorzugten Ausgestaltung kann die Steuereinrichtung dazu ausgebildet sein, Messdaten von fortlaufenden und/oder wiederkehrenden Erfassungen der Sensoreinrichtung während einer mittels der Rakelbewegungseinrichtung erfolgenden Bewegung der Rakelvorrichtung entlang der Rakelbewegungsrichtung und/oder während eines Druckvorganges in Mittelwerte umzurechnen und/oder abzuspeichern und/oder zu verarbeiten. Mithilfe der Umrechnung und/oder Abspeicherung und/oder Verarbeitung von erfassten Messdaten in Mittelwerte kann in vorteilhafter Weise eine geeignete Datenbasis für nachfolgende Steuer- und Regelprozesse geschaffen werden und ein insgesamt geringer Rechenaufwand wird gewährleistet. Intensive Rechenvorgänge der Steuereinrichtung sind hierdurch reduzierbar und zum anderen kann ein besonders gleichmäßiges Druckbild weiter begünstigt werden. Zudem kann auf diese Weise Speicherplatz für Messwerte und Messdaten eingespart werden.

Gemäß einer noch weiter bevorzugten Ausgestaltung kann die Steuereinrichtung dazu ausgebildet sein, Messdaten von fortlaufenden und/oder wiederkehrenden Erfassungen von einzelnen Kraftmesssensoren während einer mittels der Rakelbewegungseinrichtung erfolgenden Bewegung der Rakelvorrichtung entlang der Rakelbewegungsrichtung und/oder während eines Druckvorganges in Mittelwerte umzurechnen und/oder abzuspeichern und/oder zu verarbeiten. Die Informationsgüte durch die Differenzierung von Daten einzelner Kraftmesssensoren kann auf diese Weise verbessert werden. Gleichzeitig kann die zu verarbeitende Datenmenge reduziert und die Verarbeitung, Speicherung und Umrechnung von Daten beziehungsweise Messwerten beschleunigt werden.

Ein weiterer unabhängiger Aspekt der vorliegenden Erfindung betrifft eine Vorrichtung zur Herstellung von dreidimensionalen Siebdruckwerkstücken, insbesondere 3D-Siebdruckanlage, mit einem Drucksieb und mit einer Rakelvorrichtung zum Fluten des Drucksiebs mit einer Druckmasse und/oder zum Pressen von Druckmasse durch das Drucksieb, wobei die Rakelvorrichtung wenigstens ein Rakelwerkzeug und eine Rakellagerung zur Lagerung des Rakelwerkzeugs aufweist, wobei die Rakellagerung eine Justiereinrichtung zur Ausrichtung des Rakelwerkzeugs aufweist, wobei die Justiereinrichtung zumindest eine Federlagerung aufweist, die durch eine Ausrichtbewegung des Rakelwerkzeugs federelastisch auslenkbar ist, und wobei die Justiereinrichtung zur selbsttätigen Ausrichtung des Rakelwerkzeugs durch federgestütztes Auflegen und/oder federgestütztes Andrücken des Rakelwerkzeugs auf einen Untergrund ausgebildet ist.

Auf diese Weise können wiederum in besonders vorteilhafter Weise bei einer Ausrichtung des Rakelwerkzeugs die zur Ausrichtung aufgebrachten und auf das Rakelwerkzeug wirkenden Stellkräfte - gegebenenfalls zusätzlich zu den durch das jeweilige Eigengewicht des Rakelwerkzeugs beziehungsweise des Rakelwerkzeugs und der mit dem Rakelwerkzeug fest beziehungsweise unbeweglich verbundenen Komponenten oder Baugruppen erzeugten Stellkräften - zumindest teilweise durch Federkräfte erzeugt und/oder mit den jeweils durch das Eigengewicht erzeugten Stellkräften überlagert werden, insbesondere durch Federkräfte, die dem jeweiligen Eigengewicht entgegenwirken und/oder in Richtung des Eigengewichtskraft wirken. Die Justiereinrichtung kann auf diese Weise zur selbsttätigen Ausrichtung des Rakelwerkzeugs durch eigengewichtsbasierte Auflage des Rakelwerkzeugs auf einem Untergrund bei Überlagerung mit Federkräften, insbesondere mit Federkräften, die dem jeweiligen Eigengewicht entgegenwirken und/oder in Richtung der Eigengewichtskraft wirken, ausgebildet sein.

Gemäß einer bevorzugten Ausgestaltung kann die Federlagerung eine auf das Rakelwerkzeug wirkende Federvorspannung aufbringen und/oder zum Aufbringen einer auf das Rakelwerkzeug wirkenden Federvorspannung eingerichtet sein, insbesondere bei selbsttätiger Ausrichtung des Rakelwerkzeugs. Durch eine solche Vorspannung können etwaige Ausrichtbewegungen des Rakelwerkzeugs in besonders vorteilhafter Weise kontrolliert und eine eingenommene Ausrichtstellung kann stabil bis zur Fixierung des Rakelwerkzeugs aufrechterhalten bleiben.

Gemäß einer weiter bevorzugten Ausgestaltung kann die Federlagerung dazu eingerichtet sein, bei Aufliegen des Rakelwerkzeugs auf einem Untergrund, eine auf das Rakelwerkezug auf den Untergrund drückende Federkraft und/oder eine das Rakelwerkzeug von dem Untergrund wegdrückende Federkraft aufzubringen. Durch eine das Rakelwerkzeug auf den Untergrund drückende Federkraft kann eine stabile und sichere Auflage des Rakelwerkzeugs und damit eine genaue Ausrichtung begünstigt werden. Durch eine das Rakelwerkzeug von dem Untergrund weg drückende Federkraft kann eine zu starkes Andrücken des Rakelwerkzeugs auf einen Untergrund verhindert werden und gleichzeitig eine besonders gut kontrollierte Ausrichtbewegung des Rakelwerkzeugs ermöglicht werden.

Gemäß einer weiter bevorzugten Ausgestaltung kann die Federlagerung zur Erzeugung einer in Gravitationsrichtung und/oder entgegen der Gravitationsrichtung auf das Rakelwerkzeug wirkende Federkraft eingerichtet sein. Durch eine in Gravitationsrichtung wirkende Federkraft kann das Rakelwerkzeugs auf einen Untergrund angedrückt werden und durch eine entgegen der Gravitationsrichtung auf das Rakelwerkzeug wirkende Federkraft kann dieses von dem Untergrund weggedrückt und damit der Gewichtskraft entgegengewirkt werden.

Gemäß einer noch weiter bevorzugten Ausgestaltung kann das Rakelwerkzeug durch die Federlagerung, insbesondere in einer unfixierten Betriebsstellung des Rakelwerkzeugs, in einer auf einen Untergrund weisenden Absenkrichtung und/oder in einer von einem Untergrund weg weisenden Anheberichtung federkraftbeaufschlagt sein. Durch Federkraftbeaufschlagung in Absenkrichtung kann das Rakelwerkzeugs besonders vorteilhaft auf einen Untergrund angedrückt werden. Durch die Federkraftbeaufschlagung in Anheberichtung kann das Rakelwerkzeugs besonders vorteilhaft von dem Untergrund weg gedrückt werden.

Gemäß einer weiter bevorzugten Ausgestaltung kann die Federlagerung zumindest eine Feder oder eine Mehrzahl von Federn aufweisen. Die Feder oder Federn kann/können zwischen der Justierhalterung und der Tragstruktur wirken. Durch eine solche Feder oder durch mehrere Federn kann in besonders vorteilhafter Weise eine geeignete Federkraft, beispielsweise in Absenkrichtung orientiert und/oder in Anheberichtung orientiert, erzeugt werden. Bei mehreren Federn kann in vorteilhafter Weise eine stabile Lagerung der Rakelvorrichtung in der jeweiligen Lage aufrecht erhalten werden.

Ein weiterer unabhängiger Aspekt der vorliegenden Erfindung betrifft eine Vorrichtung zur Herstellung von dreidimensionalen Siebdruckwerkstücken, insbesondere eine 3D-Siebdruckanlage und/oder eine automatisierte 3D-Siebdruckanlage, mit einem Drucksieb und mit einer Rakelvorrichtung zum Fluten des Drucksiebs mit einer Druckmasse und/oder zum Pressen von Druckmasse durch das Drucksieb, wobei die Rakelvorrichtung wenigstens ein Rakelwerkzeug und eine Rakellagerung zur Lagerung des Rakelwerkzeugs aufweist, wobei die Rakellagerung eine Justiereinrichtung zur Ausrichtung des Rakelwerkzeugs aufweist, wobei die Justiereinrichtung zur selbsttätigen Ausrichtung des Rakelwerkzeugs ausgebildet ist und wobei die Rakelvorrichtung eine Fixiereinrichtung zur schraubenlosen und/oder kraftschlüssigen Fixierung des Rakelwerkzeugs in seiner ausgerichteten Position aufweist.

Mithilfe der Justiereinrichtung kann das Rakelwerkzeug gezielt ausgerichtet werden. Durch die Ausrichtung des Rakelwerkzeugs kann gleichzeitig die Kraftverteilung, mit welcher das Rakelwerkzeug zum Beispiel entlang seiner Aufstandslinie oder beispielsweise entlang der Längserstreckung auf das Drucksieb oder auf den Drucktisch einwirkt, eingestellt werden. Somit kann mithilfe einer erfindungsgemäßen Justiereinrichtung eine gleichmäßige beziehungsweise angepasste auf das Drucksieb und/oder die jeweilige Druckunterlage einwirkende Kraftverteilung erreicht werden. Einer gegebenenfalls ungünstigen Zentrierung des Rakelwerkzeugs kann durch eine gezielte Justierung damit zuvorgekommen werden. Insbesondere kann mittels der Ausrichtung ein Auftragen von gleichmäßigen, parallel zueinander angeordneten Schichten sichergestellt werden.

Fernern kann die Ausrichtung selbsttätig und somit vollautomatisch, insbesondere ohne manuelle Schritte nach dem Einleiten eines Ausrichtvorgangs, erfolgen. Das Ausrichten des Rakelwerkzeugs kann mit geringem Einstellaufwand erzielt werden.

Das Rakelwerkzeug kann schraubenlos und/oder kraftschlüssig in seiner ausgerichteten Position fixiert werden. Folglich erlaubt die Vorrichtung eine schnelle und flexible Fixierung des Rakelwerkzeugs mit geringem Einstellaufwand und geringem Handhabungsbedarf. Die Gefahr von Fehlbedienungen kann mithin geringgehalten werden.

Ein noch weiterer unabhängiger Aspekt der vorliegenden Erfindung betrifft eine Vorrichtung zur Herstellung von dreidimensionalen Siebdruckwerkstücken, insbesondere eine 3D-Siebdruckanlage und/oder eine automatisierte 3D-Siebdruckanlage, mit einem Drucksieb, mit einer Rakelvorrichtung zum Fluten des Drucksiebs mit einer Druckmasse und/oder zum Pressen von Druckmasse durch das Drucksieb und mit einer Steuereinrichtung zur Ausführung einer Rakel- und/oder Siebeinrichtungsroutine.

Ein noch weiterer unabhängiger Aspekt der vorliegenden Erfindung betrifft eine Vorrichtung zur Herstellung von dreidimensionalen Siebdruckwerkstücken, insbesondere eine 3D-Siebdruckanlage und/oder eine automatisierte 3D-Siebdruckanlage, mit einem Drucksieb, mit einer ein Rakelwerkzeug aufweisenden Rakelvorrichtung zum Fluten des Drucksiebs mit einer Druckmasse und/oder zum Pressen von Druckmasse durch das Drucksieb und mit einer Steuereinrichtung zur Ausführung einer Rakel- und/oder Siebeinrichtungsroutine, wobei die Steuereinrichtung dazu ausgebildet ist, im Rahmen einer Siebeinrichtungsroutine, zwischen dem sich in einer Siebkorrekturposition befindlichen, bevorzugt eigengewichtsbasiert ausgerichteten und/oder durch federgestütztes Auflegen und/oder federgestütztes Andrücken des Rakelwerkzeugs auf einen Untergrund ausgerichteten, Rakelwerkzeug und dem sich in einer Siebkorrekturposition befindlichen Drucksieb einen Wirkkontakt mit Krafteinwirkung des Rakelwerkzeugs in das Drucksieb, frei von einer Kontaktierung eines Drucktischs und/oder einer Druckunterlage und/oder zumindest eines Siebdruckwerkstücks durch das Drucksieb und/oder durch das Rakelwerkzeug, zu erzeugen.

Die Merkmale und Vorteile der Vorrichtung zur Herstellung von dreidimensionalen Siebdruckwerkstücken, wie sie voranstehend beschrieben worden sind, sind einzeln oder miteinander kombinierbar auch bei einer Vorrichtung gemäß den voranstehend beschriebenen weiteren unabhängigen Aspekten der vorliegenden Erfindung Anwendung anzuwenden.

Ein noch weiterer unabhängiger Aspekt der vorliegenden Erfindung betrifft eine Rakelvorrichtung. Erfindungsgemäß kann eine Rakelvorrichtung für eine Vorrichtung zur Herstellung von dreidimensionalen Siebdruckwerkstücken und/oder für eine 3D-Siebdruckanlage vorgesehen sein, insbesondere für eine voranstehend beschriebene Vorrichtung. Eine erfindungsgemäße Rakelvorrichtung kann ausgestattet sein mit wenigstens einem Rakelwerkzeug zum Fluten eines Drucksiebs mit einer Druckmasse und/oder zum Pressen von Druckmasse durch ein Drucksieb, wobei die Rakelvorrichtung wenigstens ein Rakelwerkzeug und eine Rakellagerung zur Lagerung des Rakelwerkzeugs aufweist, wobei die Rakellagerung eine Justiereinrichtung zur Ausrichtung des Rakelwerkzeugs aufweist, wobei die Justiereinrichtung zur selbsttätigen Ausrichtung des Rakelwerkzeugs durch eigengewichtsbasierte Auflage des Rakelwerkzeugs auf einem Untergrund ausgebildet ist.

Ein noch weiterer unabhängiger Aspekt der vorliegenden Erfindung betrifft ebenfalls eine Rakelvorrichtung, insbesondere für eine Vorrichtung zur Herstellung von dreidimensionalen Siebdruckwerkstücken gemäß der voranstehenden Beschreibung und/oder für eine 3D-Siebdruckanlage, mit einer Rakelvorrichtung zum Fluten eines Drucksiebs mit einer Druckmasse und/oder zum Pressen von Druckmasse durch ein Drucksieb und mit einer Rakellagerung zur Lagerung des Rakelwerkzeugs, wobei die Rakellagerung eine Justiereinrichtung zur Ausrichtung des Rakelwerkzeugs aufweist, wobei die Justiereinrichtung zumindest eine Federlagerung aufweist, die durch eine Ausrichtbewegung des Rakelwerkzeugs federelastisch auslenkbar ist, und wobei die Justiereinrichtung zur selbsttätigen Aus-richtung des Rakelwerkzeugs durch federgestütztes Auflegen und/oder federgestütztes Andrücken des Rakelwerkzeugs auf einen Untergrund ausgebildet ist.

Ein noch weiterer unabhängiger Aspekt der vorliegenden Erfindung betrifft eine Rakelvorrichtung. Erfindungsgemäß kann eine Rakelvorrichtung für eine Vorrichtung insbesondere für eine vorschlagsgemäße Vorrichtung zur Herstellung von dreidimensionalen Siebdruckwerkstücken und/oder für eine 3D-Siebdruckanlage vorgesehen sein, insbesondere für eine voranstehend beschriebene Vorrichtung. Eine erfindungsgemäße Rakelvorrichtung kann ausgestattet sein mit wenigstens einem Rakelwerkzeug zum Fluten eines Drucksiebs mit einer Druckmasse und/oder zum Pressen von Druckmasse durch ein Drucksieb, wobei die Rakelvorrichtung wenigstens ein Rakelwerkzeug und eine Rakellagerung zur Lagerung des Rakelwerkzeugs aufweist, wobei die Rakellagerung eine Justiereinrichtung zur Ausrichtung des Rakelwerkzeugs aufweist, wobei die Justiereinrichtung zur selbsttätigen Ausrichtung des Rakelwerkzeugs ausgebildet ist und wobei die Rakelvorrichtung eine Fixiereinrichtung zur schraubenlosen und/oder kraftschlüssigen Fixierung des Rakelwerkzeugs in seiner ausgerichteten Position aufweist.

Vorzugsweise kann die Justiereinrichtung eine Luftlagereinrichtung zur Ausrichtung des Rakelwerkzeugs aufweisen, wobei die Justiereinrichtung vorzugsweise eine Neigungsjustierung des Rakelwerkzeugs mittels der Luftlagereinrichtung um eine Neigungsachse erlaubt.

Des Weiteren kann die Luftlagereinrichtung zumindest eine Luftdüse aufweisen.

Es wird darauf hingewiesen, dass die Merkmale und Vorteile der Vorrichtung zur Herstellung von dreidimensionalen Siebdruckwerkstücken, wie sie voranstehend beschrieben worden sind, einzeln oder miteinander kombinierbar auch bei einer Rakelvorrichtung gemäß den voranstehend beschriebenen unabhängigen Aspekten der vorliegenden Erfindung Anwendung finden können.

Ein noch weiterer unabhängiger Aspekt der vorliegenden Erfindung betrifft eine Justiereinrichtung für eine vorschlagsgemäße Vorrichtung zur Herstellung von dreidimensionalen Siebdruckwerkstücken und/oder für eine 3D-Siebdruckanlage und/oder für eine vorschlagsgemäße Rakelvorrichtung zur Ausrichtung eines Rakelwerkzeugs.

Es wird darauf hingewiesen, dass die Merkmale und Vorteile der Vorrichtung zur Herstellung von dreidimensionalen Siebdruckwerkstücken, wie sie voranstehend beschrieben worden sind, und/oder die Merkmale und Vorteile der Rakelvorrichtung, wie sie weiter oben beschrieben worden sind, einzeln oder miteinander kombinierbar auch bei einer Justiereinrichtung gemäß den voranstehend beschriebenen unabhängigen Aspekten der vorliegenden Erfindung Anwendung finden können.

Ein weiterer unabhängiger Aspekt der vorliegenden Erfindung betrifft ein Verfahren zum Ausrichten eines Rakelwerkzeugs einer, insbesondere vorschlagsgemäßen, Vorrichtung zur Herstellung von dreidimensionalen Siebdruckwerkstücken, und/oder für eine 3D-Siebdruckanlage und/oder für eine, insbesondere vorschlagsgemäße Rakelvorrichtung, bei dem das Rakelwerkzeug auf einem Untergrund zur Auflage gebracht wird und das Rakelwerkzeug durch eigengewichtsbasierte Auflage auf dem Untergrund selbsttätig ausgerichtet wird.

Ein noch weiterer unabhängiger Aspekt der vorliegenden Erfindung betrifft ein Verfahren zum Ausrichten eines Rakelwerkzeugs einer Vorrichtung zur Herstellung von dreidimensionalen Siebdruckwerkstücken, insbesondere gemäß der voranstehenden Beschreibung, und/oder für eine 3D-Siebdruckanlage und/oder für eine Rakelvorrichtung, insbesondere gemäß der voranstehenden Beschreibung, bei dem ein Rakelwerkzeug auf einem Untergrund zur Auflage gebracht wird und das Rakelwerkzeug durch federgestütztes Auflegen und/oder federgestütztes Andrücken des Rakelwerkzeugs auf einen Untergrund selbsttätig ausgerichtet wird.

Ein weiterer unabhängiger Aspekt der vorliegenden Erfindung betrifft ein Verfahren zum Ausrichten eines Rakelwerkzeugs einer, insbesondere vorschlagsgemäßen, Vorrichtung zur Herstellung von dreidimensionalen Siebdruckwerkstücken, und/oder für eine 3D-Siebdruckanlage und/oder für eine, insbesondere vorschlagsgemäße Rakelvorrichtung, bei dem das Rakelwerkzeug in seiner ausgerichteten Position schraubenlos und/oder kraftschlüssig fixiert wird.

Bevorzugt kann eine Neigungsjustierung um eine Neigungsachse durchgeführt werden.

Des Weiteren kann eine Luftlagerung des Rakelwerkzeugs erzeugt werden, wobei die Ausrichtung des Rakelwerkzeugs mittels der Luftlagerung erfolgt.

Bevorzugt kann das Rakelwerkzeug während des Ausrichtens magnetisch gehalten werden.

Vorzugsweise wird das Rakelwerkzeug während des Ausrichtens mittels eines Permanentmagneten gehalten.

Weiterhin kann das Rakelwerkzeug in der ausgerichteten Position kraftschlüssig fixiert werden.

Gemäß einer bevorzugten Ausgestaltung kann das Rakelwerkzeug in der ausgerichteten Position magnetisch fixiert werden. Gemäß einer weiter bevorzugten Ausgestaltung kann das Rakelwerkzeug in der ausgerichteten Position durch wenigstens eines Elektromagneten fixiert werden und/oder das Rakelwerkzeug kann in der ausgerichteten Position elektromagnetisch fixiert werden.

Gemäß einer noch weiter bevorzugten Ausgestaltung kann das Rakelwerkzeug während eines Rakelvorgangs in der ausgerichteten Position kraftschlüssig fixiert sein und/oder fixiert bleiben.

Weiterhin kann das Rakelwerkzeug während eines Rakelvorgangs in der ausgerichteten Position magnetisch, insbesondere durch einen Elektromagneten, fixiert sein und/oder fixiert bleiben.

Gemäß einer noch weiter bevorzugten Ausgestaltung kann während der selbsttätigen Ausrichtung eine Federlagerung der Rakellagerung eine auf das Rakelwerkzeug wirkende Federvorspannung aufbringt.

Gemäß einer noch weiter bevorzugten Ausgestaltung kann eine Federlagerung der Rakellagerung, bei Aufliegen des Rakelwerkzeugs auf einem Untergrund, eine auf das Rakelwerkezug auf den Untergrund drückende Federkraft und/oder eine das Rakelwerkzeug von dem Untergrund wegdrückende Federkraft aufbringt.

Gemäß einer noch weiter bevorzugten Ausgestaltung kann eine Federlagerung der Rakellagerung eine in Gravitationsrichtung und/oder entgegen der Gravitationsrichtung auf das Rakelwerkzeug wirkende Federkraft aufbringt.

Gemäß einer noch weiter bevorzugten Ausgestaltung kann die Federlagerung das Rakelwerkzeug, insbesondere in einer unfixierten Betriebsstellung des Rakelwerkzeugs, in einer auf einen Untergrund weisenden Absenkrichtung und/oder in einer von einem Untergrund weg weisenden Anheberichtung federkraftbeaufschlagt.

Ein weiterer unabhängiger Aspekt der vorliegenden Erfindung betrifft ein Verfahren zum Ausrichten eines Rakelwerkzeugs einer, insbesondere vorschlagsgemäßen, Vorrichtung zur Herstellung von dreidimensionalen Siebdruckwerkstücken, und/oder für eine 3D-Siebdruckanlage, bei dem zwischen einem, insbesondere sich in einer Siebkorrekturposition befindlichen und/oder eigengewichtsbasiert ausgerichteten und/oder durch federgestütztes Auflegen und/oder federgestütztes Andrücken des Rakelwerkzeugs auf einen Untergrund ausgerichteten, Rakelwerkzeug und einem, insbesondere sich in einer Siebkorrekturposition befindlichen, Drucksieb einen Wirkkontakt mit Krafteinwirkung des Rakelwerkzeugs in das Drucksieb in einer Stellung frei von einer Kontaktierung eines Drucktischs und/oder einer Druckunterlage und/oder zumindest eines Siebdruckwerkstücks durch das Drucksieb und/oder durch das Rakelwerkzeug erzeugt wird, bei dem während der Erzeugung eines Wirkkontakts zwischen dem Rakelwerkzeug und dem Drucksieb über eine Sensoreinrichtung eine Rakelkraftzunahme und/oder eine Rakelkraftabweichung entlang einer Längsrichtung des Rakelwerkzeugs erfasst und/oder ausgewertet wird und bei dem das Drucksieb in Abhängigkeit von erfassten und/oder ausgewerteten Daten der Sensoreinrichtung und/oder erfasster und/oder ausgewerteter Rakelkraftzunahmen und/oder Rakelkraftabweichungen entlang einer Längserstreckung des Rakelwerkzeugs das Drucksieb um zumindest eine Achse geneigt wird, insbesondere mittels der Drucksiebbewegungseinrichtung um eine Drucksiebquerachse und/oder Drucksieblängsachse geschwenkt und/oder verkippt wird.

Gemäß einer bevorzugten Ausgestaltung des Verfahrens kann vorgesehen sein, dass das Rakelwerkzeug im Rahmen einer Siebeinrichtroutine ausgehend von einer abgesenkten Stellung und/oder einer eigengewichtsbasiert ausgerichteten und/oder durch federgestütztes Auflegen und/oder federgestütztes Andrücken des Rakelwerkzeugs auf einen Untergrund ausgerichteten Stellung in einer Aufwärtsbewegung bis in eine Siebkorrekturposition angehoben wird.

Gemäß einer bevorzugten Ausgestaltung des Verfahrens kann vorgesehen sein, dass das Drucksieb im Rahmen einer Siebeinrichtungsroutine in einer Aufwärtsbewegung angehoben wird bis in eine Siebkorrekturposition, insbesondere frei von einer Kontaktierung eines Drucktischs und/oder einer Druckunterlage und/oder zumindest eines Siebdruckwerkstücks durch das Drucksieb, wobei die Siebkorrekturposition des Drucksiebs bevorzugt eine weiter angehobene Stellung ist als die Siebkorrekturposition des Rakelwerkzeugs.

Gemäß einer bevorzugten Ausgestaltung des Verfahrens kann vorgesehen sein, dass das Drucksieb im Rahmen einer Siebeinrichtungsroutine während auf das, insbesondere sich in einer Siebkorrekturposition befindliche, Rakelwerkzeug aufwärts bewegt wird, insbesondere frei von einer Kontaktierung eines Drucktischs und/oder einer Druckunterlage und/oder zumindest eines Siebdruckwerkstücks durch das Drucksieb, und über die Sensoreinrichtung eine Rakelkraftzunahme und/oder eine Rakelkraftabweichung entlang einer Längserstreckung des Rakelwerkzeugs erfasst und/oder ausgewertet wird.

Die vorstehend in Bezug auf die Vorrichtung und/oder die Rakelvorrichtung und/oder die Justiereinrichtung beschriebenen Einzelheiten und unabhängigen Aspekte, einschließlich der nebengeordneten Aspekte betreffend eine Vorrichtung und/oder Rakelvorrichtung und/oder Justiereinrichtung, sowie auch die jeweils beschriebenen Vorteile gelten in gleicher Weise für die voranstehend beschriebenen erfindungsgemäßen Verfahren gemäß den weiteren unabhängigen Aspekten und den jeweiligen vorteilhaften Ausgestaltungen.

Nachfolgend wird die Erfindung beispielhaft anhand vorteilhafter Ausführungsformen unter Bezugnahme auf die beigefügten Figuren beschrieben.

Es zeigen jeweils schematisch:
- Fig. 1: eine perspektivische Darstellung einer Vorrichtung zur Herstellung von dreidimensionalen Siebdruckwerkstücken gemäß einem Ausführungsbeispiel der vorliegenden Erfindung;
- Fig. 2: eine Vorderansicht als Schnittdarstellung auf die Vorrichtung von Figur 1 in einem geöffneten Zustand;
- Fig. 3: eine perspektivische Detailansicht einer Druckeinrichtung der Vorrichtung von Figur 1;
- Fig. 4: eine perspektivische Ansicht einer Rakelvorrichtung sowie einer Rakelbewegungseinrichtung der Vorrichtung von Figur 1;
- Fig. 5: eine perspektivische Ansicht einer Rakelvorrichtung mit Rakelwerkzeug gemäß einem Ausführungsbeispiel der vorliegenden Erfindung;
- Fig. 6: eine Vorderansicht der Rakelvorrichtung von Figur 5 mit Rakelwerkzeug;
- Fig. 7: eine Seitenansicht der Rakelvorrichtung von Figur 5 mit Rakelwerkzeug;
- Fig. 8: eine Schnittdarstellung der Rakelvorrichtung entlang der Schnittlinie A-A von Figur 7
- Fig. 9: eine perspektivische Ansicht einer Rakelvorrichtung von Figur 5 ohne Rakelwerkzeug;
- Fig. 10: eine Vorderansicht der Rakelvorrichtung von Figur 9 ohne Rakelwerkzeug;
- Fig. 11: eine perspektivische Ansicht eines Rakelwerkzeugs der Rakelvorrichtung gemäß Figuren 5 bis 10;
- Fig. 12: eine perspektivische Ansicht einer Rakelbewegungseinrichtung mit einer Rakelvorrichtung gemäß Figuren 5 bis 10,
- Fig. 13: eine Vorderansicht auf eine Rakelbewegungseinrichtung von Figur 12;
- Fig. 14: eine Schnittdarstellung der Rakelbewegungseinrichtung von Figur 13;
- Fig. 15a: eine schematische Vorderansicht in Schnittdarstellung der Rakelvorrichtung mit einem Drucktisch und einem Drucksieb während einer Fixierung des Rakelwerkzeugs im Rahmen einer Rakeleinrichtroutine;
- Fig. 15b: eine schematische Seitenansicht in Schnittdarstellung der Rakelvorrichtung mit einem Drucktisch und einem Drucksieb während einer Fixierung des Rakelwerkzeugs im Rahmen einer Rakeleinrichtroutine;
- Fig. 16a: eine schematische Vorderansicht in Schnittdarstellung der Rakelvorrichtung mit einem Drucktisch und einem Drucksieb nach einem Hochfahren des Drucksiebs und der Rakelvorrichtung im Rahmen einer Rakel- und/oder Siebeinrichtungsroutine;
- Fig. 16b: eine schematische Seitenansicht in Schnittdarstellung der Rakelvorrichtung mit einem Drucktisch und einem Drucksieb nach einem Hochfahren des Drucksiebs und der Rakelvorrichtung im Rahmen einer Rakel- und/oder Siebeinrichtungsroutine;
- Fig. 17a: eine schematische Vorderansicht in Schnittdarstellung der Rakelvorrichtung mit einem Drucktisch und einem Drucksieb während einer Schrägstellung des Drucksiebs um eine erste Achse im Rahmen einer Rakel- und/oder Siebeinrichtungsroutine;
- Fig. 17b: eine schematische Seitenansicht in Schnittdarstellung der Rakelvorrichtung mit einem Drucktisch und einem Drucksieb während einer Schrägstellung des Drucksiebs um eine erste Achse im Rahmen einer Rakel- und/oder Siebeinrichtungsroutine;
- Fig. 18a: eine schematische Vorderansicht in Schnittdarstellung der Rakelvorrichtung mit einem Drucktisch und einem Drucksieb während einer Schrägstellung des Drucksiebs um eine zweite Achse im Rahmen einer Rakel- und/oder Siebeinrichtungsroutine;
- Fig. 18b: eine schematische Seitenansicht in Schnittdarstellung der Rakelvorrichtung mit einem Drucktisch und einem Drucksieb während einer Schrägstellung des Drucksiebs um eine zweite Achse im Rahmen einer Rakel- und/oder Siebeinrichtungsroutine;
- Fig. 18c: eine schematische Seitenansicht in Schnittdarstellung der Rakelvorrichtung mit einem Drucktisch und einem Drucksieb während einer Schrägstellung des Drucksiebs um eine zweite Achse im Rahmen einer Rakel- und/oder Siebeinrichtungsroutine nach erfolgter Bewegung der Rakelvorrichtung in Rakelbewegungsrichtung;
- Fig. 19a: eine schematische Vorderansicht in Schnittdarstellung der Rakelvorrichtung mit einem Drucktisch und einem Drucksieb während einer Druckkraftermittlung im Rahmen einer Rakel- und/oder Siebeinrichtungsroutine.
- Fig. 19b: eine schematische Seitenansicht in Schnittdarstellung der Rakelvorrichtung mit einem Drucktisch und einem Drucksieb während einer Druckkraftermittlung im Rahmen einer Rakel- und/oder Siebeinrichtungsroutine.

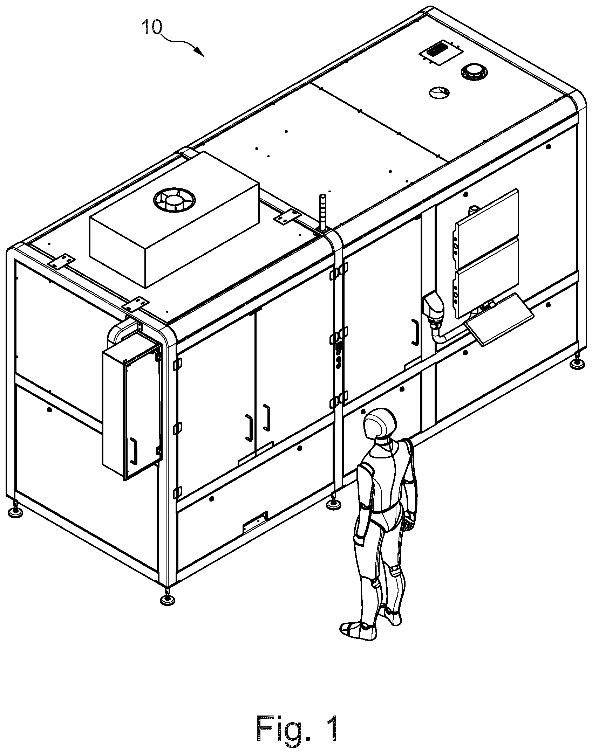

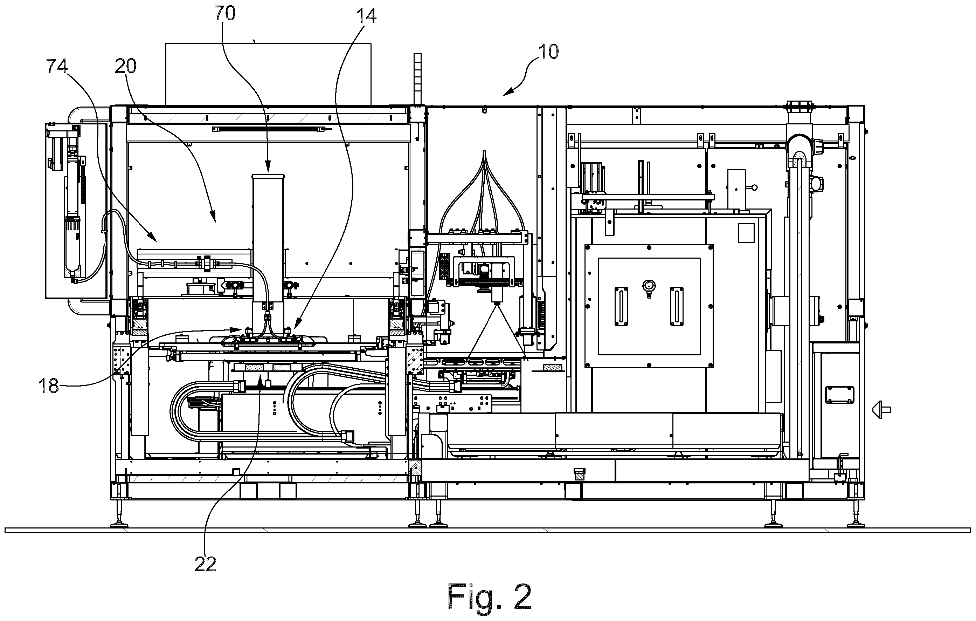

Figur 1 zeigt eine perspektivische Darstellung auf eine Vorrichtung 10 zur Herstellung von dreidimensionalen Siebdruckwerkstücken, wobei in Figur 2 eine Seitenansicht auf die Vorrichtung 10 aus Figur 1 in einem geöffneten Zustand, insbesondere ohne Einhausung, dargestellt ist.

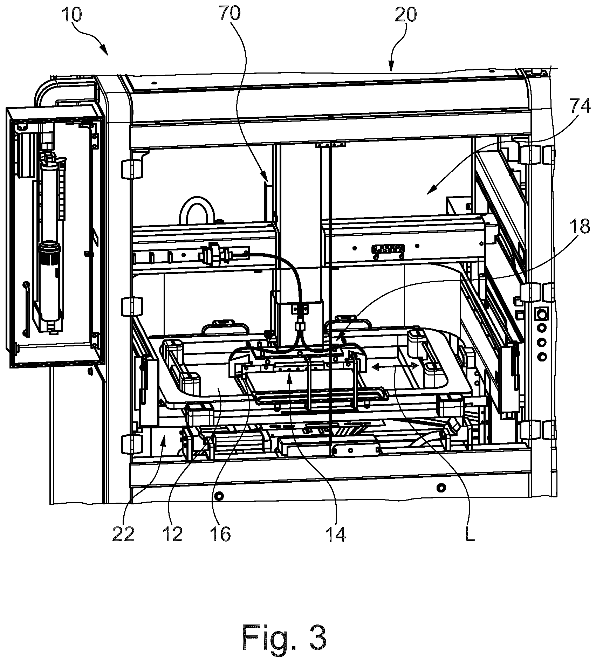

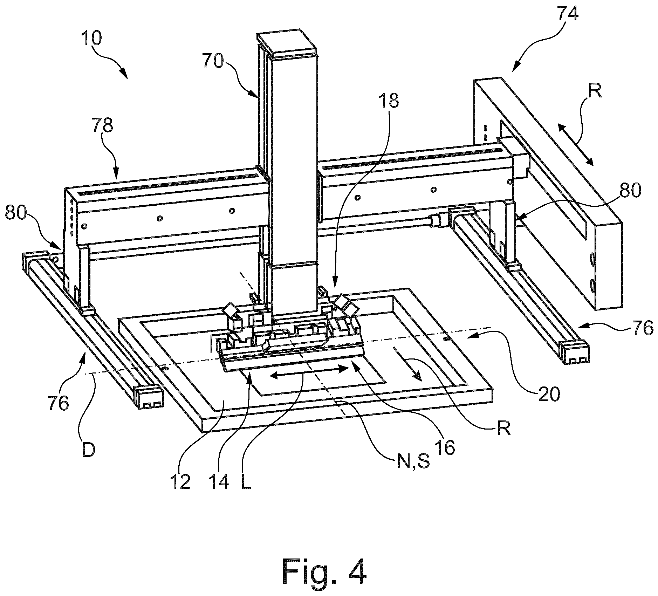

In Figur 3 ist eine perspektivische Darstellung einer Druckeinrichtung 20 der Vorrichtung 10 aus Figur 1 gezeigt, wobei Figur 4 eine perspektivische Darstellung auf eine Rakelbewegungseinrichtung 74 der Vorrichtung 10 aus Figur 1 zeigt.

Die genannten Figuren 1 bis 4 zeigen eine Vorrichtung 10 zur Herstellung von dreidimensionalen Siebdruckwerkstücken, insbesondere eine 3D-Siebdruckanlage. Bei der Vorrichtung 10 kann es sich in bevorzugter Weise um eine 3D-Siebdruckanlage handeln. Insbesondere kann es sich bei der Vorrichtung 10 um eine 3D-Siebdruckanlage für die Herstellung von Arzneimitteln und/oder Industriebauteilen handeln.

Dabei kann die Vorrichtung 10 mit einem Drucksieb 12 und mit einer Rakelvorrichtung 14 zum Fluten des Drucksiebs 12 mit einer Druckmasse und/oder zum Pressen von Druckmasse durch das Drucksieb 12 ausgestattet sein, wie näher in den Figuren 3 und 4 dargestellt ist.

Die Rakelvorrichtung 14 weist ferner wenigstens ein Rakelwerkzeug 16 auf.

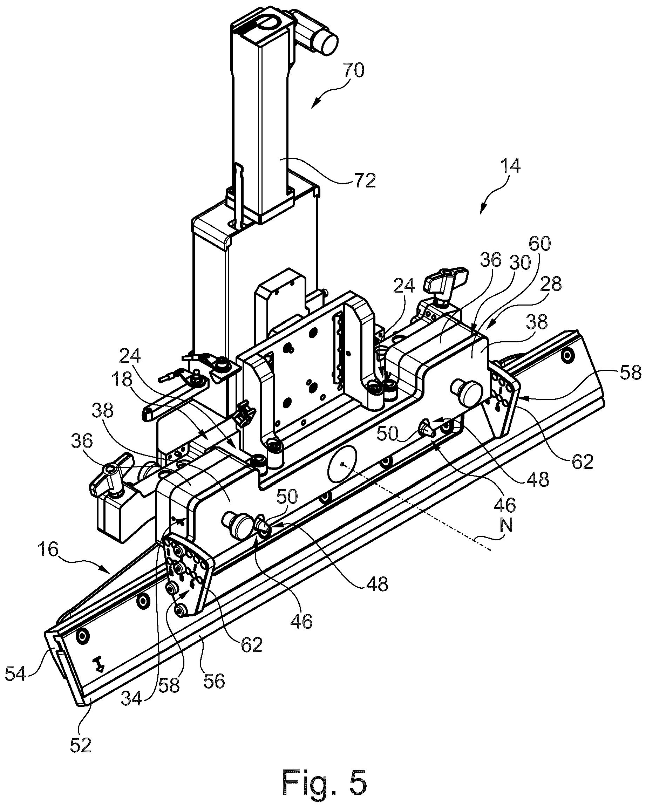

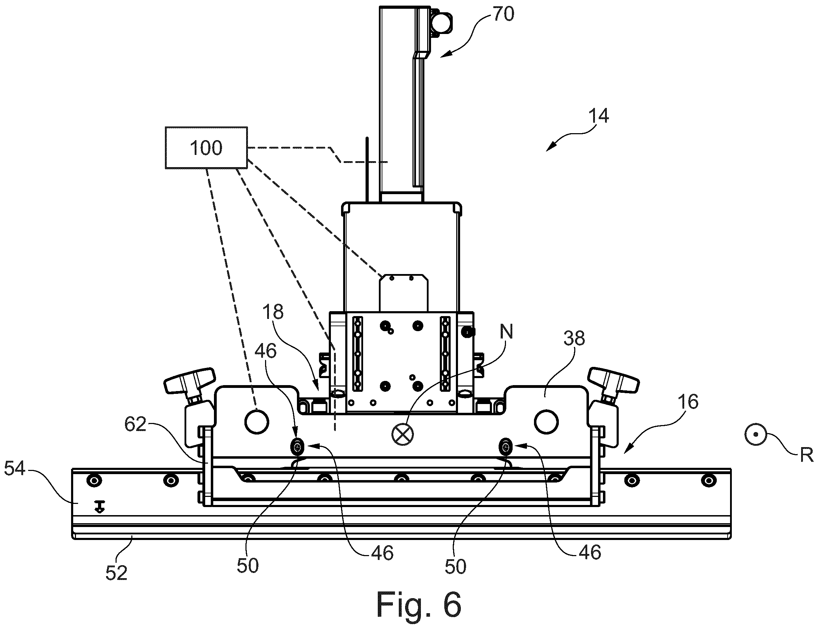

Figur 5 zeigt eine perspektivische Ansicht einer Rakelvorrichtung 14 mit Rakelwerkzeug 16 gemäß einem Ausführungsbeispiel der vorliegenden Erfindung. Es kann sich bei dem Rakelvorrichtung 14 in Figur 5 um eine in den Figuren 2 bis 3 gezeigte Rakelvorrichtung 14 der Vorrichtung 10 handeln. Ferner zeigt Figur 6 eine Vorderansicht der Rakelvorrichtung 14 von Figur 5 mit Rakelwerkzeug 16.

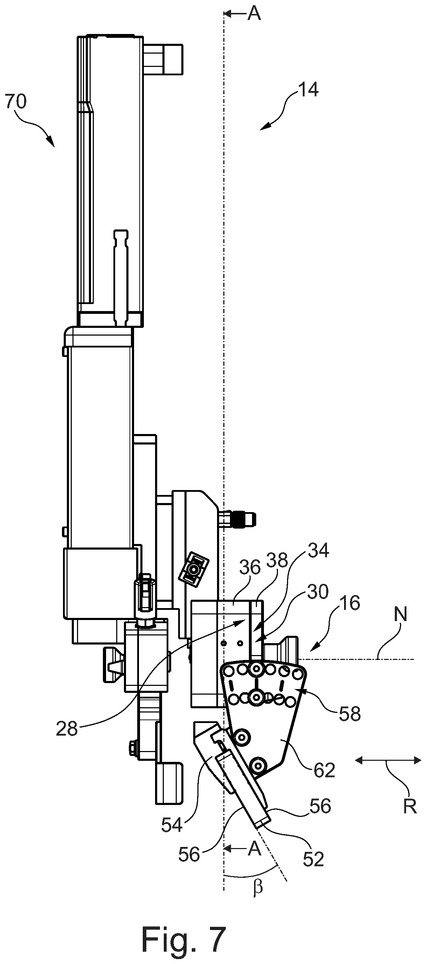

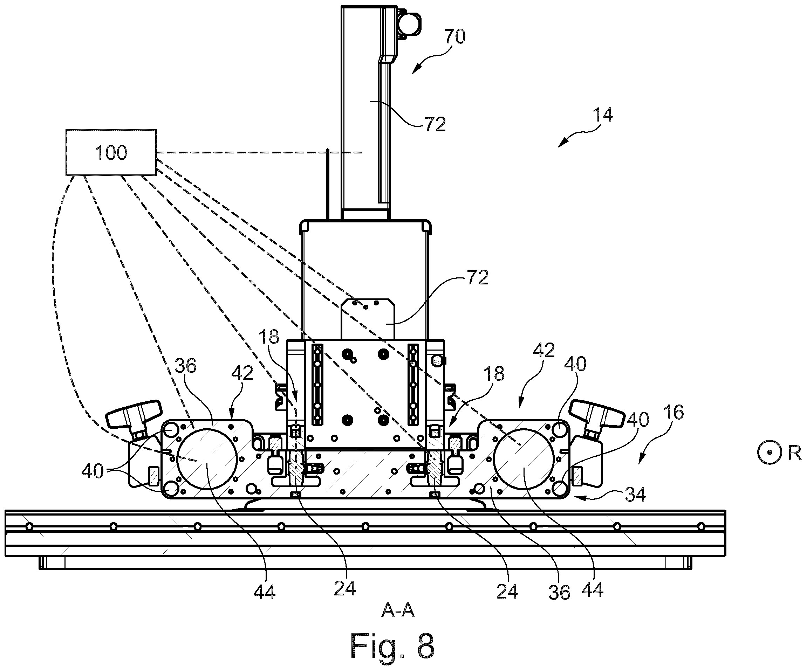

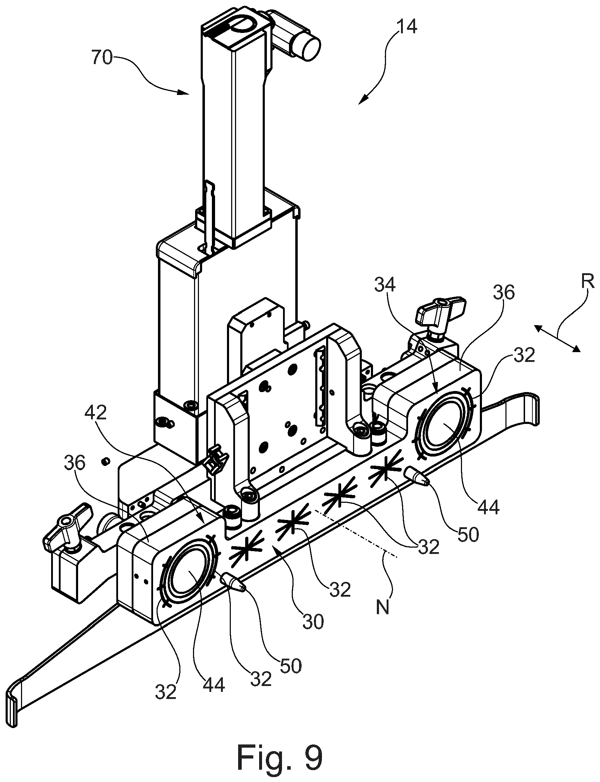

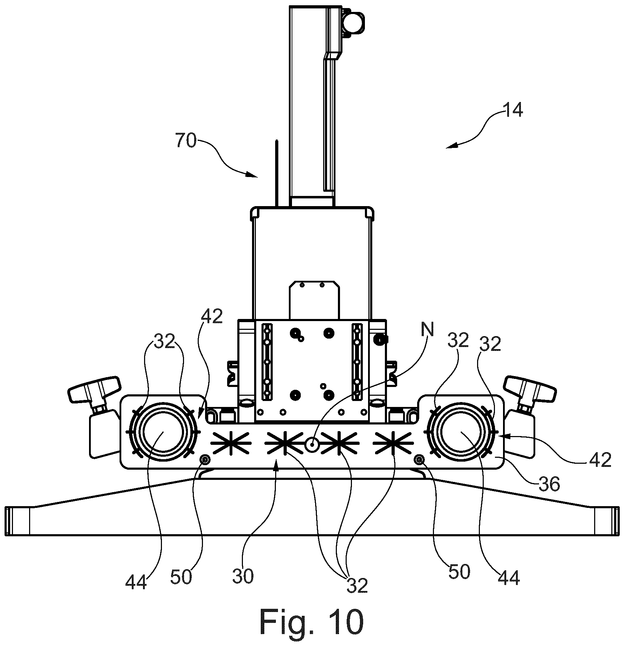

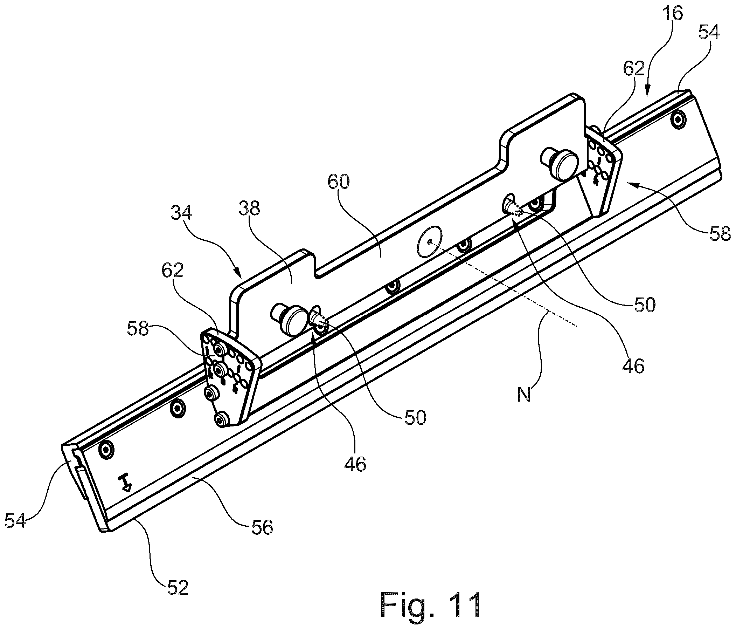

Figur 7 zeigt eine Seitenansicht der Rakelvorrichtung von Figur 5 mit Rakelwerkzeug und Figur 8 zeigt eine Schnittdarstellung der Rakelvorrichtung 14 entlang der Schnittlinie A-A von Figur 7. Die Figur 9 zeigt ferner eine perspektivische Ansicht einer Rakelvorrichtung 14 von Figur 5 ohne Rakelwerkzeug, die Figur 10 zeigt eine Vorderansicht der Rakelvorrichtung von Figur 9 ohne Rakelwerkzeug und die Figur 11 zeigt eine perspektivische Ansicht eines Rakelwerkzeugs 16 der Rakelvorrichtung 14 gemäß Figuren 5 bis 10.

Die Rakelvorrichtung 14 kann neben dem wenigstens einen Rakelwerkzeug 16 eine Rakellagerung 34 zur Lagerung des Rakelwerkzeugs 16 aufweisen. Zudem weist die Rakelvorrichtung 14 eine Sensoreinrichtung 18 zur Erfassung von auf das Rakelwerkzeug 16 wirkenden Rakelkräften auf. Hierbei kann die Sensoreinrichtung 18 zur Erfassung einer Rakelkraftabweichung entlang einer Längserstreckung L des Rakelwerkzeugs 16 ausgebildet sein. Die Längserstreckung L des Rakelwerkzeugs 16 ist unter anderem näher in den Figuren 3 und 4 eingezeichnet. Durch eine solche Sensoreinrichtung 18 kann beispielsweise eine gleichmäßige Krafteinwirkung der Rakelvorrichtung 14 entlang der Längserstreckung L des Rakelwerkzeugs 16 gewährleistet werden.

Mithin können also die auf das Rakelwerkzeug 16 wirkenden Rakelkräfte entlang der Längserstreckung L des Rakelwerkzeugs 16 erfasst werden. Eben dadurch kann eine gleichmäßige oder auch gezielt ungleichmäßige Krafteinwirkung vom Rakelwerkzeug 16 auf das Drucksieb 12 gewährleistet werden. Ferner ist auch die sichere und überwachbare, räumliche Ausrichtung des Rakelwerkzeugs 16 realisiert werden.

Wie in den Figuren 2 und 3 ferner dargestellt ist, kann die Vorrichtung 10 zudem eine zumindest das Drucksieb 12 und/oder die Rakelvorrichtung 14 aufweisende Druckeinrichtung 20 für die schichtweise Erzeugung zumindest eines Siebdruckwerkstücks in mehreren Siebdruckvorgängen und/oder für den Schichtauftrag auf ein nicht näher dargestelltes Werkstück in zumindest einem Siebdruckvorgang aufweisen. Die Druckeinrichtung 20 kann beispielsweise angrenzend zu weiteren Funktionsbereichen der Vorrichtung 10 angeordnet sein, beispielsweise zu einem Inspektionsbereich für Siebdruckwerkstücke und/oder zu einem Trocknungsbereich für Siebdruckwerkstücke. Die Abmessungen der Druckeinrichtung 20 können im Wesentlichen durch das Drucksieb 16 und/oder durch eine Rahmenhalterung und/oder Aufhängung für das Drucksieb 16 bedingt und/oder durch einen Drucktisch 22 begrenzt sein.

Die Druckeinrichtung 20 kann zumindest einen Drucktisch 22 für die Positionierung eines Werkstückträgers und/oder eines Siebdruckwerkstücks unterhalb des Drucksiebs 12 und/oder unterhalb der Rakelvorrichtung 14 aufweisen, wie näher in den Figuren 2, 3 und 4 gezeigt ist.

In den Figuren 5 bis 10 ist die Rakelvorrichtung 14 der Vorrichtung 10 zur Herstellung von dreidimensionalen Siebdruckwerkstücken gezeigt, wie bereits eingangs geschildert. Insbesondere der Figur 8 ist zu entnehmen, dass die Sensoreinrichtung 18 zumindest zwei Kraftmesssensoren 24 aufweisen kann, wobei es sich um zwei parallel geschaltete Kraftmesssensoren 24 handeln kann.

Figur 8 zeigt ein Rakelwerkzeug 16 in einer Schnittdarstellung, der die Kraftmesssensoren 24 entnommen werden können.

Die Kraftmesssensoren 24 sind entlang einer Längserstreckung L des Rakelwerkzeugs 16 zueinander beabstandet angeordnet. Dadurch kann erfasst werden, ob die Krafteinwirkung des Rakelwerkzeugs 16 auf das Drucksieb 12 und/oder auf den Drucktisch 22 gleichmäßig ist oder nicht.

Hierdurch kann eine Ausrichtung des Rakelwerkzeugs 16 geprüft und gegebenenfalls eine weitere Einstellung initiiert werden, wobei dies mit lediglich geringem Handhabungsaufwand zu bewerkstelligen ist. Durch die Ausrichtung können insbesondere parallele Schichtdicken erzeugt beziehungsweise ein paralleler Schichtauftrag auf ein hier nicht näher dargestelltes Werkstück beziehungsweise auf einen hier nicht näher dargestellten Werkstückträger reproduzierbar und auch konstant über mehrere Druckvorgänge und/oder besonders gleichmäßig über das Drucklayout eines Drucksiebs gehalten werden. Zudem kann mithilfe der Kraftmesssensoren 24 die räumliche Ausrichtung beziehungsweise Orientierung des Rakelwerkzeugs 16 durch Vergleich der durch die Kraftmesssensoren 24 erfassten Kräfte überprüft werden.

Weiterhin können die Kraftmesssensoren 24 zur gleichzeitigen Messung von absoluten Rakelkräften an voneinander entlang der Längserstreckung L des Rakelwerkzeugs 16 beabstandeten Messstellen ausgebildet sein. Dies erlaubt den direkten Vergleich der erfassten beziehungsweise gemessenen Rakelkräfte der Kraftmesssensoren 24 miteinander und schafft mithin eine weiter verbesserte Informations- und Datengrundlage für nachfolgende und/oder laufende Druckvorgänge.

Alternativ oder zusätzlich können die Kraftmesssensoren 24 zur Erfassung von relativen Rakelkraftabweichungen an entlang der Längserstreckung L des Rakelwerkzeugs 16 beabstandeten Messstellen ausgebildet sein. Erfasste Unterschiede beziehungsweise Abweichungen der Rakelkraft entlang der Längserstreckung L des Rakelwerkzeugs 16 können auf diese Weise vorteilhaft für die Steuerung und/oder Regelung nachfolgender und/oder laufender Druckvorgänge herangezogen werden. Somit kann sichergestellt werden, dass das Rakelwerkzeug 16 auf das jeweilige Drucksieb 12 mit einer Rakelkraft oder Rakelkräften innerhalb gewünschter Parameter aufliegt beziehungsweise dieses kontaktiert.

Des Weiteren kann der Figuren 7 und 8 entnommen werden, dass in einer Draufsicht auf die Rakelvorrichtung 14 die Kraftmesssensoren 24 oberhalb einer Aufstandslinie des Rakelwerkzeugs 16 und/oder mit einer Aufstandslinie des Rakelwerkzeugs 16 ausgerichtet sein können oder nur geringfügig versetzt zu einer Aufstandslinie angeordnet sein können. Somit können ungünstige Momente auf die Rakelvorrichtung 14 reduziert und gegebenenfalls das Messergebnis der Kraftmesssensoren 24 verbessert werden.

Zudem ist in den Figuren 5 bis 10 dargestellt, dass die Rakelvorrichtung 14 eine Justiereinrichtung 28 aufweist, die zur selbsttätigen Ausrichtung des Rakelwerkzeugs 16 durch eigengewichtsbasierte Auflage des Rakelwerkzeugs 16 auf einem Untergrund ausgebildet ist. Auf diese Weise kann das Rakelwerkzeug 16 relativ zu einem Untergrund, wie beispielsweise dem Drucktisch 22 oder einem Werkstückträger, selbsttätig ausgerichtet werden, wobei kein oder lediglich ein geringer Handhabungsaufwand anfällt.

Die Justiereinrichtung 28 ist insbesondere zur selbsttätigen Ausrichtung des Rakelwerkzeugs 16 in Bezug auf wenigstens zwei Freiheitsgerade ausgebildet. So kann das Rakelwerkzeug 16 mittels der Justiereinrichtung 28 vorzugsweise in Höhenrichtung entlang der Schwerkraft und in Bezug auf einen weiteren Freiheitsgrad ausgerichtet werden.

Zudem kann die Justiereinrichtung 28 zur Neigungsjustierung einer entlang der Längserstreckung L des Rakelwerkzeugs 16 verlaufenden Werkzeuglängsachse relativ zum Drucksieb 12 und/oder relativ zu einem Drucktisch 22 und/oder relativ zu einer Horizontalebene ausgebildet sein.

Es ist schließlich möglich, die Justiereinrichtung 28 zur Neigungsjustierung einer Rakelunterkante relativ zum Drucksieb 12 und/oder relativ zum Drucktisch 22 und/oder relativ zu einer Horizontalebene auszubilden. Hierdurch kann das Rakelwerkzeug 16 relativ zum Drucksieb 12 und/oder relativ zum Drucktisch 22 und/oder relativ zu einer Horizontalebene geneigt werden. Die Rakelunterkante kann somit parallel zum Drucksieb 12 und/oder relativ zum Drucktisch 22 und/oder relativ zu einer Horizontalebene ausgerichtet werden.

Bei einer Justierung der Neigung des Rakelwerkzeugs 16 und/einer der jeweiligen Rakelunterkante kann die Kraftverteilung, mit welcher das Rakelwerkzeug 16 beziehungsweise die Rakelunterkante entlang seiner Aufstandslinie und entlang der Längserstreckung L auf das Drucksieb 12 oder auf den Drucktisch 22 einwirkt, geeignet justiert werden. Somit kann also mithilfe der Justiereinrichtung 28 eine gleichmäßige oder auch gewollt ungleichmäßige Kraftverteilung der Rakelvorrichtung auf das Drucksieb 12 und/oder auf den Drucktisch 22 erreicht werden.

Außerdem zeigen die Figuren 5 bis 10, dass die Justiereinrichtung 28 zur Neigungsjustierung des Rakelwerkzeugs 16 um eine Neigungsachse N ausgebildet sein kann. Die Neigungsachse N erstreckt sich entlang einer Rakelbewegungsrichtung R und/oder unter einem Winkel zu einer durch eine Rakelunterkante verlaufende Vertikalebene. Vorgestellte Ausbildung erlaubt es, zwischen dem Rakelwerkzeug 16 und dem Drucksieb 12 und/oder dem Drucktisch 22 entlang der gesamten Länge des Rakelwerkzeugs 16 eine genaue Ausrichtung vorzunehmen. Auf diese Weise ist auch die Rakelkraft, mit der das Rakelwerkzeug 16 auf das jeweilige Drucksieb 12 wirkt, insbesondere an unterschiedlichen Stellen des Drucklayouts des Drucksiebs 12 wirkt, gezielt einstellbar beziehungsweise nivellierbar oder ausgleichbar.

Wie Figuren 5 bis 10 des Weiteren zeigen, kann die Justiereinrichtung 28 eine Luftlagereinrichtung 30 aufweisen, die in einem Luftlagerbetrieb eine Ausrichtung des Rakelwerkzeugs 16 erlaubt. Insbesondere erlaubt die Luftlagereinrichtung 30 eine selbsttätige Ausrichtung und/oder eine Ausrichtung durch eigengewichtsbasierte Auflage des Rakelwerkzeugs 16 auf einem Untergrund.

Die Luftlagereinrichtung 30 erlaubt vorzugsweise eine Neigungsjustierung des Rakelwerkzeugs 16 um die Neigungsachse N. Hierdurch kann das Rakelwerkzeug 16 um die Neigungsachse N relativ zum Drucksieb 12 und/oder zum Drucktisch 22 und/oder relativ zu einer Horizontalebene verschwenkbar sein.

Weiterhin kann die Luftlagereinrichtung 30 zur Neigungsjustierung einer entlang der Längserstreckung L des Rakelwerkzeugs 16 verlaufenden Werkzeuglängsachse relativ zum Drucksieb 12 und/oder relativ zu einem Drucktisch 22 und/oder relativ zu einer Horizontalebene ausgebildet sein.

Wie Figuren 9 und 10 zeigen, weist die Luftlagereinrichtung 30 zumindest eine Luftdüse 32 oder mehrere Luftdüsen 32 zur Ausbildung eines reibungsfreien Luftlagers des Rakelwerkzeugs 16 im Luftlagerbetrieb auf. Durch das Luftlager kann das Rakelwerkzeug 16 beziehungsweise die Rakelunterkante reibungsfrei und in besonders einfacher Weise ausgerichtet werden. Insbesondere kann ein Verstellen des Rakelwerkzeugs 16 lediglich gegen das Eigengewicht des Rakelwerkzeugs 16 erfolgen.

Die Luftlagereinrichtung 30 kann in einem Reiblagerbetrieb ein kraftschlüssiges Fixieren des Rakelwerkzeugs 16 relativ zur Neigungsachse N erlauben. Alternativ oder ergänzend kann die Luftlagereinrichtung 30 in einem Reiblagerbetrieb ein kraftschlüssiges Fixieren des Rakelwerkzeugs 16 in Höhenrichtung, insbesondere in und/oder entgegen einer Schwerkraftrichtung, erlauben. Auf diese Weise kann das Rakelwerkzeug 16 zuverlässig in Bezug auf zwei Freiheitsgrade mittels der Luftlagereinrichtung 30 fixiert werden.

Ferner kann den Figuren 5 bis 11 entnommen werden, dass die Rakelvorrichtung 14 eine Justierhalterung 36 und eine mit der Justierhalterung 36 gekoppelte Tragstruktur 38 aufweisen kann. Dabei kann an der Tragstruktur 38 ein Rakelwerkzeug 16 angeordnet werden, wie beispielsweise in Figuren 5 und 6 sowie 11 gezeigt ist und nachfolgend noch beschrieben wird.

Insbesondere kann die Relativposition der Tragstruktur 38 zur Justierhalterung 36 und/oder die Relativausrichtung zwischen der Justierhalterung 36 und der Tragstruktur 38 mittels der Luftlagereinrichtung 30 veränderbar sein.

Alternativ oder ergänzend kann das Rakelwerkzeug 16 an der Tragstruktur 38 angeordnet oder befestigt ist sein, wie Figur 11 beispielhaft zeigt.

Die Rakellagerung 34 kann zwischen der Justierhalterung 36 und der Tragstruktur 38 ausgebildet sein. Ferner kann die Luftlagereinrichtung 30 zwischen der Justierhalterung 36 und der Tragstruktur 38 ausgebildet sein. Alternativ oder ergänzend kann die Luftlagereinrichtung 30 zur Ausbildung eines Luftlagers zwischen der Justierhalterung 36 und der Tragstruktur 38 ausgebildet sein. Auf diese Weise kann die Justierhalterung 36 in einem Luftlagerbetrieb im Wesentlichen reibungsfrei relativ zur Tragstruktur 38 verstellt werden.

Die Luftlagereinrichtung 30 und/oder die zumindest eine Luftdüse 32 der Luftlagereinrichtung 30 kann an der Justierhalterung 36 angeordnet sein. Alternativ oder ergänzend kann die Luftlagereinrichtung 30 und/oder die zumindest eine Luftdüse 32 der Luftlagereinrichtung 30 in Wirkkontakt mit der Tragstruktur 38 stehen und/oder in Wirkkontakt mit der Tragstruktur 38 bringbar sein.

Die Luftlagereinrichtung 30 kann eine Relativbewegung zwischen der Justierhalterung 36 und der Tragstruktur 38 erlauben, insbesondere in einem Luftlagerbetrieb.

Wie Figur 8 zeigt kann die Rakellagerung 34 und/oder die Luftlagereinrichtung 30 einen Permanentmagneten 40 oder eine Mehrzahl an Permanentmagneten 40 zum magnetischen Halten des Rakelwerkzeugs 16 und/oder der Tragstruktur 38 aufweisen. Der wenigstens eine Permanentmagnet 40 kann eine Vorspannung oder Vorspannkraft der Tragstruktur 38 gegen die Justierhalterung 36 und/oder gegen die an der Justierhalterung 36 angeordnete Luftlagereinrichtung 30 erzeugen. Insbesondere sind die Permanentmagneten 40 dazu ausgebildet, wenigstens 80 % des Gewichts des Rakelwerkzeugs 16 zu halten.

Der wenigstens eine Permanentmagnet 40 ist vorzugsweise mit der Luftlagereinrichtung 30 in einem Luftlagerbetrieb zur Erzeugung und/oder Aufrechterhaltung eines Luftlagers zwischen der Tragstruktur 38 und der Justierhalterung 36 ausgebildet. Durch das Luftlager kann einerseits ein Kontakt zwischen der Tragstruktur 38 und der Justierhalterung 36 verhindert werden. Andererseits kann ein effizientes und reibungsfreies Verstellen der Tragstruktur 38 relativ zur Justierhalterung 36 sichergestellt werden und der Permanentmagnet 40 kann im Luftlagerbetrieb einen vordefinierten Luftlagerspalt aufrechthalten.

Wie Figuren 8 bis 10 zeigen, kann die Rakelvorrichtung 14 zumindest eine Fixiereinrichtung 42 zur Fixierung einer justierten Neigungslage des Rakelwerkzeugs 16 aufweisen, insbesondere einer über die Justiereinrichtung 28 und/oder Luftlagereinrichtung 30 justierten Neigungslage des Rakelwerkzeugs 16. Die Fixiereinrichtung 42 ist insbesondere zur schraubenlosen und/oder kraftschlüssigen Fixierung des Rakelwerkzeugs 16 in seiner ausgerichteten Position ausgebildet. Die zumindest eine Fixiereinrichtung 42 ist insbesondere zur Fixierung der Relativposition und/oder Relativausrichtung zwischen der Justierhalterung 36 und der Tragstruktur 38 ausgebildet und/oder eingerichtet.

Wie Figuren 8 bis 10 ferner zeigen, kann die Fixiereinrichtung 42 einen Elektromagneten 44 oder eine Mehrzahl von Elektromagneten 44 zum magnetischen Fixieren des Rakelwerkzeugs 16 in einer Arbeitsposition aufweisen, insbesondere in einer über die Justiereinrichtung 28 und/oder Luftlagereinrichtung 30 justierten Arbeitsposition des Rakelwerkzeugs 16.

Der zumindest eine Elektromagnet 44 und/oder der zumindest eine Permanentmagnet 40 kann beziehungsweise können an der Justierhalterung 36 und/oder an der Tragstruktur 38 angeordnet oder dieser zugeordnet sein. Der zumindest eine Elektromagnet 44 und/oder der zumindest eine Permanentmagnet 40 sind vorzugsweise an der Justierhalterung 36 angeordnet oder dieser zugeordnet, wobei die Tragstruktur 38 ferromagnetisch ausgebildet ist. Die ferromagnetische Tragstruktur 38 kann dann in einfacher und effizienter Weise mit dem wenigstens einen Permanentmagneten 40 zum Halten des Rakelwerkzeugs 16 und/oder mit dem wenigstens einen Elektromagneten 44 zum Fixieren des ausgerichteten Rakelwerkzeugs 16 zusammenwirken.

Wie Figur 9 und 10 weiterhin zeigen, kann der wenigstens eine Elektromagnet 44 zumindest abschnittweise von einer Luftdüse 32 umgeben sein. Durch die Anordnung kann beim Einschalten des Elektromagneten 44 und Ausschalten der Luftdüse 32 ein Verstellen der Justierhalterung 36 relativ zur Tragstruktur 38 in zuverlässiger Weise verhindert werden, wodurch ein besonders genaues Fixieren des ausgerichteten Rakelwerkzeugs 16 erreicht werden kann.

Die Fixiereinrichtung 42 kann zusätzlich oder alternativ zumindest eine mechanische und/oder pneumatische und/oder hydraulische Klemmvorrichtung zum Fixieren des Rakelwerkzeugs 16 und/oder der Tragstruktur 38 in einer Arbeitsposition aufweisen, insbesondere in einer über die Justiereinrichtung 28 und/oder Luftlagereinrichtung 30 justierten Arbeitsposition des Rakelwerkzeugs 16.

Wie in Figuren 5, 6 und 11 beispielhaft gezeigt, kann die Rakellagerung 34 zumindest eine Langlochführung 46 aufweisen, wobei die Langlochführung 46 bevorzugt spielbehaftet dimensioniert ist, insbesondere im Hinblick auf die in die Langlochführung 46 einzuführenden und nachfolgend noch zu beschreibenden Führungselemente, beispielsweise in Form von Haltestiften 50. Eine solche Langlochführung 46 kann die Beweglichkeit des Rakelwerkzeugs 16 im Zuge von Justier- beziehungsweise Einstellvorgängen begrenzen, insbesondere die Relativbewegung zwischen der Justierhaltung 36 einerseits und der Tragstruktur 38 beziehungsweise des Rakelwerkzeugs 16 andererseits begrenzen beziehungsweise führen.

Die Rakelvorrichtung 14 kann ferner ein Befestigungssystem 48 zur Befestigung und/oder zum Halten des Rakelwerkzeugs 16 aufweisen, wobei das Befestigungssystem 48 bevorzugt als Haltesystem und/oder als Schnellwechselhaltesystem ausgebildet ist. Das Befestigungssystem 48 kann werkzeugfrei betätigbar sein und/oder einen Haltestift 50 oder eine Mehrzahl an Haltestiften 50 zum Halten oder temporären Halten des Rakelwerkzeugs 16 aufweisen, insbesondere zum Einhängen des Rakelwerkzeugs 16 und/oder der Tragstruktur 38 auf den Haltestiften 50 und/oder zum Aufschieben des Rakelwerkzeugs 16 und/oder der Tragstruktur 38 auf die Haltestifte 50 und/oder zum Lösen eines Rakelwerkzeugs 16.

Das Befestigungssystem 48 kann die Langlochführung 46 aufweisen. Alternativ oder ergänzend kann das Befestigungssystem 48 die Fixiereinrichtung 42 aufweisen.

Wie Figuren 5, 6 sowie 11 ferner zeigen, kann der wenigstens eine Haltestift 50 in einer Langlochführung 46 der Rakellagerung 34 geführt, insbesondere spielbehaftet geführt, sein. Auf diese Weise kann eine Bewegung des Haltestifts 50 in der Langlochführung 46 sichergestellt werden, insbesondere in mehreren Dimensionen sichergestellt werden. Insbesondere kann der Haltestift 50 in Höhenrichtung, insbesondere entlang der Schwerkraftrichtung, innerhalb der Langlochführung 46 verstellbar sein. Der Haltestift 50 kann dann relativ zur Langlochführung 46 verstellbar, insbesondere verschiebbar sein. Ebenso kann der Haltestift 50 in einer Richtung quer zur Höhenrichtung innerhalb der Langlochführung 46 beweglich sein.

Wie Figuren 5 und 6 weiterhin zeigen, kann die Justierhalterung 36 den wenigstes einen Haltestift 50 aufweisen. In Figur 11 sind die Haltestifte 50 der Justierhalterung 36 daher lediglich gestrichelt dargestellt. Alternativ oder ergänzend kann die Tragstruktur 38 wenigstens eine Langlochführung 46 aufweisen.

Bevorzugt ist jedem Haltestift 50 eine Langlochführung 46 zugeordnet und/oder jeder Langlochführung 46 ein Haltestift 50 zugeordnet.

Die Tragstruktur 38 mit dem Rakelwerkzeug 16 kann in besonders einfacher Weise auf den Haltestiften 50 der Justierhalterung 36 aufgesteckt werden. Mittels der Langlochführungen 46 ist die Tragstruktur 38 dann vorzugsweise an der Justierhalterung 48 gehalten. Die Tragstruktur 38 kann somit über die Langlochführung 46 relativ zur Justierhaltung 36, insbesondere den Haltestiften 50 der Justierhaltern 36, verstellbar sein, wodurch eine Ausrichtung des Rakelwerkzeugs 16 in vorgegebenen Bewegungsgrenzen ermöglicht werden kann.

Mit Blick auf die Figuren 5, 6, 7 und 11 ist zu erkennen, dass das Rakelwerkzeug 16 ein Rakelblatt 52 aufweisen kann. Dabei kann das Rakelblatt 52 des Rakelwerkzeugs 16 zumindest abschnittsweise aus einem Kunststoffmaterial und/oder aus einem Blechmaterial gefertigt sein. Des Weiteren kann das Rakelwerkzeug 16 eine Rakelaufnahme 54 aufweisen. Zudem ist das Rakelblatt 52 an der Rakelaufnahme 54 des Rakelwerkzeugs 16 montiert und in oder an der Rakelaufnahme 54 eingespannt. Somit ist also ein Rakelblatt 52 des Rakelwerkzeugs 16 an der Rakelaufnahme 54 fest anordenbar.

Gemäß Figur 7 kann das Rakelblatt 52 zwei Rakelseitenflächen 56 aufweisen, die zwischen den Seitenrändern des Rakelblatts 52 verlaufen, wobei durch die Rakelaufnahme 54 ein zwischen einer Rakelseitenfläche 56 und einer Vertikalebene ausgebildeter Rakelwinkel β und/oder ein zwischen einer Rakelseitenfläche 56 und einer Horizontalebene und/oder zwischen einer Rakelseitenfläche 56 und dem Drucksieb 12 und/oder zwischen einer Rakelseitenfläche 56 und dem Drucktisch 22 ausgebildeter Rakelwinkel vorgegeben oder festgelegt ist. Somit kann durch die Ausbildung des Rakelblatts 52 beziehungsweise durch die Ausbildung der Rakelaufnahme 54 und/oder durch eine Neigungseinstellung der Rakelaufnahme 54 und/oder des Rakelwerkzeugs 16 - wie nachfolgend noch beschrieben wird - ein etwaiger Rakelwinkel β dahingehend gewählt oder eingerichtet sein, dass durch das jeweilige Rakelblatt 52 das Drucksieb 12 in geeigneter Weise geflutet und/oder durch das Drucksieb 12 hindurchgepresst wird.

Das Rakelwerkzeug 16 kann als Wechselwerkzeug ausgebildet sein. Alternativ oder ergänzend kann durch Austausch des Rakelwerkzeugs 16 der Rakelwinkel zwischen einer Rakelseitenfläche 56 und einer Horizontalebene und/oder dem Drucksieb 12 und/oder einem Drucktisch 22 veränderbar sein.

Bevorzugt weist das Rakelwerkzeug 16 eine Verstelleinrichtung 58 zum Einstellen des Rakelwinkels zwischen einer Rakelseitenfläche 56 und einer Horizontalebene und/oder dem Drucksieb 12 und/oder einem Drucktisch 22 auf, wobei der Rakelwinkel bevorzugt stufenlos oder stufenweise, insbesondere mittels vorgegebener Stufen, mittels der Verstelleinrichtung 58 einstellbar ist.

Das Rakelwerkzeug 16 kann zumindest einen an der Rakelaufnahme 54 ausgebildeten und/oder mit der Rakelaufnahme 54 verbundenen Kopplungsabschnitt 60 zur Verbindung mit der Rakelvorrichtung 14 mittels der Rakellagerung 34, insbesondere der Fixiereinrichtung 42 und/oder der Luftlagereinrichtung 30, aufweisen. Der Kopplungsabschnitt 60 kann dabei durch die Tragstruktur 38 gebildet oder Bestandteil der Tragstruktur 38 sein. Bei dem Kopplungsabschnitt 60 kann es sich insbesondere um eine Fangplatte handeln.

Wie Figur 11 weiterhin zeigt kann das Rakelwerkzeug 16 zumindest ein an der Rakelaufnahme 54 ausgebildetes und/oder mit der Rakelaufnahme 54 verbundenes Halteelement 62 aufweisen, wobei der Kopplungsabschnitt 60 mit dem Halteelement 62 in wenigstens zwei verschiedenen Positionen verbindbar ist, derart, dass der Rakelwinkel in den verschiedenen Positionen unterschiedlich ist. So kann das Halteelement 62 mehrere Befestigungslöcher aufweisen, über die das Halteelement 62 mit dem Kopplungsabschnitt 60 verbindbar ist. In Abhängigkeit davon, über welche Befestigungslöcher das Halteelement 62 mit dem Kopplungsabschnitt 60 verbunden ist, kann ein jeweils anderer Rakelwinkel ausgebildet werden.

Wie den Figuren 2 bis 10 sowie 12 bis 14 ferner zu entnehmen ist, kann die Rakelvorrichtung 14 eine Stelleinrichtung 70 zur Bewegung des Rakelwerkzeugs 16 zwischen einer angehobenen Ausgangsstellung und zumindest einer abgesenkten Betriebsstellung aufweisen. Dabei kann die Stelleinrichtung 70 einen Linearantrieb 72 oder eine Mehrzahl von Linearantrieben 72 aufweisen, wie beispielsweise in Figur 10 gezeigt ist. So kann die Stelleinrichtung 70 eine Mehrzahl in Reihe geschalteter Linearantriebe 72 aufweisen. Somit ist also mittels der Stelleinrichtung 70 die Rakelvorrichtung 14 beispielsweise hin oder weg vom Drucktisch 22 und/oder hin oder weg vom Drucksieb 12 verfahrbar.

Ein Linearantrieb 72 der Stelleinrichtung 70 kann als elektrischer oder elektromechanischer Linearantrieb und/oder als elektrischer Spindelantrieb und/oder als Elektrozylinder und/oder als Linearaktor ausgebildet sein. Ferner kann der Linearantrieb 72 der Stelleinrichtung 70 als pneumatischer Linearantrieb oder Linearzylinder ausgebildet sein.

Des Weiteren zeigt die Figuren 8, dass die Sensoreinrichtung 18 im Kraftfluss zwischen der Stelleinrichtung 70 und dem Rakelwerkzeug 16 angeordnet sein kann. Insbesondere kann die Sensoreinrichtung 18 im Kraftfluss zwischen der Stelleinrichtung 70 und der Rakellagerung 34 und/oder im Kraftfluss zwischen der Stelleinrichtung 70 und der Justiereinrichtung 28 und/oder im Kraftfluss zwischen der Stelleinrichtung 70 und der Justierhalterung 36 angeordnet sein. Alternativ kann die oder eine Sensoreinrichtung 18 auch im Kraftfluss zwischen der Justierhalterung 36 und der Tragstruktur 38 angeordnet sein.

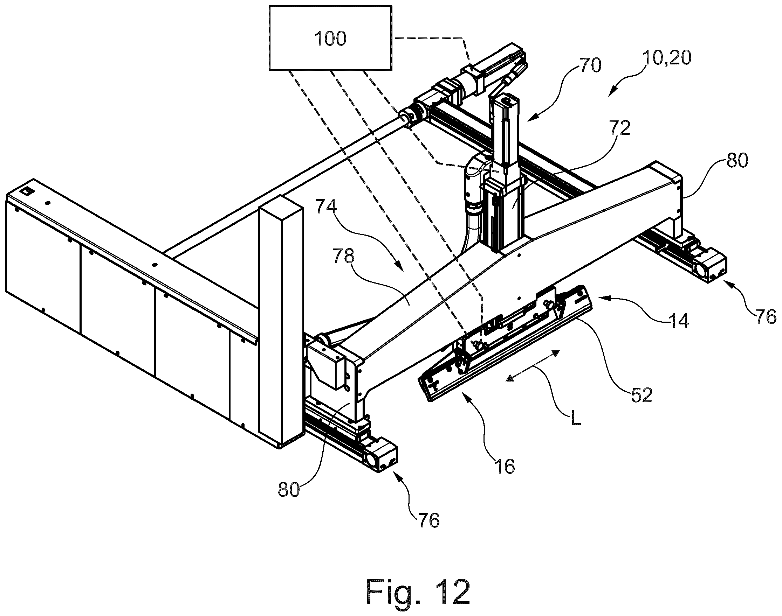

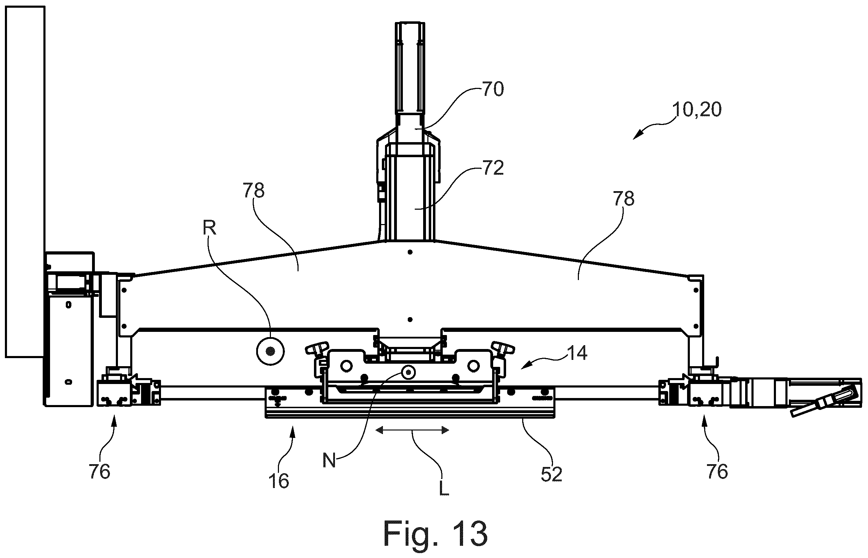

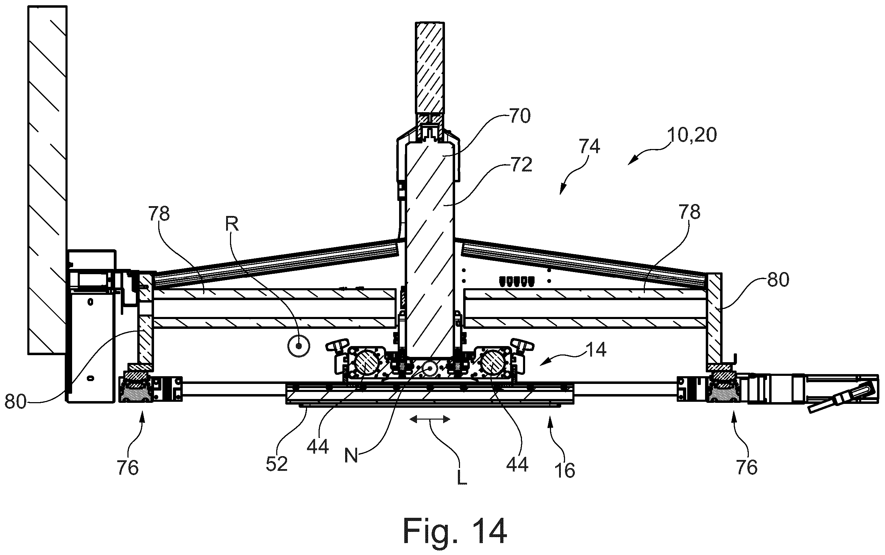

Die Figuren 12 bis 14 zeigen weiterhin, dass eine Vorrichtung 10 gemäß der vorliegenden Erfindung eine Rakelbewegungseinrichtung 74 zur Bewegung der Rakelvorrichtung 14 und/oder des Rakelwerkzeugs 16 entlang einer in Horizontalrichtung verlaufenden Rakelbewegungsrichtung R aufweisen kann. Dabei zeigt Figur 12 eine schematische Perspektivansicht einer Rakelbewegungseinrichtung 74 gemäß einem Ausführungsbeispiel der vorliegenden Erfindung. Figur 13 zeigt eine Vorderansicht und Figur 14 eine Schnittdarstellung einer Rakelbewegungseinrichtung 74 aus Figur 12 zeigt.

Es ist möglich, das Rakelwerkzeug 16 beziehungsweise die Rakelvorrichtung 14 mittels der Rakelbewegungseinrichtung 74 entlang einer in Horizontalrichtung verlaufenden Rakelbewegungsrichtung R zu verfahren.

Die Rakelbewegungseinrichtung 74 kann mindestens einen Linearantrieb oder mehrere Linearantriebe zur Bewegung der Rakelvorrichtung 14 und/oder des Rakelwerkzeugs 16 aufweisen. Die Rakelvorrichtung 14 und/oder das Rakelwerkzeug 16 kann mithin linear in einer Richtung hin und her bewegbar sein.

Des Weiteren ist in den Figuren 12 bis 14 dargestellt, dass die Rakelbewegungseinrichtung 74 ein Portalsystem mit Linearführungen 76 und einem Querträger 78 sowie Stützeinrichtungen 80 zur Abstützung des Querträgers 78 auf den Linearführungen 76 aufweisen kann. Dabei verlaufen die Linearführungen 76 entlang der Rakelbewegungsrichtung R, wobei der Querträger 78 in einer Draufsicht zwischen den Linearführungen 76 und quer zu den Linearführungen 76 verlaufen kann. Somit ist es also möglich, das Rakelwerkzeug 16 beziehungsweise die Rakelvorrichtung 14 schwebend oberhalb des Drucktisches 22 und/oder schwebend oberhalb des Drucksiebs 12 zu halten und linear zu verfahren. Somit kann eine sichere Abfolge aufeinanderfolgender Druckdurchgänge mit der Vorrichtung 10 zur Herstellung von dreidimensionalen Siebdruckwerkstücken gewährleistet werden.

Zudem geht aus den Figuren 12 bis 14 hervor, dass die Rakelvorrichtung 14 und die Stelleinrichtung 70 der Rakelvorrichtung 14 an dem Querträger 78 des Portalsystems befestigt sein können. Somit bedingt also eine Bewegung des Querträgers 78 eine Bewegung der Rakelvorrichtung 14 beziehungsweise des Rakelwerkzeugs 16. Außerdem ist die Rakelvorrichtung 14 entlang einer Längserstreckung L des Querträgers 78 unbeweglich angeordnet. Somit können ungewollte Bewegungen entlang der Querträgers 78 vermieden werden und es ergibt sich ein insgesamt robuster Aufbau.

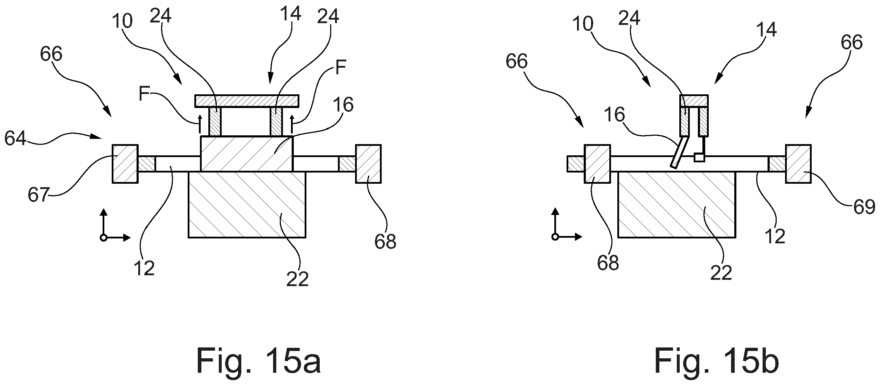

In Figuren 15a bis 19b sind schematische Vorderansichten beziehungsweise Seitenansichten der Rakelvorrichtung 14 mit einem Drucktisch 22 und einem Drucksieb 12 während einer Ausrichtung des Rakelwerkzeugs 16 im Rahmen einer Rakeleinrichtroutine zum Ausrichten des Rakelwerkzeugs 16 beziehungsweise einer Siebeinrichtungsroutine zum Ausrichten des Drucksiebs 12 gezeigt.

Gemäß den Figuren 15a bis 19b kann die Vorrichtung 10 eine Drucksiebvorrichtung 64 aufweisen. Die Drucksiebvorrichtung 64 kann eine Drucksiebbewegungseinrichtung 66 zur Bewegung des Drucksiebs 12 zwischen einer angehobenen Prüfstellung und zumindest einer abgesenkten Druckstellung aufweisen.

Mittels der Drucksiebbewegungseinrichtung 66 kann das Drucksieb 12 relativ zum Drucktisch 22 und/oder Werkstückträger und/oder Siebdruckwerkstück verstellt werden. Mittels der Drucksiebbewegungseinrichtung 66 kann die während des Druckvorgangs auf das Drucksieb 12 wirkende Rakelkraft in positiver Weise beeinflusst werden, um gleichmäßige und/oder parallel zueinander angeordnete und/oder zueinander ausgerichtete Schichten sicherzustellen.

Wie die Figuren 15a bis 19b weiterhin zeigen, kann die Drucksiebbewegungseinrichtung 66 zumindest einen Linearantrieb 67, 68, 69 oder eine Mehrzahl von Linearantrieben 67, 68, 69 aufweisen. Mittels des wenigstens einen Linearantriebs 67, 68, 69 kann das Drucksieb 12 zuverlässig und positionsgenau verstellt werden.

Gemäß den Figuren 15a bis 19b kann die Drucksiebbewegungseinrichtung 66 zwei an voneinander entlang der Längserstreckung L des Rakelwerkzeugs 16 beabstandete Linearantriebe 67, 68 aufweisen. Insbesondere kann die Drucksiebbewegungseinrichtung 66 einen ersten Linearantrieb 67 und einen zweiten Linearantrieb 68 aufweisen, wobei die Linearantriebe 67, 68 an gegenüberliegenden Querseiten des Drucksiebs 12 angeordnet oder gegenüberliegenden Querseiten des Drucksiebs 12 zugeordnet und/oder entlang der Längserstreckung L das Rakelwerkzeugs 16 voneinander beanstandet und/oder quer, insbesondere senkrecht, zur Rakelbewegungsrichtung R voneinander beabstandet sind.

In vorteilhafter Weise kann das Drucksieb 12 mittels der Drucksiebbewegungseinrichtung 66 relativ zum Rakelwerkzeug 16 und/oder relativ zu dem Drucktisch 22 und/oder relativ zu einer Horizontalebene schwenkbar oder verkippbar sein.

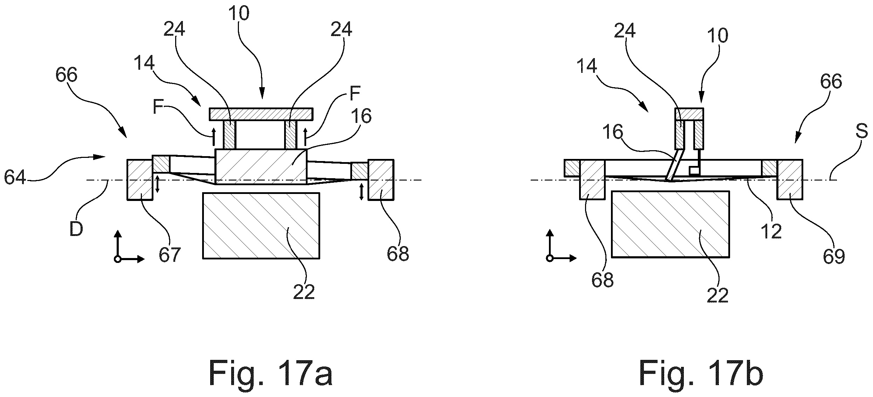

Wie beispielsweise Figuren 17a und 17b zeigen kann das Drucksieb 12 mittels der Drucksiebbewegungseinrichtung 66 um eine Drucksieblängsachse S schwenkbar oder verkippbar sein, die sich senkrecht zur Verbindungslinie zwischen den beiden Linearantrieben 67, 68 beziehungsweise senkrecht zur Drucksiebquerachse D erstreckt. Die Drucksieblängsachse S verläuft dabei insbesondere in und/oder parallel zur Rakelbewegungsrichtung R. Die Drucksiebquerachse D verläuft insbesondere parallel zur Längserstreckung L des Rakelwerkzeugs 16.

Das Drucksieb 12 kann mittels der Linearantriebe 67, 68, 69 in vorteilhafter Weise an die Ausrichtung des Rakelwerkzeugs 16 angepasst beziehungsweise relativ zum Rakelwerkzeug 16 ausgerichtet werden. Auf diese Weise kann eine in Längsrichtung L des Rakelwerkzeugs 16 gleichmäßige Rakelkraft während eines Druckvorgangs auf das Drucksieb 12 sichergestellt werden.

Gemäß der Figuren 15a bis 19b kann die Drucksiebbewegungseinrichtung 66 einen dritten Linearantrieb 69 aufweisen, wobei der dritte Linearantrieb 69 an einer Längsseite des Drucksiebs 12 angeordnet ist oder einer Längsseite zugeordnet sein kann. Alternativ oder ergänzend kann der dritte Linearantrieb 69 in Rakelbewegungsrichtung R und/oder entlang der Drucksieblängsachse S und/oder quer, insbesondere senkrecht, zur Längserstreckung L des Rakelwerkzeugs 16 von dem ersten und zweiten Linearantrieb 67, 68 beabstandet sein.

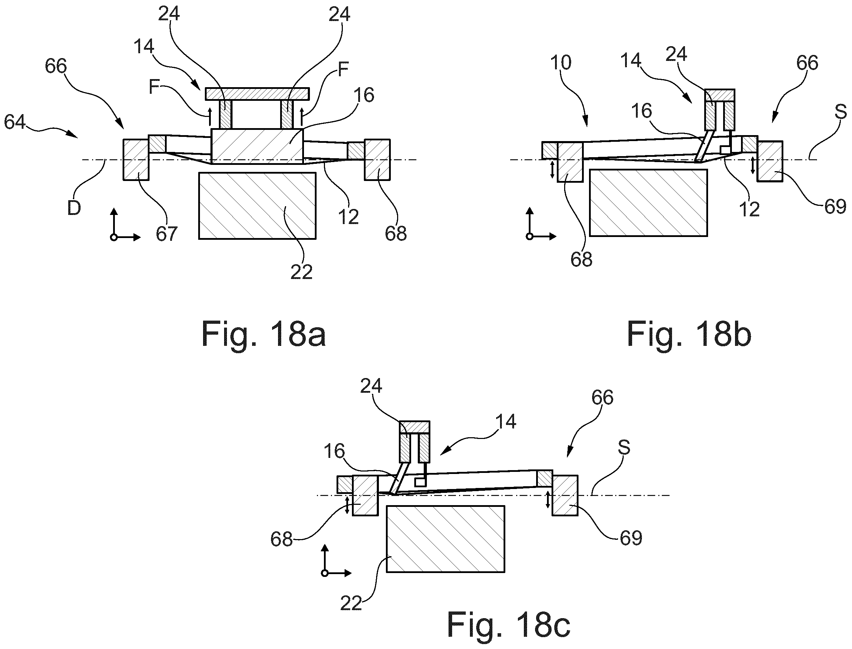

Das Drucksieb 12 kann mittels der Drucksiebbewegungseinrichtung 66 somit zusätzlich oder alternativ um eine Drucksiebquerachse D schwenkbar oder verkippbar sein, wie in Figuren 18a bis 18c gezeigt ist. Dabei kann die Drucksiebquerachse D bevorzugt quer, insbesondere senkrecht, zur Drucksieblängsachse S und/oder parallel zur Längserstreckung L des Rakelwerkzeugs 16 verlaufen. Durch die Schwenkbarkeit des Drucksiebs 12 um die Drucksiebquerachse D kann eine auf das Drucksieb 12 wirkende Rakelkraft während eines Druckvorgangs entlang der Rakelbewegungsrichtung R in vorteilhafter Weise konstant gehalten werden, wodurch ein besonders gleichmäßiges und genaues Druckergebnis erzielt werden kann.

Nachfolgend wird die Betriebsweise einer vorstehend beschriebenen Vorrichtung 10 zur Herstellung von dreidimensionalen Siebdruckwerkstücken, insbesondere einer 3D-Siebdruckanlage, näher erläutert. Dabei wird insbesondere eine Rakeleinrichtroutine sowie eine Siebeinrichtungsroutine im Einzelnen erläutert.

Soweit nachfolgend von einer Ausbildung der Steuereinrichtung 100 die Rede ist, kann dies zusätzlich oder alternativ eine entsprechende Konfiguration und/oder Einrichtung der Steuereinrichtung 100 zur Durchführung der jeweiligen Prozesse und Abläufe umfassen.

Wie beispielhaft in Figur 6 und 8 dargestellt ist, kann die Vorrichtung 10 eine Steuereinrichtung 100 zur Steuerung und/oder Regelung der Stelleinrichtung 70 und/oder der Drucksiebbewegungseinrichtung 66 und/oder der Fixiereinrichtung 42 und/oder der Rakelbewegungseinrichtung 74 und/oder der Luftlagereinrichtung 30 und/oder zur Verarbeitung und/oder zur Auswertung und/oder zur Speicherung und/oder zum Vergleich von Sensordaten der Sensoreinrichtung 18 aufweisen.

Somit ist die Steuereinrichtung 100 also in der Lage, die vorgenannten Einrichtungen und deren Daten zu steuern beziehungsweise zu regeln beziehungsweise zu verarbeiten. Bei der Steuereinrichtung 100 kann es sich um eine sogenannte Maschinensteuerung und/oder Maschinenregelung handeln.

Eine solche Steuereinrichtung 100 kann zudem mit einer hier nicht näher dargestellten Bedieneinheit für die Bedienung durch das Bedienpersonal ausgestattet und/oder mit einer solchen Bedieneinheit verbunden sein.

Die Steuereinrichtung 100 kann ferner dazu ausgebildet sein, bei Krafteinwirkung des Rakelwerkzeugs 16 unmittelbar auf einen Drucktisch 22 und/oder in einer siebfreien Anordnung über die Sensoreinrichtung 18 eine Rakelkraft zu erfassen und/oder auszuwerten.

Weiterhin kann die Steuereinrichtung 100 dazu ausgebildet sein, bei Krafteinwirkung des Rakelwerkzeugs 16 auf ein Drucksieb 12, in einer mit dem Drucksieb 12 auf einem Drucktisch 22 aufliegenden Betriebsstellung, über die Sensoreinrichtung 18 eine Rakelkraft zu erfassen und/oder auszuwerten.

Weiterhin kann die Steuereinrichtung 100 dazu ausgebildet sein, bei Krafteinwirkung des Rakelwerkzeugs 16 auf ein Drucksieb 12, frei von einer Kontaktierung zwischen dem Drucksieb 12 und einem Drucktisch 22 und/oder zwischen dem Drucksieb 12 und einer Druckunterlage und/oder zwischen dem Drucksieb 12 und zumindest einem Siebruckwerkstück, über die Sensoreinrichtung 18 eine Rakelkraft zu erfassen und/oder auszuwerten, insbesondere bei fixiertem Rakelwerkzeug 16.

Weiterhin kann die Steuereinrichtung 100 dazu ausgebildet sein, bei Krafteinwirkung des Rakelwerkzeugs 16 auf ein Drucksieb 12 und bei einer durch die Krafteinwirkung auf das Drucksieb 12 erzeugten Kontaktierung eines Drucktisches 22 und/oder einer Druckunterlage und/oder zumindest eines Siebruckwerkstücks durch das Drucksieb 12, insbesondere bei elastischer Verformung des Drucksiebs 12, über die Sensoreinrichtung 18 eine Rakelkraft zu erfassen und/oder auszuwerten.

Die Steuereinrichtung 100 kann dazu ausgebildet sein, während einer mittels der Stelleinrichtung 70 erfolgenden Absenkbewegung des Rakelwerkzeugs 16 über die Sensoreinrichtung 18 eine Rakelkraftzunahme zu erfassen und/oder auszuwerten. Somit ist die Steuereinrichtung 100 also in der Lage, mithilfe der Sensoreinrichtung 18 die Zunahme von Rakelkräften zuverlässig zu erfassen und/oder auszuwerten.

Weiterhin kann die Steuereinrichtung 100 dazu ausgebildet sein, während einer mittels der Stelleinrichtung 70 ausschließlich auf das Drucksieb 12 erfolgenden Absenkbewegung des Rakelwerkzeugs 16, insbesondere frei von einer Kontaktierung eines Drucktischs 22 und/oder einer Druckunterlage und/oder zumindest eines Siebdruckwerkstücks durch das Drucksieb 12, über die Sensoreinrichtung 18 eine Rakelkraftzunahme zu erfassen und/oder auszuwerten.

Die Steuereinrichtung 100 kann dazu ausgebildet sein, während einer mittels der Stelleinrichtung 70 auf das Drucksieb 12 erfolgenden Absenkbewegung des Rakelwerkzeugs 16, in einer mit dem Drucksieb 12 auf einem Drucktisch 22 aufliegenden Betriebsstellung, über die Sensoreinrichtung 18 eine Rakelkraftzunahme zu erfassen und/oder auszuwerten.

Weiterhin kann die Steuereinrichtung 100 dazu ausgebildet sein, während einer mittels der Stelleinrichtung 70 auf einen Drucktisch 22 und/oder auf eine Druckunterlage erfolgenden Absenkbewegung des Rakelwerkzeugs 16, insbesondere in einer siebfreien Anordnung, über die Sensoreinrichtung 18 eine Rakelkraftzunahme zu erfassen und/oder auszuwerten.

Ferner kann die Steuereinrichtung 100 dazu ausgebildet sein, bei einem mittels der Sensoreinrichtung 18 erfassten Beginn einer Rakelkraftzunahme während der Absenkung des Rakelwerkzeugs 16 eine Absenkbewegung durch die Stelleinrichtung 70 zu beenden oder die Absenkbewegung durch die Stelleinrichtung 70 nach einem vorgegebenen Absenkhub zu beenden.

Folglich kann die Steuereinrichtung 100 dazu dienen, bei Erreichen einer bestimmten oder einer vorbestimmten Rakelkraft während der Absenkung des Rakelwerkzeugs 16 eben diese Absenkung zu beenden oder nach einem vorgegebenen Absenkhub zu beenden. Dies kann der Schonung des Rakelwerkzeugs 16 beziehungsweise der Rakelvorrichtung 14 als auch des Drucksiebs 12 und/oder des Drucktisches 22 dienen.

Die Steuereinrichtung 100 kann ferner dazu ausgebildet sein, bei einem mittels der Sensoreinrichtung 18 erfassten Beginn einer Rakelkraftzunahme während der Absenkung des Rakelwerkzeugs 16 eine Rakelhöhe automatisch oder teilautomatisch zu referenzieren. Das kann bedeuten, dass die Steuereinrichtung 100 anhand einer beginnenden Rakelkraftzunahme beziehungsweise anhand der beginnenden Zunahme der Rakelkraft während der Absenkung des Rakelwerkzeugs 16 eine etwaige Rakelhöhe, beispielsweise eine Soll-Höhe oder Sollposition des Rakelwerkzeugs 16, als Referenz festlegt, die wiederum für nachfolgende Prozesse als Referenz dienen kann.

Des Weiteren ist es möglich, dass die Steuereinrichtung 100 dazu ausgebildet ist, während einer mittels der Stelleinrichtung 70 erfolgenden Absenkbewegung des Rakelwerkzeugs 16 über die Sensoreinrichtung 18 eine Rakelkraftabweichung entlang einer Längserstreckung L des Rakelwerkzeugs 16 zu erfassen und/oder auszuwerten. Dementsprechend kann die Steuereinrichtung 100 entlang der Längserstreckung L des Rakelwerkzeugs 16 Rakelkräfte erfassen, miteinander vergleichen und/oder auswerten. Dadurch ist es zum Beispiel möglich, mithilfe der Steuereinrichtung 100 eine gleichmäßige Kraftverteilung entlang einer Längserstreckung L des Rakelwerkzeugs 16 zu begünstigen, so dass die Kraft des Rakelwerkzeugs 16 auf das Drucksieb 12 und/oder auf den Drucktisch 22 und/oder auf die jeweiligen Werkstücke entlang der Längserstreckung L des Rakelwerkzeugs 16 gleichbleibend beziehungsweise konstant ist.

Auch kann die Steuereinrichtung 100 dazu ausgebildet sein, bei einer mittels der Sensoreinrichtung 18 erfassten Rakelkraftabweichung entlang einer Längserstreckung L des Rakelwerkzeugs 16 selbsttätig eine Neigungsjustierung mittels der Justiereinrichtung 28 auszuführen. Auf diese Weise kann mit nur geringem Handhabungsaufwand mithilfe der Justiereinrichtung 28 und mithilfe der Sensoreinrichtung 18 die räumliche Ausrichtung des Rakelwerkzeugs 16 gezielt initiiert beziehungsweise eingestellt und/oder korrigiert werden, sodass die jeweils gewünschte Rakelkraft beziehungsweise Rakelkraftverteilung entlang einer Längserstreckung L des Rakelwerkzeugs 16 und/oder entlang der gesamten Länge des Rakelwerkzeugs 16 eingestellt werden kann. Die automatische oder teilautomatische Einstellung beziehungsweise Neigungsjustierung und/oder Korrektur lässt sich mit geringem Handhabungsaufwand vornehmen.

Ferner kann die Steuereinrichtung 100 zur Durchführung einer Rakeleinrichtroutine eingerichtet und/oder ausgebildet sein.

Dabei kann die Steuereinrichtung 100 dazu ausgebildet sein, insbesondere während einer Rakeleinrichtroutine, mittels der Stelleinrichtung 70 die Rakelvorrichtung 14 in eine Rakelwechselstellung zu verstellen. In der Rakelwechselstellung kann ein Wechsel beziehungsweise Austausch des Rakelwerkzeugs 16 in besonders einfacher Weise manuell, teilautomatisch oder automatisch erfolgen, wodurch ein lediglich geringer Handhabungsaufwand zum Wechsel des Rakelwerkzeugs 16 notwendig ist.

Es ist weiterhin möglich, dass die Steuereinrichtung 100 dazu ausgebildet ist, insbesondere während einer Rakeleinrichtroutine, zu erfassen und/oder zu erkennen, ob ein Rakelwerkzeug 16 an der Rakellagerung 34 und/oder der Rakelvorrichtung 14 angebunden oder mit dieser verbunden ist, insbesondere über eine mittels der Sensoreinrichtung 18 erfassten Rakelkraft und/oder über ein mittels der der Sensoreinrichtung 18 erfassten Eigengewicht des Rakelwerkzeugs 16 beziehungsweise des Rakelwerkzeugs 16 und damit fest verbundener Komponenten oder Baugruppen. Durch die Erkennung, ob ein Rakelwerkzeug 16 an der Rakelvorrichtung 14 und/oder Rakellagerung 34 angebunden ist, kann mit nur geringem Aufwand und hoher Prozesssicherheit eine Rakeleinrichtroutine initiiert werden.

Weiterhin kann die Steuereinrichtung 100 dazu ausgebildet sein, insbesondere während einer Rakeleinrichtroutine, während einer mittels der Stelleinrichtung 70 erfolgenden Absenkbewegung des Rakelwerkzeugs 16 die Luftlagerung beziehungsweise Luftlagereinrichtung 30, insbesondere die wenigstens eine Luftdüse 32, zu aktivieren oder aktiviert zu halten und den wenigstens einen Elektromagneten 44 inaktiv stellen und/oder inaktiv zu lassen. Während der Rakeleinrichtroutine kann somit die zuverlässige Ausbildung des Luftlagers zur Ausrichtung des Rakelwerkzeugs 16 sichergestellt werden.

Weiterhin ist es möglich, dass die Steuereinrichtung 100 dazu ausgebildet ist, insbesondere während einer Rakeleinrichtroutine, bei einem über die Sensoreinrichtung 18 erfassten Kraftreferenzwert eine Absenkbewegung durch die Stelleinrichtung 70 zu beenden und/oder eine Absenkbewegung durch die Stelleinrichtung 70 um einen vorgegebenen Absenkhub fortzuführen und/oder im Anschluss an einen vorgegebenen Absenkhub zu beenden. So kann die Absenkbewegung bei Kontakt mit einem Untergrund, insbesondere dem Drucktisch 22, beendet werden, insbesondere bei Auflage des Rakelwerkzeugs 16 auf einem Untergrund, insbesondere dem Drucktisch 22. Das Rakelwerkzeug 16 liegt dann vorzugsweise auf dem Untergrund auf und/oder ist zu dem Untergrund ausgerichtet.

Die Steuereinrichtung 100 kann dazu ausgebildet sein, insbesondere während einer Rakeleinrichtroutine, bei einer über die Sensoreinrichtung 18 erfassten, innerhalb eines Referenzintervalls beziehungsweise Referenzwertebereichs befindlichen Rakelkraftabweichung entlang einer Längserstreckung L des Rakelwerkzeugs 16 eine Absenkbewegung durch die Stelleinrichtung 70 zu beenden und/oder eine Absenkbewegung durch die Stelleinrichtung 70 um einen vorgegebenen Absenkhub fortzuführen und/oder im Anschluss an einen vorgegebenen Absenkhub zu beenden. Die Absenkbewegung des Rakelwerkzeugs 16 kann dann in Abhängigkeit von einer Rakelkraftabweichung entlang der Längserstreckung L des Rakelwerkzeugs beendet werden.

In Figuren 15a und 15b ist das Rakelwerkzeug 16 nach Beendigung einer Absenkbewegung, insbesondere einer Absenkbewegung im Rahmen einer Rakeleinrichtroutine, durch die Stelleinrichtung 70 gezeigt. Während einer solchen Absenkbewegung kann die Luftlagerung beziehungsweise Luftlagereinrichtung 30, insbesondere die wenigstens eine Luftdüse 32, aktiviert sein oder aktiviert gehalten werden und der wenigstens einen Elektromagnet 44 kann inaktiv gestellt und/oder inaktiv gelassen werden.

Mit der Aktivierung der Luftlagerung beziehungsweise Luftlagereinrichtung 30 fällt das Rakelwerkzeug 16 relativ zur Justierhaltung 36 in eine untere vertikale Endlage, die durch die Langlochführungen 46 beziehungsweise das Zusammenwirken Langlochführungen 46 und der darin angeordneten Haltestifte 50 vorgegeben sein kann.

Bevor das Rakelwerkzeug 16 mit einem Untergrund in Kontakt kommt, kann die Sensoreinrichtung 18 oder können die Kraftmesssensoren 24 referenziert beziehungsweise auf einen Ausgangswert zurückgesetzt werden. In einer solchen Stellung wird hiermit das Eigengewicht des Rakelwerkzeugs 16, hängend an den beiden Kraftmesssensoren 24, jeweils kompensiert, insbesondere messtechnisch kompensiert. Eine solche Zurücksetzung oder Referenzierung der Sensoreinrichtung 18 und/oder der Kraftmesssensoren 24 kann durch die Steuereinrichtung 100 vorgenommen werden.

Aufgrund der aktiven Luftlagerung beziehungsweise Luftlagereinrichtung 30 kann ferner mit nur geringer Krafteinwirkung eine Auslenkung oder Bewegung des Rakelwerkzeugs 16 relativ zur Justierhaltung 36 erfolgen. Insbesondere kann bei ausreichender Absenkbewegung durch die Stelleinrichtung 70 auf diese Weise eine eigengewichtsbasierte Auflage des Rakelwerkzeugs 16 auf einem Untergrund - etwa auf dem Drucktisch 22 oder auf dem Drucksieb 12, das seinerseits auf dem Drucktisch 22 aufliegt oder auf der Höhe des Drucktischs 22 angeordnet ist - realisiert werden. Durch diese eigengewichtsbasierte Auflage kann bei aktivierter Luftlagerung beziehungsweise Luftlagereinrichtung 30 und bei gleichzeitig inaktivem Elektromagnet 44 beziehungsweise inaktiver Fixiereinrichtung 42 eine selbsttätige Ausrichtung des Rakelwerkzeugs 16 sichergestellt werden.

Das Rakelwerkzeug 16 liegt am Ende der Absenkbewegung auf dem Drucktisch 22 beziehungsweise auf dem Drucksieb 12, welches auf dem Drucktisch 22 aufliegt, auf und ist relativ zu diesem ausgerichtet. Das Rakelwerkzeug 16 ist mittels seines Eigengewichts insbesondere parallel zur Drucktischoberfläche oder zum aufliegenden Drucksieb 12 ausgerichtet. Somit ist das Eigengewicht des Rakelwerkzeugs 16 gemeinsam mit der Absenkbewegung durch die Stelleinrichtung 70 ursächlich für die Ausrichtung des Rakelwerkzeugs 16 relativ zum Drucktisch 22 und/oder zum aufliegenden Drucksieb 12.

Insbesondere kann die Steuereinrichtung 100 dazu ausgebildet sein, insbesondere in einer Rakeleinrichtroutine, bei einem über die Sensoreinrichtung 18 erfassten Kraftreferenzwert, der einem Aufliegen des Rakelwerkzeugs 16 auf einem Untergrund entspricht, eine Absenkbewegung durch die Stelleinrichtung 70 um einen vorgegebenen Absenkhub fortzuführen, nämlich insbesondere um einen fixen Leerweg und/oder um eine halbes Einhängespiel des Rakelwerkzeugs entlang der Langlochführungen und/oder um eine halbe Länge der Langlochführungen 46 und die Absenkbewegung im Anschluss an einen vorgegebenen Absenkhub zu beenden. In dieser Stellung des Rakelwerkzeugs 16 kann somit sichergestellt sein, dass das Rakelwerkzeug mit seinem Eigengewicht parallel auf dem Drucksieb 12 beziehungsweise dem Drucktisch 22 aufliegt und keine Kollision innerhalb des mechanisch definierten Langlochspiels der Langlochführungen 46 auftreten kann.

Die Steuereinrichtung 100 kann weiterhin dazu ausgebildet sein, insbesondere während einer Rakeleinrichtroutine, nach Beendigung einer Absenkbewegung durch die Stelleinrichtung 70 den wenigstens einen Elektromagneten 44 zu aktivieren und/oder aktiviert zu lassen und/oder die Luftlagerung beziehungsweise Luftlagereinrichtung 30, insbesondere die wenigstens eine Luftdüse 32, zu deaktivieren und/oder deaktiviert zu lassen. Mittels des wenigstens einen Elektromagneten 44 kann das zuvor ausgerichtete Rakelwerkzeug 16 fixiert werden.

Das Rakelwerkzeug 16 ist in einer solchen Stellung relativ zum Untergrund ausgerichtet und fixiert. Ein gleichmäßiges Auftragen von insbesondere parallelen Schichten kann somit sichergestellt werden.

Die Kraftmesssensoren 24 können nach der Fixierung des Rakelwerkzeugs 16 aktiv bleiben oder auch inaktiv geschaltet werden.

Es ist ferner möglich, dass die Steuereinrichtung 100 dazu ausgebildet ist, insbesondere während einer Rakeleinrichtroutine, nach Beendigung einer Absenkbewegung durch die Stelleinrichtung 70 und/oder Aktivierung des wenigstens einen Elektromagneten 44 und/oder Deaktivierung der Luftlagerung beziehungsweise Luftlagereinrichtung 30, die Position des Rakelwerkzeugs 16 zu referenzieren. Die Steuereinrichtung 100 kann somit eine etwaige Rakelhöhe, beispielsweise eine Soll-Höhe oder Sollposition des Rakelwerkzeugs 16, und/oder eine Neigungslage des Rakelwerkzeugs 16 als Referenz festlegt, die wiederum für nachfolgende Prozesse als Referenz dienen kann.

Die Steuereinrichtung 100 kann dazu ausgebildet sein, insbesondere während eines Rakelvorgangs und/oder für einen Rakelvorgang, durch die Stelleinrichtung 70 die Position des Rakelwerkzeugs 16 gegenüber der referenzierten Position durch eine Absenk- oder Anhebebewegung zu verändern, insbesondere um eine, vorzugsweise vorgegebene, Soll-Rakelkraft während eines Rakelvorgangs einzustellen. Durch die Einstellung kann eine vorgegebene Soll-Rakelkraft während eines Rakelvorgangs sichergestellt werden, wodurch ein besonders vorteilhaftes Druckergebnis erzielt werden kann.

Die Einstellung der Soll-Rakelkraft kann mittels der Sensoreinrichtung 18 beziehungsweise der Kraftmesssensoren 24 erfolgen. Mittels der Steuereinrichtung 100 und der Sensoreinrichtung 18, insbesondere der Kraftmesssensoren 24, kann eine Rakelkraft gemessen, bestimmt und/oder überwacht werden.

Weiterhin kann die Steuereinrichtung 100 dazu ausgebildet sein, nach Aktivierung des wenigstens einen Elektromagneten 44 das Rakelwerkzeug 16 mittels der Stelleinrichtung 70 in einer Aufwärtsbewegung zu verfahren, insbesondere bis in eine Siebkorrekturposition. Das Verfahren des Rakelwerkzeugs 16 bis in eine solche Siebkorrekturposition kann insbesondere während, zum Abschluss oder im Anschluss an eine Rakeleinrichtroutine vorgenommen werden.

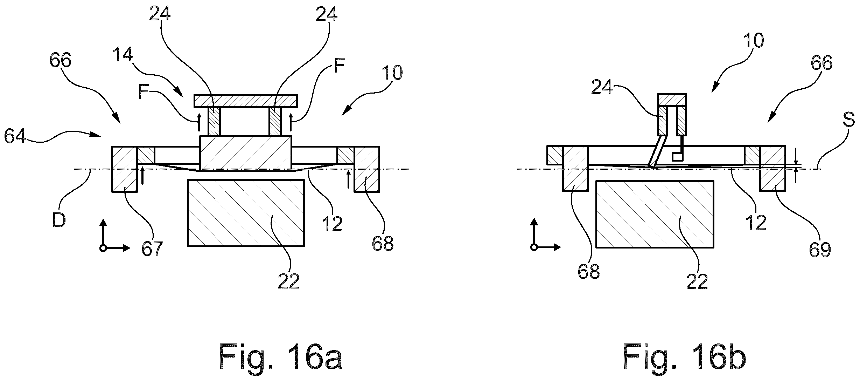

Die Siebkorrekturposition das Rakelwerkzeug 16 ist in den Figuren 16a und 16b gezeigt. In der Siebkorrekturposition gemäß Figuren 16a und 16b ist das Rakelwerkzeug 16 vorzugsweise vom Drucktisch 22 beabstandet. Wie in den Figuren 16a und 16b dargestellt ist, kann in einer Siebkorrekturposition das Drucksieb 12 mit dem Rakelwerkzeug 16 in Kontakt stehen und/oder in Kontakt gebracht und/oder in Kontakt gehalten werden.

Es möglich, dass ausgehend von der in den Figuren 15a und 15b gezeigten Stellung zunächst das Rakelwerkzeug 16 in die Siebkorrekturposition gefahren und im Anschluss daran das Drucksieb 12 angehoben und mit dem Rakelwerkzeug 16 in Kontakt gebracht wird. Ebenso können ausgehend von der in den Figuren 15a und 15b gezeigten Stellung das Rakelwerkzeug 16 und das Drucksieb 12 gemeinsam und/oder unter Beibehaltung eines Kontakts in die in den Figuren 16a und 16b gezeigten Stellung verfahren werden, in der das Rakelwerkezug 16 in einer Siebkorrekturposition positioniert ist.

Im Anschluss an eine Rakeleinrichtroutine, wie voranstehend bezugnehmend auf Figuren 15a und 15b beschrieben worden ist, kann eine nachfolgend erläuterte Siebeinrichtungsroutine durchgeführt werden. Eine solche Siebeinrichtungsroutine kann mit der Siebkorrekturposition, wie Figur 16a und 16b gezeigt, beginnen oder in der Siebkorrekturposition, wie Figur 16a und 16b gezeigt, bereits begonnen haben.

Die Steuereinrichtung 100 kann dabei zur Durchführung einer Siebeinrichtungsroutine ausgebildet sein.

Die Steuereinrichtung 100 ist vorzugsweise dazu ausgebildet, insbesondere im Rahmen einer Siebeinrichtungsroutine, während einer mittels der Drucksiebbewegungseinrichtung 66 ausschließlich gegen das, insbesondere sich in einer Siebkorrekturposition befindliche, Rakelwerkzeug 16 erfolgenden Aufwärtsbewegung des Drucksiebs 12, insbesondere frei von einer Kontaktierung eines Drucktischs 22 und/oder einer Druckunterlage und/oder zumindest eines Siebdruckwerkstücks durch das Drucksieb 12, über die Sensoreinrichtung 18, insbesondere die Druckmesssensoren 24, eine Rakelkraftzunahme zu erfassen und/oder auszuwerten.

Bei einer solchen Aufwärtsbewegung des Drucksiebs 12 kann das Rakelwerkzeug 16 bereits in einer Siebkorrekturposition positioniert sein und durch die Aufwärtsbewegung des Drucksiebs 12 auf das Rakelwerkzeug 16 kann ein Kontakt zwischen dem Drucksieb 12 und dem Rakelwerkzeug 16 hergestellt und durch weitere Aufwärtsbewegung eine, insbesondere elastische, Siebverformung, wie in Figuren 16a und 16b dargestellt, erfolgen. Hierdurch kann eine Rakelkraftzunahme einsetzen, die erfasst und ausgewertet werden kann.

Ebenso ist es möglich, dass eine solche Aufwärtsbewegung des Drucksiebs 12 zunächst gemeinsam mit dem Rakelwerkzeug 16, aus einer in Figuren 15a und 15b gezeigten Stellung, erfolgt, gegebenenfalls unter Beibehaltung eines Kontakts zwischen Drucksieb 12 und Rakelwerkzeug 16, bis das Rakelwerkzeug 16 die Siebkorrekturposition, wie in Figuren 16a und 16b gezeigt, erreicht. Das Drucksieb 12 kann jedoch weiter angehoben werden als das Rakelwerkzeug 16, wie ebenfalls in Figuren 16a und 16b gezeigt, wodurch eine, insbesondere elastische, Siebverformung erfolgen kann. Hierdurch kann eine Rakelkraftzunahme einsetzen, die erfasst und ausgewertet werden kann.

Weiterhin kann die Steuereinrichtung 100 dazu ausgebildet sein, insbesondere im Rahmen einer Siebeinrichtungsroutine, während einer mittels der Drucksiebbewegungseinrichtung 66 ausschließlich auf das, insbesondere sich in einer Siebkorrekturposition befindliche, Rakelwerkzeug 16 erfolgenden Aufwärtsbewegung des Drucksiebs 12, insbesondere frei von einer Kontaktierung eines Drucktischs 22 und/oder einer Druckunterlage und/oder zumindest eines Siebdruckwerkstücks durch das Drucksieb 12, über die Sensoreinrichtung 18 eine Rakelkraftabweichung entlang einer Längserstreckung L des Rakelwerkzeugs 16 zu erfassen und/oder auszuwerten. Eine solche Erfassung und Auswertung kann insbesondre in einer in den Figuren 16a und 16b gezeigten Stellung des Rakelwerkzeugs 16 und des Drucksiebs 12 vorgenommen werden. Es ist auf diese Weise besonders vorteilhaft möglich, Rakelkraftabweichungen entlang der Längserstreckung L des Rakelwerkzeugs 16 zu erfassen und anschließend auszuwerten.

De Steuereinrichtung 100 kann dazu ausgebildet sein, insbesondere im Rahmen einer Siebeinrichtungsroutine, das Drucksieb 12 in einer Aufwärtsbewegung, insbesondere frei von einer Kontaktierung eines Drucktischs 22 und/oder einer Druckunterlage und/oder zumindest eines Siebdruckwerkstücks durch das Drucksieb 12, gegen das, insbesondere sich in der Siebkorrekturposition befindliche, Rakelwerkzeug 16 zu verfahren, bis eine vorgegebene Absprunghöhe erreicht ist. Es ist dann möglich, eine vorgegebene Absprunghöhe während einer Siebeinrichtungsroutine bei der Ausrichtung des Drucksiebs 12 zu berücksichtigen, insbesondere die dabei auftretenden Rakelkräfte und/oder Rakelkraftabweichungen entlang der Längserstreckung L des Rakelwerkzeugs 16.

Weiterhin kann die Steuereinrichtung 100 dazu ausgebildet sein, insbesondere im Rahmen einer Siebeinrichtungsroutine, die Position des ersten und zweiten Linearantriebs 67, 68 der Drucksiebbewegungseinrichtung 66 zu referenzieren, insbesondere bei einer vorgegebenen Absprunghöhe. Die Steuereinrichtung 100 kann somit eine etwaige Drucksiebhöhe, beispielsweise eine Soll-Höhe oder Sollposition des Drucksiebs 12, und/oder eine Neigungslage des Drucksiebs 12 als Referenz festlegen, die wiederum für nachfolgende Prozesse als Referenz dienen kann.

Die Steuereinrichtung 100 kann ferner dazu ausgebildet sein, im Rahmen einer Siebeinrichtungsroutine eine Neigungsjustierung des Drucksiebs 12 vorzunehmen. Eine solche Neigungsjustierung ist schematisch in den Figuren 17a und 17b in Bezug auf eine Neigung um eine Drucksieblängsachse S und in den Figuren 18a bis 18c in Bezug auf Neigung um eine Drucksiebquerachse D gezeigt.

Die Steuereinrichtung 100 kann dabei dazu ausgebildet sein, insbesondere im Rahmen einer Siebeinrichtungsroutine, den Linearantrieb 67, 68 und/oder 69 oder zumindest einem der Linearantrieb 67, 68, 69 der Drucksiebbewegungseinrichtung 66, insbesondere ausgehend von einer referenzierten Position der Linearantriebe 67, 68, 69, eine Neigungsjustierung des Drucksiebs 12 vorzunehmen, bis die über die Sensoreinrichtung 18, insbesondere die Messsensoren 24, erfasste Rakelkraftabweichung entlang einer Längserstreckung L des Rakelwerkzeugs 16 gleich null ist oder innerhalb eines vorgegebenen Abweichungsintervalls beziehungsweise Abweichungswertebereichs liegt. Dabei können die Linearantriebe 67, 68 und/oder 69 jeweils unabhängig voneinander inkrementell nach oben und/oder nach unten verfahren werden. Nach jedem Verfahren oder jedem Einstellinkrement kann eine Messung über die Messsensoren 24 und eine Rakelkraftabweichung entlang einer Längserstreckung L des Rakelwerkzeugs 16 erfasst beziehungsweise ausgewertet werden.

Weiterhin kann die Steuereinrichtung 100 dazu ausgebildet sein, insbesondere im Rahmen einer Siebeinrichtungsroutine, den ersten und zweiten Linearantrieb 67, 68 der Drucksiebbewegungseinrichtung 66, insbesondere ausgehend von einer referenzierten Position der Linearantriebe 67, 68, unabhängig voneinander zu verfahren, bis die über die Sensoreinrichtung 18, insbesondere die Messsensoren 24, erfasste Rakelkraftabweichung entlang einer Längserstreckung L des Rakelwerkzeugs 16 gleich null ist oder innerhalb eines vorgegebenen Abweichungsintervalls beziehungsweise Abweichungswertebereichs liegt. Im Rahmen der Siebeinrichtungsroutine kann somit das Drucksieb 12 derart zum Rakelwerkzeug 16 ausgerichtet werden, dass die Rakelkraftabweichung entlang der Längserstreckung L des Rakelwerkzeugs 16 gleich null ist oder innerhalb eines vorgegebenen Abweichungsintervalls beziehungsweise Abweichungswertebereichs liegt. Somit kann eine entlang der Längserstreckung L auf das Drucksieb 12 wirkende, gleichmäßige Rakelkraft sichergestellt werden.

In der Figur 17a ist beispielsweise eine Stellung gezeigt, in der der Linearantrieb 67 nach oben und der Linearantrieb 68 nach untern verfahren worden ist, um eine Messung durchzuführen. Der Linearantrieb 69 wurde hingegen nicht verfahren, wie Figur 17b zeigt. Ein solches Verfahren der Linearantriebe 67 und 68 kann solange fortgeführt werden, bis die gewünschte Neigungslage des Drucksiebs 12 erreicht wird.

Ein solches Verfahren kann, wie in Figur 17b gezeigt ist, insbesondere in einer Mittelstellung des Rakelwerkzeugs entlang einer Rakelbewegungsrichtung R vorgenommen werden. Eine solche Mittelstellung kann insbesondere zwischen einer in Figur 18b gezeigten Endstellung in Rakelbewegungsrichtung und einer in Figur 18c gezeigten Anfangsstellung in Rakelbewegungsrichtung positioniert sein.

Weiterhin kann die Steuereinrichtung 100 dazu ausgebildet sein, insbesondere im Rahmen einer Siebeinrichtungsroutine, die relative Lage des ersten und des zweiten Linearantriebs 67, 68 der Drucksiebbewegungseinrichtung 66 relativ zueinander zu referenzieren, wenn die über die Sensoreinrichtung 18 erfasste Rakelkraftabweichung entlang einer Längserstreckung L des Rakelwerkzeugs 16 gleich null ist oder innerhalb eines vorgegebenen Abweichungsintervalls beziehungsweise Abweichungswertebereichs liegt. Die Steuereinrichtung 100 kann somit eine etwaige Drucksiebhöhe, beispielsweise eine Soll-Höhe oder Sollposition des Drucksiebs 12, und/oder eine Neigungslage des Drucksiebs 12 als Referenz festlegen, die wiederum für nachfolgende Prozesse als Referenz dienen kann.

In den Figuren 18a bis 18c sind schematische Ansichten der Rakelvorrichtung 14 mit einem Drucktisch 22 und einem Drucksieb 12 während einer Schrägstellung des Drucksiebs 12 um eine Drucksiebquerachse D im Rahmen einer Siebeinrichtungsroutine gezeigt, wobei Figuren 18b und 18c unterschiedliche Rakelstellungen entlang einer Rakelbewegungsrichtung R zeigen.

Bezugnehmend auf die Figuren 18a bis 18c kann die Steuereinrichtung 100 dazu ausgebildet sein, insbesondere im Rahmen einer Siebeinrichtungsroutine, das Rakelwerkzeug 16 mittels der Stelleinrichtung 70 von einer ersten Referenzposition in eine zweite Referenzposition in Rakelbewegungsrichtung R zu verfahren oder zu verstellen. Beispielsweise in den Figur 18b ist das Rakelwerkzeug 16 in der ersten Referenzposition und in der Figur 18c in der zweiten Referenzposition dargestellt.

Weiterhin kann die Steuereinrichtung 100 dazu ausgebildet sein, insbesondere im Rahmen einer Siebeinrichtungsroutine, einen ersten und einen zweiten Linearantrieb 67, 68 zusammen und einen dritten Linearantrieb 69 unabhängig davon oder nur einen dritten Linearantrieb 69 unabhängig von einem ersten und einen zweiten Linearantrieb 67, 68 oder er nur einen ersten und einen zweiten Linearantrieb 67, 68 zusammen unabhängig von einem dritten Linearantrieb 69 zu verfahren, derart, dass bei vorgegebener Absprunghöhe die über die Sensoreinrichtung 18, insbesondere die Kraftmesssensoren 24 erfasste Rakelkraftabweichung zwischen einer ersten Referenzposition des Rakelwerkzeugs 16 und einer zweiten Referenzposition des Rakelwerkzeugs 16 gleich null ist oder innerhalb eines vorgegebenen Abweichungsintervalls beziehungsweise Abweichungswertebereichs liegt.

Bei einer solchen Rakelkraftabweichung zwischen einer ersten und zweiten Referenzposition des Rakelwerkzeugs 16 kann eine Rakelkraftabweichungen entlang einer Längserstreckung L des Rakelwerkzeugs 16 unberücksichtigt bleiben. Somit kann für die Ermittlung einer Rakelkraftabweichung zwischen einer ersten und zweiten Referenzposition des Rakelwerkzeugs 1, die insbesondere, wie beispielsweise in den Figuren 18b und 18c gezeigt ist, entlang einer Rakelbewegungsrichtung R voneinander beabstandet sein können, jeweils eine Gesamtrakelkraft zugrunde gelegt werden, also unabhängig von Rakelkraftabweichungen entlang einer Längserstreckung L des Rakelwerkzeugs 16.

Mithin kann das Rakelwerkzeug 16 in einer in Figur 18b gezeigten und einem Druckende entsprechenden Stellung vertikal abgesenkt und in das Drucksieb 12 eingetaucht werden, beispielsweise um 0.5 mm. Anschließend kann das Rakelwerkzeug 16 in einer in Figur 18c gezeigten und einem Druckbeginn entsprechenden Stellung vertikal abgesenkt und in das Drucksieb 12 eingetaucht werden, beispielsweise um 0.5 mm. Bevor das Rakelwerkzeug 16 vollständig eingetaucht ist, wird jeweils die Kraft über die Sensoreinrichtung 18 gemessen, um zu erfassen, wie groß die Kraftzunahme pro Weg ist beziehungsweise um wieviel Weg man das Drucksieb 12 bewegen und/oder neigen muss, um eine bestimmte Kraftdifferenz zwischen den in den Figuren 18b und 18c gezeigten Rakelstellungen auszugleichen. Ist zwischen den in den Figuren 18b und 18c gezeigten Rakelstellungen eine mittels der Sensoreinrichtung 18 gemessene und/oder erfasste Kraftdifferenz grösser als ein Differenz-Toleranzwert, kann das Drucksieb, insbesondere iterativ, um die Drucksiebquerachse D gekippt beziehungsweise geneigt werden. Dieser Vorgang kann wiederholt werden und die Rakelkräfte beim Eintauchen ins Drucksieb 12 in den Rakelstellungen gemäß Figuren 18b und 18c werden solange gemessen beziehungsweise erfasst, bis etwaige Toleranzgrenzen nicht mehr überschritten werden.

Durch ein derartiges Verfahren beziehungsweise Verstellen der Linearantriebe 67, 68, 69 kann mithin in vorteilhafter Weise eine Neigung des Drucksiebs 12 um eine Drucksiebquerachse D vorgenommen werden. Gleichzeitig kann in unterschiedlichen Neigungslagen ein Vergleich von Rakelkräften an unterschiedlichen Referenzpositionen des Rakelwerkzeugs 16 erfasst und ausgewertet werden und eine optimale oder ausreichend verbesserte Neigungslage eingestellt werden. Hierdurch kann eine gleichbleibende auf das Drucksieb 12 wirkende Rakelkraft in der Rakelbewegungsrichtung R sichergestellt werden, wodurch ein besonders gleichmäßiges Druckergebnis erzielt werden kann.

Durch zumindest eine oder mehrere der vorstehend beschriebenen Rakel- und/oder Siebeinrichtungsroutinen kann zunächst das Rakelwerkzeug 16 relativ beziehungsweise parallel zum Drucktisch 22 ausgerichtet und anschließend das Drucksieb 22 relativ zum Rakelwerkzeug 16 beziehungsweise relativ zur Rakelunterkante des Rakelwerkzeugs 16 auszurichten.

Die Steuereinrichtung 100 kann ferner dazu ausgebildet sein, insbesondere im Rahmen einer Siebeinrichtungsroutine, die Position eines ersten und zweiten Linearantriebs 67, 68 relativ zu einem dritten Linearantrieb 69 der Drucksiebbewegungseinrichtung 66 zu referenzieren. Die Steuereinrichtung 100 kann somit eine etwaige Drucksiebhöhe, beispielsweise eine Soll-Höhe oder Sollposition des Drucksiebs 12, und/oder eine Neigungslage des Drucksiebs 12 als Referenz festlegen, die wiederum für nachfolgende Prozesse, insbesondere einen nachfolgenden Druckprozess, als Referenz dienen kann. Eine in den Figuren 18a bis 18c gezeigte Stellposition der Linearantriebe 67, 68, 69 nach erfolgter Neigungsjustierung kann mithin in geeigneter Weise referenziert werden.

Ferner kann die Steuereinrichtung 100 dazu ausgebildet sein, eine Rakelkraftabweichung entlang einer Längserstreckung L des Rakelwerkzeugs 16 in einer ersten Referenzposition des Rakelwerkzeugs 16, wie beispielsweise in Figur 18b gezeigt, mit einer Rakelkraftabweichung entlang einer Längserstreckung L des Rakelwerkzeugs 16 in einer zweiten Referenzposition des Rakelwerkzeugs 16, wie beispielsweise in Figur 18c gezeigt, zu vergleichen und/oder zu dokumentieren und/oder bei Überschreiten einer Toleranzgrenze eine Warnmeldung auszugeben.

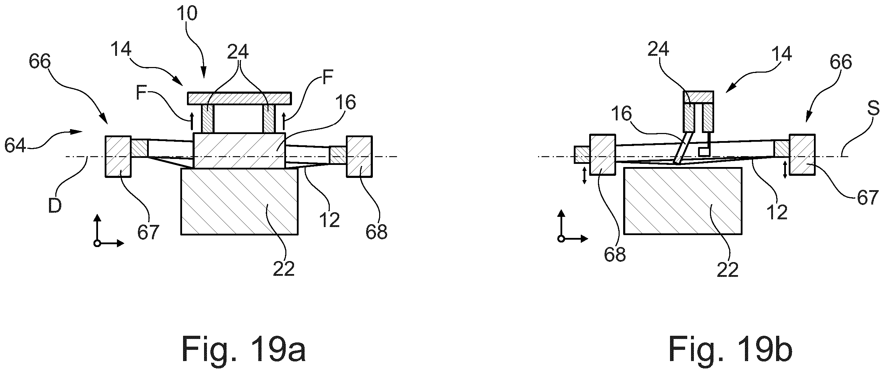

Figur 19a zeigt eine schematische Vorderansicht der Rakelvorrichtung 16 mit einem Drucktisch 22 und einem Drucksieb 12 während einer Druckkraftermittlung, insbesondere im Rahmen einer Rakel- und/oder Siebeinrichtungsroutine. Die Figur 19b zeigt eine schematische Seitenansicht der Rakelvorrichtung 16 mit Drucktisch 22 und Drucksieb 22 während einer Druckkraftermittlung gemäß Figur 19a. Einer Druckkraftermittlung gemäß Figuren 19a und 19b können die oder einzelne der Rakel- und/oder Siebeinrichtungsroutinen beziehungsweise Siebeinrichtungsroutinen, wie voranstehend unter Bezugnahme auf die Figuren 15a bis 18c beschrieben, vorangegangen sein.

Gemäß Figur 19a und 19b kann die Druckkraftermittlung während einer Kontaktierung des Drucktischs 22 beziehungsweise eines auf dem Drucktisch 22 positionierten Werkstückträgers und/oder Werkstücks durch das Drucksieb 12 in Folge der Krafteinwirkung über das Rakelwerkzeug 16 erfolgen.

Bei einer Druckkraft kann es insbesondere um eine auf den Drucktisch 22 und/oder einen auf dem Drucktisch 22 befindlichen Werkstückträger und/oder auf ein Siebdruckwerkstück auf dem Drucktisch 22 oder einem Werkstückträger einwirkende Kraft handeln, beispielsweise während eines Druckvorgangs.

Im Rahmen der Druckkraftermittlung gemäß Figuren 19a und 19b kann eine Rakelkraft bei einer Kontaktierung des Drucktischs 22 beziehungsweise eines auf dem Drucktisch 22 positionierten Werkstückträgers und/oder Werkstücks durch das Drucksieb 12 in Folge der Krafteinwirkung über das Rakelwerkzeug 16 ermittelt werden.

Ferner kann sich eine auf den Drucktisch 22 und/oder einen Werkstückträger und/oder ein Siebdruckwerkstück einwirkende Druckkraft ergeben aus der Differenz einer Rakelkraft bei Krafteinwirkung des Rakelwerkzeugs 16 über das Drucksieb 12 auf den Drucktisch 22 und/oder einen Werkstückträger und/oder ein Siebdruckwerkstück einerseits, wie beispielsweise gemäß Figuren 19a und 19b ermittelt wird, sowie einer Rakelkraft bei Krafteinwirkung des Rakelwerkzeugs 16 auf das Drucksieb 12 und frei von einer Kontaktierung zwischen Drucksieb 12 und Drucktisch 22 oder Werkstückträger oder Siebdruckwerkstück andererseits, wie Sie beispielsweise gemäß Figuren 18a bis 18c ermittelt wird.

Mithin kann die Steuereinrichtung 100 dazu ausgebildet sein, insbesondere im Rahmen einer Siebeinrichtungsroutine, eine auf einen Drucktisch 22 und/oder einen auf einem Drucktisch 22 befindlichen Werkstückträger und/oder auf ein Siebdruckwerkstück auf dem Drucktisch 22 oder einem Werkstückträger einwirkende Druckkraft zu ermitteln, bevorzugt auf Grundlage einer Differenz zwischen einer Rakelkraft bei Krafteinwirkung des Rakelwerkzeugs 16 über das Drucksieb 12 auf den Drucktisch 22 und/oder einen Werkstückträger und/oder ein Siebdruckwerkstück einerseits sowie einer Rakelkraft bei Krafteinwirkung des Rakelwerkzeugs 16 auf das Drucksieb 12 frei von einer Kontaktierung zwischen Drucksieb 12 und Drucktisch 22 oder Werkstückträger oder Siebdruckwerkstück andererseits.

Gemäß einer weiteren Ausgestaltung kann die Steuereinrichtung 100 dazu ausgebildet sein, die Höhenposition und/oder Ausrichtung und/oder Neigungslage des Drucksiebs 12 nach Abschluss eines Druckvorgangs und/oder vor Beginn eines Druckvorgangs zu steuern und/oder zu regeln. Auf diese Weise ist die Steuereinrichtung 100 in der Lage, das Drucksieb 12 in seiner räumlichen Ausrichtung dahingehend einzustellen, dass beispielsweise eine konstante Kraft der Rakelvorrichtung 14 beziehungsweise des Rakelwerkzeugs 16 gewährleistet werden kann beziehungsweise während eines Rakelvorgangs konstante Kräfte aufgebracht werden. Die Ausrichtung des Drucksiebs 12 kann auf die Ausrichtung des Rakelwerkzeugs 16 angepasst werden oder eine Steuerung und/oder Regelung kann unter Berücksichtigung der Ausrichtung des Drucksiebs 12 und des Rakelwerkzeugs 16 erfolgen. Ein hochqualitatives Druckbild über das gesamte Drucklayout eines Drucksiebs 12 kann hierdurch mit weiter verbesserter Sicherheit erreicht werden.

Des Weiteren kann die Steuereinrichtung 100 dazu ausgebildet sein, die Höhenposition und/oder Ausrichtung und/oder Neigungslage des Drucksiebs 12 in Abhängigkeit von gespeicherten und/oder verarbeiteten Messdaten der Sensoreinrichtung 18 und/oder einzelner Kraftmesssensoren 24 und/oder in Abhängigkeit einer ermittelten Siebspannung und/oder Siebrückstellkraft und/oder Auftragskraft zu steuern und/oder zu regeln.

Demzufolge ist es möglich, über die Höhenposition, Ausrichtung und/oder Neigungslage des Drucksiebs 12 anhand von Messdaten der Sensoreinrichtung 18 die räumliche Orientierung des Drucksiebes 12 zu steuern und/oder zu regeln. Über Rückmeldung der Sensoreinrichtung 18 kann beispielsweise die räumliche Ausrichtung des Drucksiebes 12 so angepasst werden, dass eine Rakelkraft auf das Drucksieb 12 und über das gesamte Drucklayout oder die gesamte Fläche des Drucksiebs 12 konstant ist oder - je nach gewünschter Prozessführung oder gewünschten Prozessparametern - Abweichungen aufweist.

Ferner ist es möglich, dass die Steuereinrichtung 100 dazu ausgebildet ist, die Höhenposition und/oder Ausrichtung und/oder Neigungslage des Drucksiebs 12 während der Durchführung eines Druckvorgangs kraftbasiert zu steuern und/oder zu regeln. Auf diese Weise ist die Steuereinrichtung 100 in der Lage, die räumliche Ausrichtung des Drucksiebs 12 anhand von gemessenen Kräften, die beispielsweise auf die Rakelvorrichtung 14 beziehungsweise auf das Rakelwerkzeug 16 einwirken, flexibel während eines Druck- beziehungsweise Rakelvorgangs anzupassen beziehungsweise einzustellen. Die Fertigungsgenauigkeit und -flexibilität kann hierdurch weiter verbessert werden

Ferner kann die Steuereinrichtung 100 und/oder die Stelleinrichtung 70 dazu ausgebildet sein, das Rakelwerkzeug 16 während der Durchführung eines Druckvorgangs auf einer festgelegten Höhenposition zu halten. Durch Halten einer festgelegten Höhenposition kann ein kontinuierliches, gleichbleibendes beziehungsweise gleichmäßiges Druckbild gewährleistet werden.

Ferner kann eine festgelegte Höhenposition während der Durchführung eines Druckvorgangs mittels der Stelleinrichtung 70 und/oder der Steuereinrichtung 100 fixiert und/oder unverändert aufrechterhalten bleiben. Auf diese Weise kann ein kontinuierliches, gleichbleibendes beziehungsweise gleichmäßiges Druckbild über das gesamte Drucklayout eines Drucksiebs 12 mit weiter erhöhter Sicherheit gewährleistet werden.

Ferner kann vorgesehen sein, dass die Steuereinrichtung 100 und/oder die Stelleinrichtung 70 dazu ausgebildet ist, eine festgelegte Rakelkraft und/oder eine festgelegte und wirksame Auftragskraft während der Durchführung eines Druckvorgangs zu halten. Dies hat den Vorteil, dass mit weiter erhöhter Sicherheit über das gesamte Drucklayout des Drucksiebs 12 eine konstant bleibende Kraft ausgeübt werden kann und ein damit ein besonders gleichmäßiges Druckbild erzeugt werden kann. Schwankungen in der Rakelkraft können somit in besonders vorteilhafter Weise ausgeglichen oder von vornherein vermieden werden. Hierdurch kann eine besonders hohe Druckqualität gewährleistet werden.

Zudem ist es möglich, dass die Steuereinrichtung 100 dazu ausgebildet ist, Messdaten von fortlaufenden und/oder wiederkehrenden Erfassungen der Sensoreinrichtung 18 während einer mittels der Rakelbewegungseinrichtung 74 erfolgenden Bewegung der Rakelvorrichtung 14 entlang der Rakelbewegungsrichtung R und/oder während eines Druckvorgangs in Mittelwerte umzurechnen und/oder abzuspeichern und/oder zu verarbeiten. Mithilfe der Umrechnung und/oder Abspeicherung und/oder Verarbeitung von erfassten Messdaten in Mittelwerte kann in vorteilhafter Weise eine geeignete Datenbasis für nachfolgende Steuer- und Regelprozesse durch die Steuereinrichtung 100 geschaffen werden und ein insgesamt geringer Rechenaufwand wird gewährleistet. Intensive Rechenvorgänge der Steuereinrichtung 100 sind hierdurch reduzierbar und zum anderen kann ein besonders gleichmäßiges Druckbild weiter begünstigt werden. Zudem kann auf diese Weise Speicherplatz für Messwerte und Messdaten eingespart werden.

Außerdem kann die Steuereinrichtung 100 dazu ausgebildet sein, Messdaten von fortlaufenden und/oder wiederkehrenden Erfassungen von einzelnen Kraftmesssensoren 24 während einer mittels der Rakelbewegungseinrichtung 74 erfolgenden Bewegung der Rakelvorrichtung 14 entlang der Rakelbewegungsrichtung R und/oder während eines Druckvorgangs in Mittelwerte umzurechnen und/oder abzuspeichern und/oder zu verarbeiten. Die Informationsgüte durch die Differenzierung von Daten einzelner Kraftmesssensoren 24, 26 kann auf diese Weise verbessert werden. Gleichzeitig kann die zu verarbeitende Datenmenge reduziert und die Verarbeitung, Speicherung und Umrechnung von Daten beziehungsweise Messwerten beschleunigt werden.

Es kann weiterhin vorgesehen sein, dass die Steuereinrichtung 100 dazu ausgebildet ist, eine Rakelkraft und/oder Auftragskraft mittels der Stelleinrichtung 70 in Abhängigkeit einer Bauteilhöhe und/oder in Abhängigkeit der Schichtanzahl bereits gedruckter Bauteilschichten einzustellen. Die Höhe eines bereits erfolgten Druckaufbaus beziehungsweise Werkstücks und/oder die Schichtanzahl bereits gedruckter Bauteilschichten kann auf diese Weise vorteilhaft für die weitere Prozessführung beziehungsweise die weitere Steuerung und/oder Regelung mittels der Steuereinrichtung 100 genutzt werden. Soweit die bereits aufgebaute Bauteilhöhe einen nennenswerten Einfluss auf den Druck weiterer Druckschichten beziehungsweise auf den Druckmassenauftrag durch das Drucksieb 12 hat, kann dies durch Einstellung der Rakelkraft und/oder Auftragskraft mittels der Stelleinrichtung 70 in geeigneter Weise ausgeglichen werden.

Weiterhin kann Steuereinrichtung 100 dazu ausgebildet sein, eine Rakelkraft ausgehend von einer Start-Rakelkraft und/oder Start-Auftragskraft schichtweise und proportional abzusenken bis zu einer Grenzschicht und/oder mit Erreichen einer Grenzschicht die Rakelkraft und/oder Auftragskraft für den Druck weiterer Druckschichten unverändert aufrechtzuerhalten. Auf diese Weise kann sichergestellt werden, dass Siebdruckbauteile entlang der gesamten Höhe im Wesentlichen gleichbleibende Schichtdicken aufweisen. Die Druckpräzision kann auf diese Weise noch weiter verbessert und die Gefahr von Beschädigungen bereits gedruckter Schichten verringert werden.

Ferner kann die Steuereinrichtung 100 dazu ausgebildet sein, auf Grundlage einer ermittelten Siebrückstellkraftkurve und/oder Siebspannungskurve, einer ermittelten Rakelblattflexibilität, einer ermittelten Rakelkraft über den Druckverlauf in Rakelbewegungsrichtung R, einer Absprunghöhe zwischen Drucksieb 12 und einem Drucktisch 22 oder einer Bauteiloberfläche und/oder einer Höhe des Drucksiebs 12 eine Auftragskraft auf die unterhalb des Drucksiebs 12 befindlichen Siebdruckwerkstücke zu ermitteln, insbesondere als Liniendruck zu ermitteln. Eine solche Ermittlung kann in vorteilhafter Weise dazu dienen, qualitativ hochwertige Siebdruckbauteile zu erstellen, bei denen eine kontinuierliche beziehungsweise gleichbleibende Druckschichtdicke von Schicht zu Schicht gewährleistet wird. Die Gewährleistung gleichbleibender Druckschichtdicken kann zu einer verbesserten Bauteilpräzision führen.

Des Weiteren ist es möglich, dass die Steuereinrichtung 100 dazu ausgebildet ist, auf Grundlage eines mittels der Sensoreinrichtung 18 erfassten IST-Kräfteverlaufs während eines Siebdruckvorgangs eine gesteuerte und/oder geregelte Anpassung der Auftragskraft und/oder Rakelkraft und/oder der Rakelgeschwindigkeit entlang einer Rakelbewegungsrichtung R und/oder einer Absprunghöhe und/oder einer Siebliftfunktionalität vorzunehmen. Die Anpassung der Rakelkraft und/oder der Rakelgeschwindigkeit mittels eines erfassten IST-Kräfteverlaufs dient dazu, die Prozessparameter für einen laufenden Druckvorgang und/oder für zumindest einen nachfolgenden Druckvorgang geeignet anzupassen. Die Erzeugung hochpräziser Siebdruckbauteile kann auf diese Weise mit einer weiter erhöhten Sicherheit erfolgen. Etwaige Druckschichten können besonders genaue Dicken aufweisen. Insbesondere bei einem erfassten IST-Kräfteverlauf kann in Echtzeit in den jeweiligen Druckvorgang eingegriffen werden und in der Folge lassen sich Einstellungen vornehmen, durch die das zu erstellende Siebdruckbauteil mit erhöhter Präzision gefertigt werden kann.

Vorgesehen sein kann auch, dass die Steuereinrichtung 100 dazu ausgebildet ist, auf Grundlage eines mittels der Sensoreinrichtung 18 erfassten IST-Kräfteverlaufs während eines Siebdruckvorgangs und/oder einer erfassten Auftragskraft und/oder Siebrückstellkraft und/oder Siebspannung eine gesteuerte und/oder geregelte Anpassung einer Sieblagenausrichtung und/oder Siebhöhenausrichtung vorzunehmen. Somit kann die Steuereinrichtung 100 im Betrieb oder während des Betriebs der Vorrichtung 10 durch beispielsweise eine Veränderung der räumlichen Lage des Drucksiebs 12 eine zumindest abschnittsweise oder stellenweise Anpassung der Rakelkraft des Rakelwerkzeugs 16 auf das Drucksieb 12 gewährleisten. Somit kann die Fertigungspräzision erhöht und ein Ausgleich von Ungenauigkeiten vorangegangener Druckvorgänge sichergestellt werden. Im Ergebnis lassen sich hierdurch Siebdruckwerkstücke mit weiter erhöhter Genauigkeit herstellen.

Bei einem erfindungsgemäßen Verfahren zur Herstellung von dreidimensionalen Siebdruckwerkstücken, insbesondere mit einer voranstehend beschriebenen Vorrichtung 10 zur Herstellung von dreidimensionalen Siebdruckwerkstücken, die insbesondere als 3D-Siebdruckanlage ausgebildet sein kann, kann das Rakelwerkzeug 16 auf einem Untergrund zur Auflage gebracht und das Rakelwerkzeug 16 durch eigengewichtsbasierte Auflage auf dem Untergrund selbsttätig ausgerichtet werden. Alternativ oder ergänzend kann das Rakelwerkzeug 16 in seiner ausgerichteten Position schraubenlos und/oder kraftschlüssig fixiert werden.

Insbesondere kann eine Neigungsjustierung des Rakelwerkzeugs 16 um eine Neigungsachse N durchgeführt werden.

Weiterhin kann eine Luftlagerung des Rakelwerkzeugs 16 erzeugt werden, wobei die Ausrichtung des Rakelwerkzeugs 16 mittels der Luftlagerung erfolgt. Die Luftlagerung stellt eine reibungsfreie Verstellbarkeit des Rakelwerkzeugs 16 sicher, wodurch die Ausrichtung des Rakelwerkzeugs 16 effizient und mit geringer Kraft durchgeführt werden kann.

Weiter bevorzugt kann das Rakelwerkzeug 16 während des Ausrichtens magnetisch gehalten werden, wodurch eine zuverlässige Halterung des Rakelwerkzeugs 16 erreicht wird.

Noch weiter bevorzugt kann das Rakelwerkzeug 16 während des Ausrichtens mittels eines Permanentmagneten 40 gehalten werden. Das Rakelwerkzeug 16 kann somit unabhängig von einer elektrischen Energiequelle zuverlässig gehalten werden.

Es ist weiterhin möglich, dass das Rakelwerkzeug 16 in der ausgerichteten Position kraftschlüssig fixiert wird. Insbesondere kann das Rakelwerkzeug 16 in der ausgerichteten Position magnetisch fixiert werden.

Noch weiter bevorzugt kann das Rakelwerkzeug 16 in der ausgerichteten Position durch wenigstens eines Elektromagneten 44 fixiert werden. Alternativ oder ergänzend kann das Rakelwerkzeug 16 in der ausgerichteten Position elektromagnetisch fixiert werden.

Ferner kann vorgesehen sein, dass das Rakelwerkzeug 16 während eines Rakelvorgangs und/oder eines Druckvorgangs in der ausgerichteten Position kraftschlüssig fixiert ist und/oder fixiert bleibt.

Weiterhin kann vorgesehen sein, dass das Rakelwerkzeug 16 während eines Rakelvorgangs in der ausgerichteten Position magnetisch, insbesondere durch einen Elektromagneten 44, fixiert wird und/oder fixiert bleibt.

Die Vorrichtung 10 kann in besonders vorteilhafter Weise für die Entwicklung und/oder für die Herstellung großer Stückzahlen von Solarzellen und/oder Arzneimitteln ausgebildet und/oder eingerichtet sein. Ebenso kann ein voranstehend beschriebenes Verfahren für die Herstellung großer Stückzahlen von Solarzellen und/oder Arzneimitteln ausgeführt werden.

### BEZUGSZEICHENLISTE

- 10: Vorrichtung
- 12: Drucksieb
- 14: Rakelvorrichtung
- 16: Rakelwerkzeug
- 18: Sensoreinrichtung
- 20: Druckeinrichtung
- 22: Drucktisch
- 24: Kraftmesssensor
- 28: Justiereinrichtung
- 30: Luftlagereinrichtung
- 32: Luftdüse
- 34: Rakellagerung
- 36: Justierhalterung
- 38: Tragstruktur
- 40: Permanentmagnet
- 42: Fixiereinrichtung
- 44: Elektromagnet
- 46: Langlochführung
- 48: Befestigungssystem
- 50: Haltestift
- 52: Rakelblatt
- 54: Rakelaufnahme
- 56: Rakelseitenfläche
- 58: Verstelleinrichtung
- 60: Kopplungsabschnitt
- 62: Halteelement
- 64: Drucksiebvorrichtung
- 66: Drucksiebbewegungseinrichtung
- 67: Linearantrieb
- 68: Linearantrieb
- 69: Linearantrieb
- 70: Stelleinrichtung
- 72: Linearantrieb
- 74: Rakelbewegungseinrichtung
- 76: Linearführung
- 78: Querträger
- 80: Stützeinrichtung
- 100: Steuereinrichtung

- D: Drucksiebquerachse
- L: Längserstreckung
- N: Neigungsachse
- R: Rakelbewegungsrichtung
- S: Drucksieblängsachse

## Patentansprüche

1. Vorrichtung (10) zur Herstellung von dreidimensionalen Siebdruckwerkstücken, insbesondere 3D-Siebdruckanlage, mit einem Drucksieb (12) und mit einer Rakelvorrichtung (14) zum Fluten des Drucksiebs (12) mit einer Druckmasse und/oder zum Pressen von Druckmasse durch das Drucksieb (12), wobei die Rakelvorrichtung (14) wenigstens ein Rakelwerkzeug (16) und eine Rakellagerung (34) zur Lagerung des Rakelwerkzeugs (16) aufweist, wobei die Rakellagerung (34) eine Justiereinrichtung (28) zur Ausrichtung des Rakelwerkzeugs (16) aufweist und die Justiereinrichtung (28) zur selbsttätigen Ausrichtung des Rakelwerkzeugs (16) durch eigengewichtsbasierte Auflage des Rakelwerkzeugs (16) auf einem Untergrund ausgebildet ist.

2. Vorrichtung (10) nach Anspruch 1, **dadurch gekennzeichnet, dass** die Justiereinrichtung (28) eine Luftlagereinrichtung (30) aufweist, die in einem Luftlagerbetrieb eine Ausrichtung des Rakelwerkzeugs (16) erlaubt, insbesondere eine selbsttätige Ausrichtung und/oder eine Ausrichtung durch eigengewichtsbasierte Auflage des Rakelwerkzeugs (16) auf einem Untergrund.

3. Vorrichtung (10) nach einem der voranstehenden Ansprüche, **dadurch gekennzeichnet, dass** die Justiereinrichtung (28) eine Luftlagereinrichtung (30) aufweist, die in einem Luftlagerbetrieb eine Neigungsjustierung des Rakelwerkzeugs (16) um eine Neigungsachse (N) erlaubt.

4. Vorrichtung (10) nach einem der Ansprüche 2 bis 3, **dadurch gekennzeichnet, dass** die Luftlagereinrichtung (30) zumindest eine Luftdüse (32) oder mehrere Luftdüsen (32) zur Ausbildung eines reibungsfreien Luftlagers des Rakelwerkzeugs (16) im Luftlagerbetrieb aufweist und/oder dass die Luftlagereinrichtung (30) in einem Reiblagerbetrieb ein kraftschlüssiges Fixieren des Rakelwerkzeugs (16) relativ zur Neigungsachse (N) erlaubt.

5. Vorrichtung (10) nach einem der Ansprüche 2 bis 4, **dadurch gekennzeichnet, dass** die Rakelvorrichtung (14) eine Justierhalterung (36) und eine mit der Justierhalterung (36) gekoppelte und/oder koppelbare Tragstruktur (38) aufweist, wobei die Relativposition der Tragstruktur (38) zur Justierhalterung (36) und/oder die Relativausrichtung zwischen der Justierhalterung (36) und der Tragstruktur (38) mittels der Luftlagereinrichtung (30) veränderbar ist und/oder dass das Rakelwerkzeug (16) an der Tragstruktur (38) angeordnet oder befestigt ist.

6. Vorrichtung (10) nach Anspruch 5, **dadurch gekennzeichnet, dass** die Luftlagereinrichtung (30) und/oder die zumindest eine Luftdüse (32) der Luftlagereinrichtung (30) an der Justierhalterung (36) angeordnet ist und/oder in Wirkkontakt mit der Tragstruktur (38) steht und/oder in Wirkkontakt mit der Tragstruktur (38) bringbar ist und/oder dass die Luftlagereinrichtung (30) eine Relativbewegung zwischen der Justierhalterung (36) und der Tragstruktur (38) erlaubt, insbesondere in einem Luftlagerbetrieb.

7. Vorrichtung (10) nach einem der vorstehenden Ansprüche, **dadurch gekennzeichnet, dass** die Rakelvorrichtung (14) und/oder die Rakellagerung (34) und/oder die Justiereinrichtung (28) und/oder die Luftlagereinrichtung (30) einen Permanentmagneten (40) oder eine Mehrzahl an Permanentmagneten (40) zum magnetischen Halten des Rakelwerkzeugs (16) und/oder der Tragstruktur (38) aufweist und/oder dass der wenigstens eine Permanentmagnet (40) eine Vorspannung der Tragstruktur (38) gegen die Justierhalterung (36) und/oder gegen die an der Justierhalterung (36) angeordnete Luftlagereinrichtung (30) erzeugt, insbesondere entlang einer Rakelbewegungsrichtung und/oder dass der wenigstens eine Permanentmagnet (40) mit der Luftlagereinrichtung (30) in einem Luftlagerbetrieb zur Erzeugung und/oder Aufrechterhaltung eines Luftlagers zwischen der Tragstruktur (38) und der Justierhalterung (36) ausgebildet ist.

8. Vorrichtung (10) nach einem der vorstehenden Ansprüche, **dadurch gekennzeichnet, dass** die Rakelvorrichtung (14) und/oder die Rakellagerung (34) und/oder die Justiereinrichtung (28) zumindest eine Fixiereinrichtung (42) zur Fixierung einer justierten Neigungslage des Rakelwerkzeugs (16) aufweist, insbesondere einer über die Justiereinrichtung (28) und/oder Luftlagereinrichtung (30) justierten Neigungslage des Rakelwerkzeugs (16).

9. Vorrichtung (10) nach Anspruch 8, **dadurch gekennzeichnet, dass** die Fixiereinrichtung (42) zur schraubenlosen und/oder kraftschlüssigen Fixierung des Rakelwerkzeugs (16) in seiner ausgerichteten Position ausgebildet ist und/oder dass die zumindest eine Fixiereinrichtung (42) zur Fixierung der Relativposition und/oder Relativausrichtung zwischen der Justierhalterung (36) und der Tragstruktur (38) ausgebildet ist.

10. Vorrichtung (10) nach Anspruch 9, **dadurch gekennzeichnet, dass** die Fixiereinrichtung (42) einen Elektromagneten (44) oder eine Mehrzahl von Elektromagneten (44) zum magnetischen Fixieren des Rakelwerkzeugs (16) in einer Arbeitsposition aufweist, insbesondere in einer über die Justiereinrichtung (28) und/oder Luftlagereinrichtung (30) justierten Arbeitsposition des Rakelwerkzeugs (16).

11. Vorrichtung (10) nach einem der voranstehenden Ansprüche, **dadurch gekennzeichnet, dass** die Rakelvorrichtung (14) ein Befestigungssystem (48) zur Befestigung und/oder zum Halten des Rakelwerkzeugs (16) aufweist, wobei das Befestigungssystem (48) bevorzugt als Haltesystem und/oder als Schnellwechselhaltesystem ausgebildet ist und/oder dass das Befestigungssystem (48) werkzeugfrei betätigbar ist und/oder einen Haltestift (50) oder eine Mehrzahl an Haltestiften (50) zum Halten oder temporären Halten des Rakelwerkzeugs (16) aufweist, insbesondere zum Einhängen des Rakelwerkzeugs (16) auf den Haltestiften (50) und/oder Aufschieben des Rakelwerkzeugs (16) auf die Haltestifte (50) und/oder zum Lösen eines Rakelwerkzeugs (16), und/oder dass das Befestigungssystem (48) die Fixiereinrichtung (42) aufweist und/oder dass der wenigstens eine Haltestift (50) in einer Langlochführung (46) oder Langlockstruktur der Rakellagerung (34) geführt, insbesondere spielbehaftet geführt ist.

12. Vorrichtung (10) nach einem der vorstehenden Ansprüche, **gekennzeichnet durch** eine Steuereinrichtung (100) zur Steuerung und/oder Regelung der Justiereinrichtung (28) und/oder der Stelleinrichtung (70) und/oder einer Drucksiebbewegungseinrichtung (66) und/oder der Fixiereinrichtung (42) und/oder einer Rakelbewegungseinrichtung (74) und/oder der Luftlagereinrichtung (30) und/oder zur Verarbeitung und/oder zur Auswertung und/oder zur Speicherung und/oder zum Vergleich von Sensordaten der Sensoreinrichtung (18).

13. Vorrichtung (10) nach Anspruch 12, **dadurch gekennzeichnet, dass** die Steuereinrichtung (100) dazu ausgebildet ist, insbesondere während einer Rakeleinrichtroutine, während einer mittels einer Stelleinrichtung (70) erfolgenden Absenkbewegung des Rakelwerkzeugs (16) die Luftlagereinrichtung (30), insbesondere die wenigstens eine Luftdüse (32), zu aktivieren oder aktiviert zu halten und den wenigstens einen Elektromagneten (44) inaktiv stellen und/oder inaktiv zu lassen.

14. Vorrichtung (10) nach einem der Ansprüche 12 oder 13, **dadurch gekennzeichnet, dass** die Steuereinrichtung (100) dazu ausgebildet ist, insbesondere während einer Rakeleinrichtroutine, nach Beendigung einer Absenkbewegung durch die Stelleinrichtung (70) den wenigstens einen Elektromagneten (44) zu aktivieren und/oder aktiviert zu lassen und/oder die Luftlagereinrichtung (30), insbesondere die wenigstens eine Luftdüse (32), zu deaktivieren und/oder deaktiviert zu lassen.

15. Verfahren zum Ausrichten eines Rakelwerkzeugs (16) einer Vorrichtung (10) zur Herstellung von dreidimensionalen Siebdruckwerkstücken, insbesondere gemäß einem der vorstehenden Ansprüche, und/oder für eine 3D-Siebdruckanlage und/oder für eine Rakelvorrichtung, bei dem ein Rakelwerkzeug (16) auf einem Untergrund zur Auflage gebracht wird und das Rakelwerkzeug (16) durch eigengewichtsbasierte Auflage auf dem Untergrund selbsttätig ausgerichtet wird.
